# EUROPEAN PATENT SPECIFICATION

(11) **EP 4 451 106 B1**
(45) Date of publication and mention of the grant of the patent: **21.10.2026**
(21) Application number: 23878865.7
(22) Date of filing: 11.09.2023
(51) Int. Cl.: G06F 3/14, G06F 3/01

(54) **SCREEN PROJECTION SYSTEM AND ELECTRONIC DEVICE**
BILDSCHIRMPROJEKTIONSSYSTEM UND ELEKTRONISCHE VORRICHTUNG
SYSTÈME DE PROJECTION D'ÉCRAN ET DISPOSITIF ÉLECTRONIQUE

(30) Priority: 19.10.2022 CN 202211282319
(43) Date of publication of application: 23.10.2024
(73) Proprietor: Honor Device Co., Ltd., Shenzhen, Guangdong 518040 (CN)
(72) Inventor: LI, Wenyuan, Shenzhen, Guangdong 518040 (CN); WANG, Dongwei, Shenzhen, Guangdong 518040 (CN)
(74) Representative: MERH-IP Matias Erny Reichl Hoffmann Patentanwälte PartG mbB
(86) International application number: PCT/CN2023/118031
(87) International publication number: WO 2024/082871

(56) References cited:
- EP-A1- 3 889 761
- EP-A1- 4 187 891
- WO-A1-2021/164445
- WO-A1-2021/164445
- WO-A1-2022/037407
- CN-A- 108 259 665
- CN-A- 112 346 685
- CN-A- 113 741 840
- CN-A- 115 048 067
- US-B2- 9 372 978

## Description

### TECHNICAL FIELD

Embodiments of this application relate to the field of communication technologies and the field of terminal technologies, and in particular, to a screen projection system and an electronic device.

### BACKGROUND

A plurality of electronic devices operate in collaboration to facilitate the life and work of a user. A collaborative notification is used as an example. When a mobile phone receives a message, a message notification may not only be displayed by the mobile phone, but also be streamed to a PC for display by the PC. This helps the user view the message across devices, and improves efficiency of collaborative operation between the devices. Certainly, mere streaming of the message notification between the devices is insufficient. The user often needs to process the message notification through the PC after viewing the message notification from the mobile phone on the PC. This requires that the mobile phone be screen projected to the PC.

However, in a scenario in which the mobile phone is in a lock screen or screen-off state, an exception may occur when the user starts mobile phone screen projection on the PC.

WO2022/037407A1 discloses a case where a user is using a notebook computer in a room to work, and a mobile phone is in a screen-locked state and is placed by the user in another room. Therein, when the mobile phone receives a message of a social app from the other user, it sends the received messages to the notebook computer on which the user is focusing. Subsequently, the notebook computer displays a message reminder box, and further displays a GUI according to an operation of tapping a control by the user. Moreover, the message reminder box further includes a scroll bar. After the notebook computer detects that the user slides the scroll bar upward by using a mouse, the notebook computer requests a historical chat record with the other user from the mobile phone.
WO2021/164445A1 discloses a case where a laptop is selected to prompt and complete the task of the notification when the cell phone receives a notification of a new email. Subsequently, the laptop sends a screen casting request to the cell phone, and the cell phone wakes up the screen casting service process to complete the screen casting. In particular, the screen casting service process can transmit this display data in real time to the laptop. The screen casting service can be executed in a black screen state when the screen casting service process wakes up the operating system of the cell phone.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provides a screen projection system and an electronic device, to allow, after a message of the first electronic device is streamed to a second electronic device, a user to directly start, on the second electronic device, screen projection of an application to which the message corresponds on the second electronic device when the first electronic device is in a lock screen or screen-off state.

According to a first aspect, a screen projection system is provided. The system includes a first electronic device and a second electronic device, and the first electronic device includes a first application. The first electronic device is configured to receive first data of the first application. The first electronic device is configured to send a first message that includes the first data to the second electronic device. Therein, the first message is an application message, and the application message is configured to carry a message content and a first application package name. The second electronic device displays a first control in response to reception of the first message. The second electronic device is configured to receive a first operation of a user on the first control at a first time. The second electronic device sends a screen projection request to the first electronic device in response to the first operation. The first electronic device sends image information of the first application to the second electronic device in response to reception of the screen projection request, where the image information of the first application includes the first data, and the image information of the first application is a display data of a first application screen projection. The second electronic device is configured to display a window based on received image information of the first application, where a first interface of the first application is displayed within the window at second time, and the first interface includes the image information of the first application. The second time is later than the first time, and the first electronic device is in a lock screen or screen-off state in a time interval between the first time and the second time. The first electronic device sends the first message to the second electronic device through a first communication connection. the second electronic device sends the screen projection request to the first electronic device through a second communication connection, wherein the second electronic device includes a message center module and a second communication module, wherein the second communication connection is established by the second communication module after the second communication module receiving, from the message center module, a second message instructing the second communication module to establish a WI-FI P2P channel between the second electronic device and the first electronic device, wherein the second electronic device is configured to receive the first operation of the user on the first control at the first time comprises: the message center module is configured to receive the first operation of a user on the first control at the first time, and wherein the message center module is configured to send the second message, to the second communication module, after the message center module receiving the first operation of the user on the first control at the first time. The first electronic device sends the image information of the first application to the second electronic device through the second communication connection. Therein, the first communication connection is a Bluetooth connection, and the second communication connection is a WI-FI P2P connection.

When the first electronic device is in the lock screen or screen-off state, the user may directly perform an operation, that is, the foregoing first operation on the first control, on the second electronic device without performing any operation on the first electronic device, where the first operation may be an operation of clicking on the first control, so that the first application on the first electronic device is pulled up to be screen projected on the second electronic device. The first application is an application program installed on the first electronic device, and whether the second electronic device is installed with the first application does not affect implementation of the foregoing system.

The first electronic device sends the first message to the second electronic device. The second electronic device is configured to display the first control in response to reception of the first message. The first electronic device is in a lock screen or screen-off state in a first time interval. The second electronic device is further configured to receive the first operation of the user on the first control in the first time interval. The second electronic device is further configured to send a screen projection request to the first electronic device in response to the first operation. The first electronic device is further configured to send data of the first application to which the first message corresponds to the second electronic device in response to reception of the screen projection request. The second electronic device is further configured to display a screen projection window in response to received data of the first application to which the first message corresponds, where the screen projection window displays a first interface in the first time interval, and the first interface includes the first message.

In this embodiment of this application, the first electronic device is further configured to display a main interface in a second time interval. The first electronic device is further configured to receive a second operation of the user. The first electronic device is in a lock screen or screen-off state in the first time interval in response to reception of the second operation, where start time of the first time interval is end time of the second time interval. The first electronic device is further configured to receive a third operation of the user. The first electronic device displays the main interface in a third time interval in response to reception of the third operation, where start time of the third time interval is end time of the first time interval. The second electronic device is further configured to display the first interface in the screen projection window in the third time interval.

In the foregoing implementation, first, the first electronic device is screen locked or is screen off when displaying the main interface. Subsequently, when being in the lock screen or screen-off state, the first electronic device receives a first message from the first application and streams the first message to the second electronic device. The first interface is screen projected onto the second electronic device after the screen projection operation. Subsequently, the first electronic device is screen on or unlocked, that is, the foregoing third operation, and in this case, the first electronic device displays the main interface while the screen projection window of the second electronic device displays the first interface.

With reference to the first aspect, in some implementations of the first aspect, the first electronic device further includes a second application, and the first application and the second application are different. The first electronic device is further configured to receive an operation of the user opening the second application. The first electronic device is further configured to display a second interface of the second application in a fourth time interval in response to the operation of the user opening the second application, where start time of the fourth time interval is end time of the third time interval. The second electronic device is further configured to display the first interface in the screen projection window in the fourth time interval.

In the foregoing implementation, when the screen projection window of the second electronic device displays the first interface, the first electronic device may open another application, for example, the second application, different from the first application. In this case, the screen projection window of the second electronic device still displays the first interface, and a change does not occur as a display interface on the first electronic device changes, thereby achieving heterogeneous screen projection.

In other possible manners, the second electronic device is further configured to display a third interface in the screen projection window in the fourth time interval, where the third interface is an interface of the first application, and the third interface is different from the first interface.

The third interface and the first interface are both interfaces of the first application, that is, after the first application is screen projected onto the second electronic device, an operation may be performed on the first application in the screen projection window of the second electronic device, and switching may be performed between different interfaces.

In this embodiment of this application, the first electronic device further includes a third application, and the third application is different from the first application. The first electronic device is further configured to receive a second message of the third application. The first electronic device is further configured to send the second message to the second electronic device. The second electronic device is further configured to display a second control in response to reception of the second message. The second electronic device is further configured to receive a fourth operation of the user on the second control in the first time interval. The second electronic device is further configured to send a screen projection request to the first electronic device in response to the fourth operation. The first electronic device sends data of the third application to which the second message corresponds to the second electronic device in response to reception of the screen projection request. The second electronic device is further configured to display the fourth interface in the screen projection window in the first time interval in response to reception of the data of the third application to which the second message corresponds, where the fourth interface includes the second message.

In the foregoing implementation, after the first application is screen projected onto the second electronic device, if the first electronic device further receives a message from another application, for example, the second message from the third application, the user can likewise implement screen projection switching through the foregoing operations, to screen project the second application onto the second electronic device.

With reference to the first aspect, in some implementations of the first aspect, the second electronic device is further configured to display the first control on a desktop. Alternatively, the second electronic device is further configured to display the first control in a message list window, where the first control is a message card to which the first message corresponds.

The first control is the message card to which the first message corresponds. In addition to being separately displayed on the desktop, the message card has another situation: The first control disappears if an operation of the user is still not received after the first control is displayed on the desktop for specific time, and the message card to which the first message corresponds is generated in a message list. If expecting to perform an operation on the first message after the first control disappears, the user may further open the message list window, and find the message card to which the first message corresponds in the message list window. In this way, an effect that the user performs an operation on the first control can also be achieved.

In some possible implementations, the first operation is an operation of the user clicking on the first control. Alternatively, the first operation is an operation of the user dragging the first control.

In other possible implementations, the second electronic device is further configured to display a security authentication interface in the screen projection window upon reception of the first operation. The second electronic device is further configured to send authentication information to the first electronic device upon reception of an operation of the user entering the authentication information in the security authentication interface. The first electronic device is further configured to determine, upon reception of the authentication information, that the authentication information satisfies a preset value, and send a message indicating that authentication is successful to the second electronic device. The second electronic device sends a screen projection request to the first electronic device in response to reception of the message indicating that authentication is successful.

In the foregoing implementation, security authentication is not performed by the user when the first electronic device is screen locked or screen off, and in this case, privacy security of the user is not guaranteed if the second electronic device is allowed to directly start screen projection without the security authentication. Therefore, in some embodiments, a security authentication mechanism is triggered before the second electronic device starts screen projection, to ensure privacy security of the user.

With reference to the first aspect, in some implementations of the first aspect, the second electronic device is further configured to send an instruction instructing the first electronic device to perform the operation to the first electronic device when the second electronic device receives an operation of the user on the first message in the first interface.

After the first application is screen projected onto the second electronic device, the user may directly perform operations such as replying to the first application, making an audio-video call, and the like on the second electronic device, and the second electronic device may send all these operation instructions to the first electronic device for execution by the first electronic device, to achieve control of the screen projected application on the second electronic device.

According to a second aspect, a screen projection method is provided. The method is applied to a screen projection system, and the system comprises a first electronic device and a second electronic device, and the first electronic device includes a first application. The first electronic device receives a first data of the first application. The first electronic device sends a first message to a second electronic device through a first communication connection, wherein the first message is an application message, and the application message is configured to carry a message content and a first application package name. The first electronic device is in a lock screen or screen-off state in a first time interval. The first electronic device sends data of the first application to which the first message corresponds to the second electronic device through a second communication connection in response to reception of a screen projection request sent by the second electronic device, so that the second electronic device displays the first interface in the screen projection window in the first time interval. The first interface includes the first message. The first electronic device sendS image information of the first application to the second electronic device through the second communication connection in response to reception of the screen projection request, wherein the image information of the first application is a display data of a first application screen projection, and wherein the second electronic device includes a message center module and a second communication module, wherein the second communication connection is established by the second communication module after the second communication module receiving, from the message center module, a second message instructing the second communication module to establish a WI-FI P2P channel between the second electronic device and the first electronic device, wherein the second electronic device is configured to receive the first operation of the user on the first control at the first time comprises: the message center module is configured to receive the first operation of a user on the first control at the first time, and wherein the message center module is configured to send the second message, to the second communication module, after the message center module receiving the first operation of the user on the first control at the first time. The second electronic device displays a window based on the image information of the first application, wherein a first interface of the first application is displayed within the window at a second time, and the first interface comprises the image information of the first application, wherein the image information of the first application comprises the first data, and the first interface comprises the image information of the first application. The second time is later than the first time, and the first electronic device is in a lock screen or screen-off state in a time interval between the first time and the second time, and wherein the first communication connection is a Bluetooth connection, and the second communication connection is a WI-FI P2P connection.

With reference to the second aspect, in some implementations of the second aspect, after the first electronic device receives the screen projection request in the first time interval, the method includes the following steps: The first electronic device maintains one or more activities of the first application in an OnResume state. The first electronic device controls the one or more activities of the first application not to enter a sleep process.

The first electronic device maintains the one or more activities of the first application in the OnResume state while controlling the one or more activities of the first application not to enter the sleep process, so that the one or more applications are visible to a user and can be operated by the user after being screen projected onto the second electronic device.

In some possible implementations, the first electronic device includes an asynchronous processor, an activity recorder, and a root window container, and after the first electronic device receives the screen projection request in the first time interval, the method further includes the following steps: The asynchronous processor flags the one or more activities of the first application with a first flag. The activity recorder determines that the one or more activities of the first application are with the first flag, and maintains the one or more activities of the first application in the OnResume state. The root window container determines that the one or more activities of the first application are with the first flag, and controls the one or more activities of the first application not to enter the sleep process.

The first electronic device flags an activity to which the first application corresponds with a specific flag, so that the activity corresponding to the first application can be obtained, through filtering, from activities corresponding to other applications. In this way, the foregoing screen projection operation is performed on only the activity of the first application requiring screen projection.

With reference to the second aspect, in some implementations of the second aspect, the first electronic device includes a virtual display area and a visible display area in the first time interval, and the first electronic device flags the virtual display area with a second flag before the first electronic device sends the first interface to the second electronic device. The first electronic device draws a first image in the virtual display area, where the first image is an interface of the first application to which the first message corresponds. The first electronic device draws a second image in the visible display area, where the second image is a corresponding interface when the first electronic device is in a lock screen or screen-off state. The first electronic device determines that the virtual display area is with the second flag, and obtains the first image to obtain the first interface, where the first interface does not include the second image.

The first electronic device flags the virtual display area with a specific flag, to indicate that the image drawn in the virtual display area is not to be combined with an image of another display area, so that an interface to be screen projected onto the second electronic device is related only to the image of the virtual display area, and does not change as the image of the another display area changes, and a screen projection interface is not overlaid with a lock screen layer or the like.

In some possible implementations, the first electronic device includes a display screen, and the method further includes the following steps: The first electronic device displays a main interface in a second time interval. The first electronic device receives a second operation of the user. The first electronic device is in a lock screen or screen-off state at first time in response to reception of the second operation, where the first time is end time of the second time interval and start time of the first time interval. The first electronic device receives a third operation of the user. The first electronic device draws the main interface in the visible display area in response to reception of the third operation, and displays the main interface in a third time interval, where start time of the third time interval is end time of the first time interval. The first electronic device determines, in the third time interval, that the virtual display area is with the second flag, and skips obtaining the main interface of the visible display area for sending to the second electronic device, so that the second electronic device displays the first interface in the screen projection window.

With reference to the second aspect, in some implementations of the second aspect, before the first electronic device receives the request for starting screen projection, the method further includes the following steps: The first electronic device receives, through a third communication connection, authentication information sent by the second electronic device. The first electronic device determines that the authentication information satisfies a preset value, and sends a message indicating that authentication is successful to the second electronic device through the third communication connection, so that the second electronic device sends the screen projection request to the first electronic device.

In some possible implementations, the method includes the following step: The first electronic device performs an operation of the user on the first message in the first interface upon reception of an instruction of the second electronic device.

According to a first example that is not encompassed by the claims but useful for understanding the invention, a method is provided. The method is applied to a first electronic device and a second electronic device. The first electronic device establishes a second communication connection with the second electronic device before the second electronic device establishes the first communication connection with the first electronic device. The first electronic device receives the first message. The first device sends the second message to the second electronic device through the second communication connection based on the first message. The second electronic device displays the first control based on the second message in response to reception of the second message. The second electronic device receives the first operation when the first electronic device is in a lock screen or screen-off state.

In this embodiment of this application, after the second electronic device receives the first operation, the second electronic device determines that the first application is screen projected on the second electronic device for the first time, and the second electronic device establishes a third communication connection with the first electronic device, where the third communication connection is used for security authentication. The screen projection window displays the security authentication interface of the first electronic device.

With reference to the first example, in some embodiments of the third aspect, after the second electronic device receives the first operation, the second electronic device determines that the first application is not screen projected on the second electronic device for the first time and that duration between current time and time at which last authentication is successful is greater than preset duration, and the second electronic device establishes a third communication connection with the first electronic device. The screen projection window displays the security authentication interface of the first electronic device.

In some possible implementations, after the second electronic device receives an operation of a user entering authentication information in the security authentication interface, the second electronic device sends the authentication information to the first electronic device through the third communication connection. The first electronic device determines that the authentication information satisfies a preset value, and sends a message indicating that authentication is successful to the second electronic device through the third communication connection.

In other possible embodiments, after the second electronic device receives the first operation of the user on the first control, the second electronic device determines that the first application is provided with an application lock, and the second electronic device skips displaying the screen projection window of the first electronic device.

With reference to the first example, in some embodiments of the third aspect, the first electronic device includes a screen projection assistant module, a first virtualization service module, and a first screen projection service module, and the screen projection assistant module binds a screen projection service after the first electronic device receives the screen projection request. The screen projection assistant module sends first indication information indicating to perform initialization to the first virtualization service module. The first virtualization service module completes initialization based on the first indication information. The first virtualization service module sends second indication information indicating to start a screen projection service to the first screen projection service module. The first screen projection service module starts a screen projection service based on the second indication information. The first screen projection service module sends a message that the screen projection service is already started to the screen projection assistant module.

In some possible implementations, the first electronic device creates a virtual display area and flags the virtual display area with the first flag, and the first screen projection service module creates the virtual display area after starting the screen projection service and flags the virtual display area with the first flag.

In other possible embodiments, the first electronic device further includes a multi-screen management module and a system interface module, and the second electronic device includes a second screen projection service module and a message center module. After the first screen projection service module sends a message that the screen projection service is already started to the screen projection assistant module, the screen projection assistant module sends, through the first communication connection, a message that the screen projection service is already started to the message center module. The message center module sends, to the system interface module through the first communication connection, a request for starting application screen projection. The system interface module sends, to the multi-screen management module based on the request for starting application screen projection, third indication information indicating to start screen projection of the first application. The multi-screen management module places all activities of the first application in a foreground visible state upon reception of the third indication information and enables all the activities of the first application to skip a sleep state. The multi-screen management module obtains first display data to which the first application corresponds. The screen projection management module sends the first display data to the second screen projection service module through the first communication connection.

With reference to the first example, in some embodiments of the third aspect, the multi-screen management module places all the activities of the first application in the foreground visible state and enables all the activities of the first application to skip the sleep state, and the multi-screen management module flags all the activities of the first application with a second flag. The multi-screen management module places an activity flagged with the second flag in the foreground visible state and enables the activity flagged with the second flag to skip the sleep state.

With reference to the first example, in some embodiments of the third aspect, before the multi-screen management module obtains the first display data to which the first application corresponds, the method includes the following steps: The multi-screen management module sends fourth indication information to the first application. The first application is started based on the fourth indication information. The first application sends a message that the first application is already started to the multi-screen management module. The multi-screen management module draws the first display data in the virtual display area upon reception of the message that the first application is already started.

In this embodiment of this application, after the multi-screen management module sends the first display data to the second screen projection service module through the first communication connection, the method includes the following steps: The second screen projection service module receives the first display data and draws the first interface based on the first display data. The second screen projection service module sends the first interface to the message center module. The message center controls, upon reception of the first interface, a display screen of the second electronic device to display the first interface in the screen projection window.

In some possible embodiments, the first electronic device further includes a first communication module, and the second electronic device further includes a second communication module, and that the second electronic device establishes a first communication connection with the first electronic device specifically includes the following steps: The message center module sends fifth indication information to the second communication module. The second communication module establishes the first communication connection with the first communication module based on the fifth indication information. The second communication module sends a message to the message center that the first communication connection is successfully established.

In other possible embodiments, before the screen projection assistant module binds the screen projection service, the method includes the following steps: The first communication module sends sixth indication information to the screen projection assistant module. The screen projection assistant module is started based on the sixth indication information.

With reference to the first example, in some embodiments of the first example, before the second electronic device sends the screen projection request to the first electronic device through the first communication connection, the method specifically includes the following steps: The message center obtains a session key and an IP address of the first electronic device through the first communication connection. The message center sends seventh indication information to the second screen projection service module, where the seventh indication information carries the session key and the IP address of the first electronic device. The second screen projection service module performs initialization based on the seventh indication information.

In this embodiment of this application, before the first electronic device receives the screen projection request, the method specifically includes the following steps: The second screen projection service module sends the screen projection request to the second communication module through the first communication connection. The second communication module sends the screen projection request to the first communication module through the first communication connection. The first communication module sends the screen projection request to the screen projection assistant module.

With reference to the first example, in some embodiments of the first example, after the first electronic device receives the first message, the method specifically includes the following steps: The first application sends the second message to the system interface module based on the first message. The system interface module sends the second message to the message center module through the second communication connection. The message center module controls, based on the second message upon reception of the second message, the display screen of the second electronic device to display the first control. The message center module sends the fifth indication information to the second communication module upon reception of the first operation of the user on the first control.

In some possible implementations, after the message center module receives the first operation, the method further includes the following steps: The message center module controls the display screen of the second electronic device to display the transition loading interface in the screen projection window.

In other possible implementations, the second electronic device further includes a second security authentication module, and after the message center module receives the first operation, the method further includes the following steps: The message center sends eighth indication information to the second security authentication module. The second security authentication module determines, based on the eighth indication information, that the first application is on the second electronic device for the first time, and the second security authentication module sends ninth indication information to the second communication module. The second communication module establishes the third communication connection with the first communication module based on the ninth indication information.

With reference to the first example, in some embodiments of the first example, after the message center module receives the first operation, the method further includes the following steps: The message center sends eighth indication information to the second security authentication module. The second security authentication module determines, based on the eighth indication information, that the first application is not screen projected on the second electronic device for the first time and that duration between current time and time at which last authentication is successful is greater than the preset value, and the second security authentication module sends the ninth indication information to the second communication module. The second communication module establishes the third communication connection with the first communication module based on the ninth indication information.

With reference to the first example, in some embodiments of the first example, after the third communication connection is established, the method specifically includes the following steps: The second communication module sends a message that the third communication connection is successfully established to the message center module. The message center sends tenth indication information to the second security authentication module. The second security authentication module controls the display screen of the second electronic device to display the security authentication interface in the screen projection window based on the tenth indication information.

In this embodiment of this application, the first electronic device further includes a first security authentication module, and after the second security authentication module receives the operation of the user entering the authentication information in the security authentication interface, the method specifically includes the following steps: The second security authentication module sends the authentication information to the first security authentication module through the third communication connection. The first security authentication module determines that the authentication information satisfies a preset value, and sends a message indicating that authentication is successful to the second security authentication module through the third communication connection. The second security authentication module sends the message indicating that authentication is successful to the message center module. The message center module controls, upon reception of the message indicating that authentication is successful, the display screen of the second electronic device to display the transition loading interface in the screen projection window.

With reference to the first example, in some embodiments of the first example, the multi-screen management module includes an asynchronous processor, an activity starter, an activity stack manager, a lock screen controller, an activity recorder, a task stack, a root window container, and that the multi-screen management module places all activities of the first application in a foreground visible state and enables all the activities of the first application to skip a sleep state specifically includes the following steps: The asynchronous processor flags part or all of the activities of the first application with the second flag. The asynchronous processor sends a request for starting an activity with the second flag to the activity starter. The activity starter sends, in response to reception of the first command, a request for starting application screen projection to the activity stack manager. The activity stack manager invokes, in response to reception of the request for starting application screen projection, the lock screen controller to perform a first action, where the first action includes placing the activity flagged with the second flag in the foreground visible state. The lock screen controller places the activity flagged with the second flag in the foreground visible state. The lock screen controller sends a third command to the activity recorder. The activity recorder controls, upon reception of the third command, the activity flagged with the second flag to maintain the foreground visible state. The activity recorder sends a fourth command to the task stack, where the fourth command indicates the task stack to verify a status of an activity located at a stack top of the task stack. The task stack determines, upon reception of the fourth command, that the activity at the stack top of the task stack is in the foreground visible state, and sends a fifth command to the root window container. The root window container enables, upon reception of the fifth command, the activity flagged with the second flag to skip the sleep state.

With reference to the first example, in some embodiments of the first example, the first message corresponds to a first activity of the first application, the first activity is flagged by the asynchronous processor with the second flag, and the first activity is at the stack top of the task stack.

In some possible implementations, the multi-screen management module further includes an activity stack management server and a layer compositor, and before the multi-screen management module obtains the first display data to which the first application corresponds, the method specifically includes the following steps: The activity starter sends the fourth indication information to the first application upon reception of the first command. The first application is started based on the fourth indication information. The first application sends a message that the first application is already started to the activity stack management server. The activity stack management server sends a sixth command to the layer compositor. The layer compositor draws an application layer to which the first application corresponds in the virtual display area. The layer compositor obtains the first display data based on the application layer.

According to a third aspect, an electronic device is provided. The electronic device includes one or more processors; and one or more memories, where the one or more memory store one or more computer programs, the one or more computer programs include instructions, and the instructions, when executed by the one or more processors, enable the electronic device to perform the method according to any one of the possible implementations of the second aspect.

According to a second example that is not encompassed by the claims but useful for understanding the invention, a computer-readable storage medium is provided. The computer-readable storage medium includes computer instructions. The computer instructions, when run on an electronic device, enable the electronic device to perform the method according to the second aspect.

According to a third example that is not encompassed by the claims but useful for understanding the invention, a computer program product is provided. The computer program product includes computer program code. The computer program code, when executed by an electronic device, enables the electronic device to perform the method according to the second aspect.

According to a fourth example that is not encompassed by the claims but useful for understanding the invention, a chip for executing instructions is provided. The chip performs the method according to the second aspect when the chip is run.

### BRIEF DESCRIPTION OF DRAWINGS

FIG. 1A and FIG. 1B are schematic diagrams of a message streaming scenario according to an embodiment of this application;
FIG. 2A and FIG. 2B are schematic diagrams of interface display of heterogeneous screen projection according to an embodiment of this application;
FIG. 3 is a schematic diagram of interface display of heterogeneous screen projection according to an embodiment of this application;
FIG. 4 is a schematic diagram of a principle of heterogeneous screen projection according to an embodiment of this application;
FIG. 5 is a schematic diagram of a scenario of screen projection in a screen-off state according to an embodiment of this application;
FIG. 6A and FIG. 6B are schematic diagrams of a scenario of screen projection in a lock screen state according to an embodiment of this application;
FIG. 7A and FIG. 7B are schematic diagrams of another scenario of screen projection in a screen-off state according to an embodiment of this application;
FIG. 8A and FIG. 8B are schematic diagrams of operation of screen projection according to an embodiment of this application;
FIG. 9 is a schematic diagram of a hardware structure of an electronic device according to an embodiment of this application;
FIG. 10 is a diagram of a software architecture of an electronic device according to an embodiment of this application;
FIG. 11 is a diagram of a specific implementation process of a screen projection method according to an embodiment of this application;
FIG. 12A, FIG. 12B, and FIG. 12C are diagrams of a specific implementation process of another screen projection method according to an embodiment of this application;
FIG. 13A and FIG. 13B are diagrams of a specific implementation process of another screen projection method according to an embodiment of this application;
FIG. 14A, FIG. 14B, and FIG. 14C are diagrams of a specific implementation process of another screen projection method according to an embodiment of this application;
FIG. 15 is a diagram of a specific implementation process of another screen projection method according to an embodiment of this application;
FIG. 16 is a diagram of a specific implementation process of another screen projection method according to an embodiment of this application;
FIG. 17A is a schematic diagram of a principle according to an embodiment of this application;
FIG. 17B is a schematic diagram of another principle according to an embodiment of this application; and
FIG. 18 is a flowchart of a screen projection method according to an embodiment of this application.

### DESCRIPTION OF EMBODIMENTS

The following clearly and completely describes technical solutions in embodiments of this application with reference to the accompanying drawings in the embodiments of this application. In the descriptions of the embodiments of this application, "/" means "or" unless otherwise specified. For example, A/B may represent A or B. The term "and/or" describes only an association relationship for describing associated objects and represents that three relationships may exist. For example, A and/or B may represent the following three cases: A exists alone, A and B coexist, B exists alone. In addition, in descriptions of the embodiments of this application, "a plurality of" represents two or more.

It should be understood that the terms "first", "second", and the like in the specification, claims, and accompanying drawings of this application are used to distinguish between different objects, and are not used to describe a specific sequence. In addition, the terms "include", "have", and any variant thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

An "embodiment" in this application means that a specific feature, structure, or characteristic described with reference to the embodiment are included in at least one embodiment of this application. The term appearing at various positions in the specification does not necessarily refer to a same embodiment, or an independent or alternative embodiment mutually exclusive with another embodiment. A person skilled in the art explicitly or implicitly understands that the embodiments described in this application may be combined with another embodiment.

For example, an embodiment of this application provides a system, including a plurality of electronic devices, such as a device 1, a device 2, and a device 3. The electronic devices (for example, the device 1, the device 2, the device 3) in the foregoing system may belong to a same local area network.

The local area network may be a wireless communication network, for example, a wireless local area network (wireless local areanetworks, WLAN), a wireless fidelity point to point (wireless fidelity point to point, Wi-Fi P2P), a Bluetooth network, a zigbee network, an infrared (infrared, IR) or near field communication (near field communication, NFC) network, or the like. For another example, the foregoing local area network may alternatively be a wired communication network, for example, a communication network established by a video graphics array (video graphics array, VGA), a digital visual interface (digital visual interface, DVI), a high definition multimedia interface (high definition multimedia interface, HDMI), a data transmission line, or the like. For another example, the foregoing local area network may alternatively be a remote network.

After the device 1, the device 2, and the device 3 trust each other and implement mutual recognition, the system including the device 1, the device 2, and the device 3 may alternatively be referred to as a trust ring. In addition, for a process in which trust and mutual recognition are performed between devices, refer to a related technology. For example, determining may be performed based on one or more of whether the devices have a same system account to log in to, whether authorization is already performed, and whether near field communication is used, and the like. Details are not described herein.

It can be understood that data may be securely shared between a plurality of electronic devices within a same trust ring, where the shared data includes, but is not limited to, message reminders, message records, and user information, device types, running states of various applications, identifiers of various applications, and synchronization of identifiers of recently used applications of other electronic devices, and the like.

In this way, within the trust ring, a variety of collaborative services, for example, services such as collaborative calling, collaborative notification, screen projection, and the like, may be implemented.

The collaborative notification is used as an example. In the trust ring, when a message notification is received by the device 1, the message notification may be displayed by the device 1, and the message notification may further be streamed to the device 2 and/or the device 3 and is displayed by the device 2 and/or the device 3. This facilitates viewing of a message across the devices by a user, increasing efficiency of collaborative work between the devices. Similarly, the device 2 may also stream a received message notification to the device 1 and/or the device 3, and the device 3 may also stream a received message notification to the device 1 and/or the device 2.

Certainly, mere streaming of the message between the devices is insufficient. The user often needs to process the message notification through the device 2 after viewing the message notification from the device 1 on the device 2. This requires that the device 1 be screen projected to the device 2.

Usually, a screen projection scenario includes a source-end device and a target device, and the source-end device and the target device enable, through a protocol, content on the source-end device to be displayed on the target device, for example, the source-end device performs screen projection on the target device. There are common protocols such as a DLNA (Digital Living Network Alliance, digital living network alliance) protocol, a Chromecast protocol, a Miracast protocol, an Airplay protocol, and the like. The source-end device may be a mobile phone, a tablet computer, a PC, a watch, or the like. The target device may be a tablet computer, a PC, a television set, or the like.

It can be understood that the source-end device and the target device may be referred to other names, for example, the source-end device may be referred to as an active screen projection device, and the target device may be referred to as a passive screen projection device. Alternatively, the source-end device may be referred to as a first electronic device, the target device may be referred to as a second electronic device, and so on. This is not limited in this application.

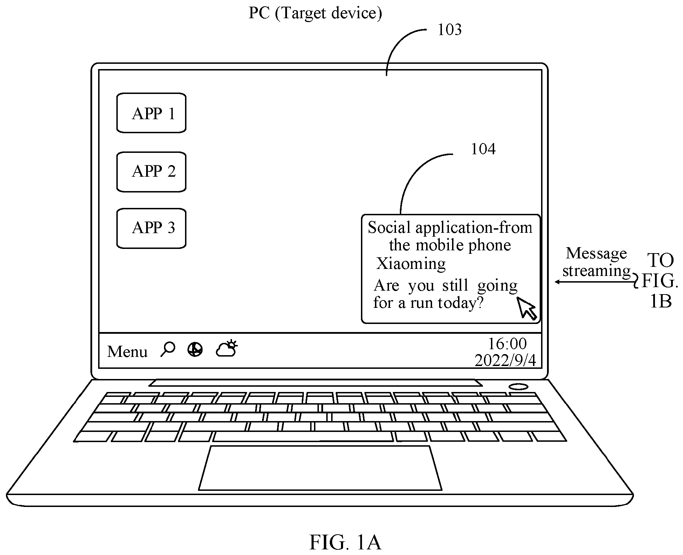

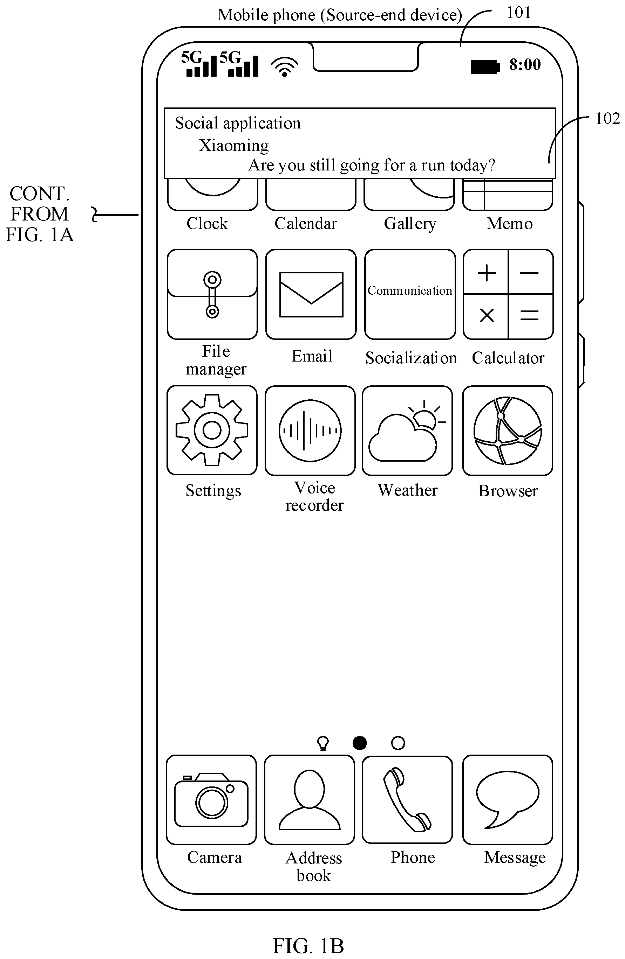

As shown in FIG. 1A and FIG. 1B, an example in which the source-end device is a mobile phone and the target device is a PC is used. After the mobile phone and the PC belong to a same local area network and complete trust and mutual recognition, the mobile phone and the PC belong to a same trust ring, that is, a communication channel for streaming a message may be established between the mobile phone and the PC.

In some embodiments, a plurality of types of application programs may be installed in the mobile phone, and during operation, the mobile phone may receive an application message pushed by each of the application programs, where the application message is from a message server to which the application program corresponds.

For example, a social application may be installed in the mobile phone and the mobile phone may receive an application message pushed by the social application, for example, a message "Are you going for a run today?" sent by a contact Xiaoming in the social application.

After receiving the application message pushed by the application program, if the mobile phone is in an unlocked and screen-on state, the mobile phone may display prompt information in a current interface. For example, when the mobile phone receives the application message pushed by the social application, if the current interface of the mobile phone is a main interface 101, a notification bubble 102 is displayed in the main interface 101, where the notification bubble 102 is used to display the application message received by the mobile phone.

Then, the mobile phone may stream the foregoing application message (for example, "Are you going for a run today?" pushed by the social application) to the PC through a communication channel that is between the mobile phone and the PC and that is used to stream a message.

In some embodiments, the prompt information for the application message may be displayed after the PC receives the application message from the mobile phone. The foregoing prompt information may be displayed on a desktop of the PC in a form of a message notification control. For example, the message notification control may be, for example, a floating window, a message bubble, a message card, or the like. Certainly, a display form thereof is not specifically limited in this embodiment of this application. For example, as shown in FIG. 1A and FIG. 1B, a message card 104 is displayed on a desktop 103, where the message card 104 is used to display related content of the foregoing application message. The related content may be that the application message comes from the mobile phone, that the application message comes from the social application, main content of the application message, or the like. It can be understood that a display position of the message card 104 is not specifically limited in this embodiment of this application.

In the scenario shown in FIG. 1A and FIG. 1B, if a user is using the PC, the message card 104 displayed on the desktop 103 may remind the user to focus on the mobile phone currently receiving the application message. In this way, even if the user is not currently using the mobile phone directly, or the mobile phone is not around, the user can learn of brief content of the application message, avoiding missing of the message.

In some embodiments, the message card 104 may have a display time limit. For example, if the display time limit is preset to duration of 1, the PC starts to display the message card 104 in response to the foregoing application message forwarded by the mobile phone. If the message card 104 is displayed for duration that exceeds the duration of 1, and it is not detected that the user selects the message card 104, the PC may cancel display of the message card 104.

For example, when a display screen of the PC is a touch control screen, if the PC detects that the user is in contact with a display area 1 on the touch control screen, the PC determines that the user indicates to select the message card 104. The display area 1 is an area, on the touch control screen, in which the message card 104 is displayed. For another example, when connected to a mouse, the PC detects that a cursor to which the mouse corresponds is located within the display area 1, and a confirmation instruction is entered. The PC determines that the user indicates to select the message card 104.

In some embodiments, after the PC displays the message card 104, the user may process the application message by operating the PC or may choose to process the application message by directly operating the mobile phone.

For processing the application message by directly operating the mobile phone, refer to a related technology. For example, the mobile phone may run the social application in the foreground in response to an operation of the user clicking on the notification bubble 102, and display an application interface including the foregoing social message. In this way, the user may reply to the application message by performing an operation on the application interface. For another example, the mobile phone displays the application interface of the social application in response to an operation of the user indicating to start the social application. In this way, the user can view the application message or reply to the application message or the like by performing an operation on the application interface provided by the social application.

In addition, choosing to operate the PC to process the application message triggers screen projection between the mobile phone and the PC. For example, the user may select the message card 104 on the PC. After the PC can detect that the user selects the message card 104, the PC may remotely control the mobile phone to run the social application. The PC may display a screen projection window on the desktop 103 after the social application enters a running state. After the PC displays the screen projection window, the user may control the mobile phone through the screen projection window on the PC, for example, operate the mobile phone to process the application message.

The screen projection window may be used to synchronously display a current interface of the mobile phone. For example, when the current interface of the mobile phone is the application interface of the social application, the screen projection window also displays the application interface. This is homogeneous screen projection. Alternatively, the current interface of the mobile phone may not be synchronously displayed, for example, the mobile phone displays the main interface and the screen projection window displays the application interface. This is heterogeneous screen projection.

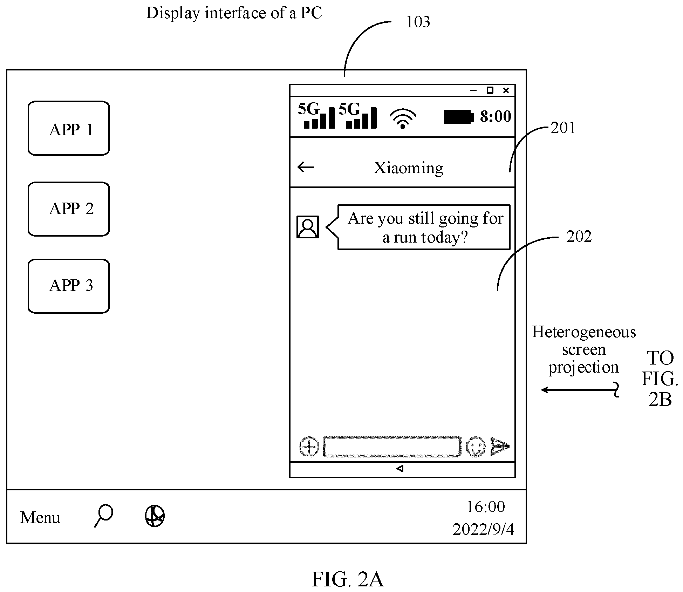

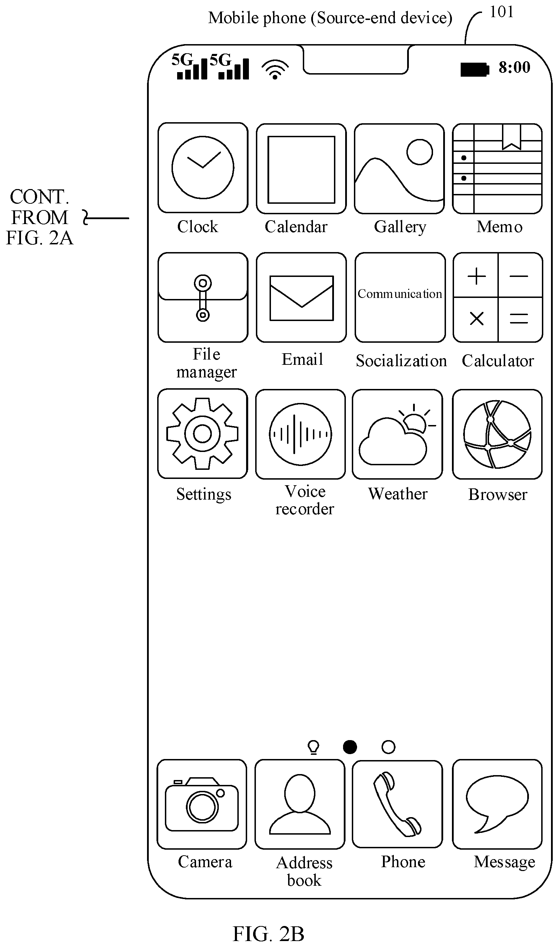

FIG. 2A and FIG. 2B illustrate interface display of the heterogeneous screen projection in the foregoing scenario.

In an implementation, after the PC determines that the user selects the message card 104, the heterogeneous screen projection may be achieved through data interaction between the PC and the mobile phone. As shown in FIG. 2A and FIG. 2B, after the PC determines that the user selects the message card 104, the heterogeneous screen projection is started, the main interface 101 is still displayed on the display screen of the mobile phone, and a screen projection window 201 on the display screen of the PC displays an application interface 202 to which the foregoing application message corresponds.

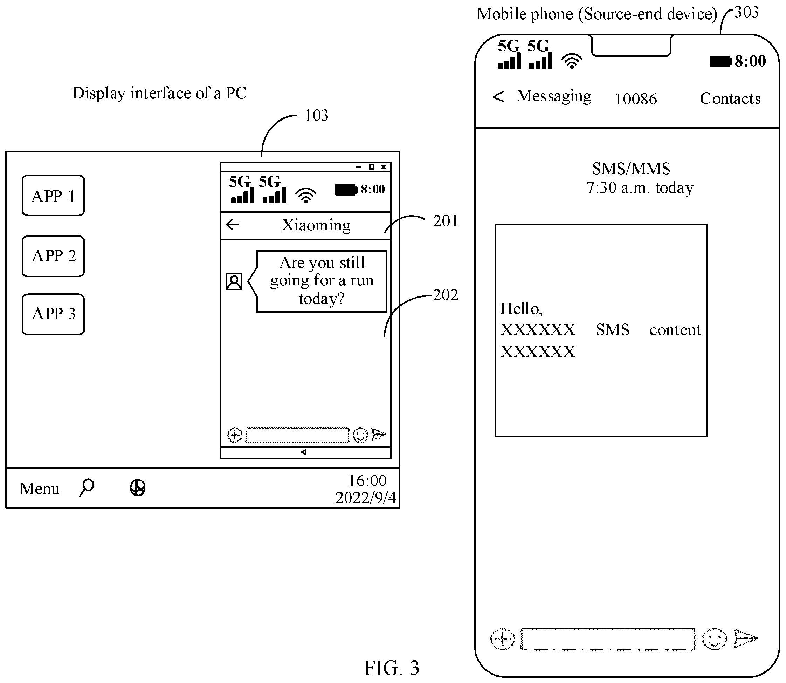

Thereafter, content displayed in the screen projection window does not change synchronously with content displayed on the display screen of the mobile phone. For example, refer to FIG. 3. Switching is performed to display an information application interface 303 on the display screen of the mobile phone, and the screen projection window 201 on the display screen of the PC still displays the application interface 201 to which the foregoing application message corresponds.

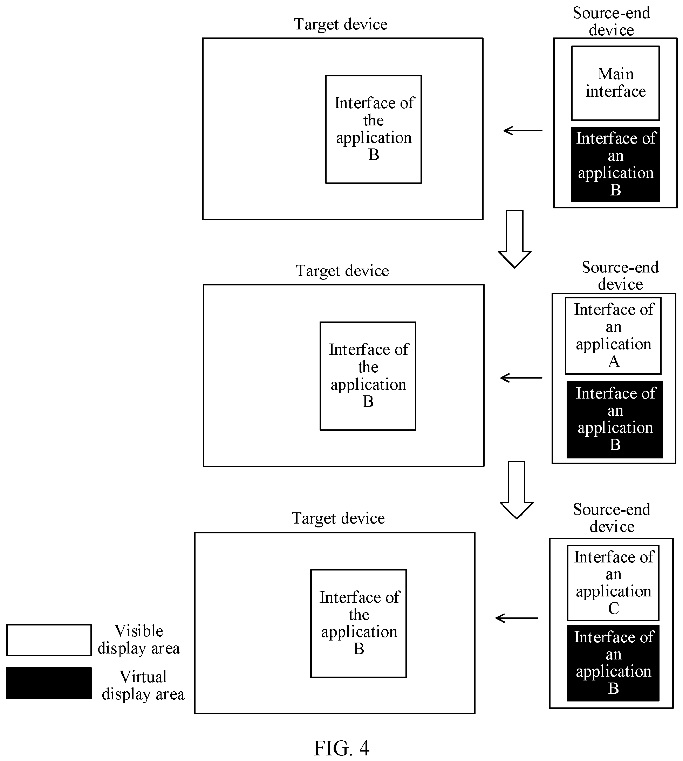

FIG. 4 is a schematic diagram of a principle of heterogeneous screen projection in FIG. 2A, FIG. 2B, and FIG. 3. In a heterogeneous screen projection scenario, when a source-end device performs screen projection on a target device, display information on the target device is not synchronized with display information in the foreground of the source-end device. A window of an application B is displayed on the source-end device. When screen projecting the window of the application B to the target device, the source-end device displays the window of application B in a created virtual display area (VirtualDisplay). Content of the virtual display area is invisible to a user and is available for screen projection onto the target device for display. In addition to the virtual display area, the source-end device further includes a user-visible display area. The user-visible display area displays a window of an application A when the source-end device screen projects the window of the application B onto the target device, that is, the source-end device displays the window of the application A in the foreground. It is assumed that the user-visible display area on the source-end device is switched from the window of the application A to a window of an application C, that is, the source-end device displays the window of the application C in the foreground. In this case, the window of the application B is still displayed on the target device.

It can be understood that a heterogeneous screen projection mode has better isolation than homogeneous screen projection. For example, the heterogeneous screen projection mode may provide the user with separate control screens (to be specific, a display screen of the source-end device and a display screen of the target device) to handle different applications. In this way, after the user screen projects the window of the application B onto the target device for display, the source-end device operates the application A, or switches from the window of the application A to the window of the application C, and the user can still perform an operation for the application B on the target device. Therefore, the heterogeneous screen projection releases control of display information of the source-end device over display information of the target device, thereby enhancing reusability of a plurality of devices, and allowing the user to perform an operation on different applications on different devices through screen projection. However, in the homogeneous screen projection mode, content displayed in the screen projection window changes synchronously with content displayed on the display screen of the mobile phone. In this embodiment of this application, the heterogeneous screen projection scenario is used as an example for description.

FIG. 1A, FIG. 1B, FIG. 2A and FIG. 2B described above are used as an example, describing a process in which when the mobile phone is in a screen-on or unlocked state, the mobile phone streams a message notification to the PC after receiving the message notification, and then, the user operates the PC and selects a message card that displays the message notification, to trigger the mobile phone to perform heterogeneous screen projection onto the PC.

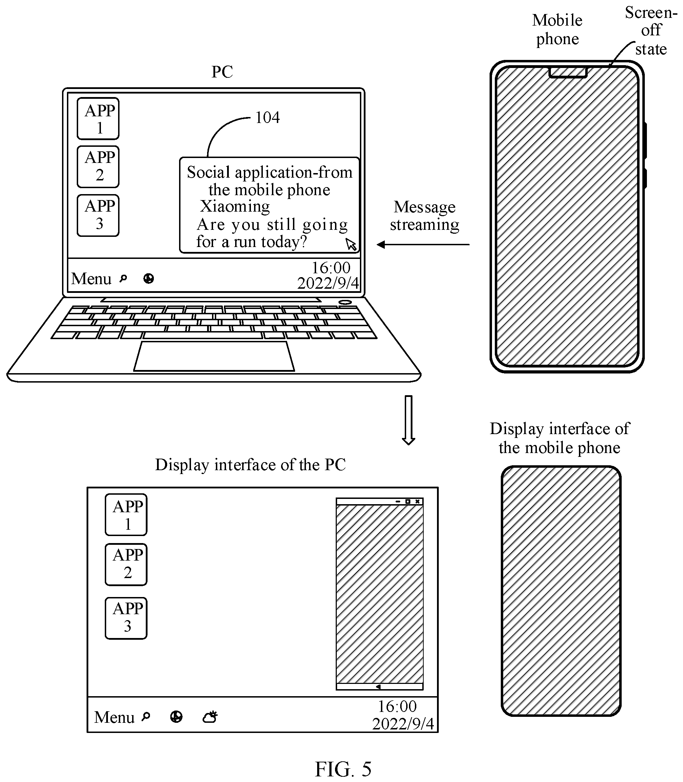

In a heterogeneous screen projection scenario, as shown in FIG. 5, in a related technology, a display screen of a mobile phone is in a black screen state when the mobile phone is in a screen-off state. In this case, if the mobile phone receives an application message from a social application, the mobile phone may be transiently screen on and display a notification bubble, or may continue to maintain the black screen state without displaying the notification bubble. It can be understood that the foregoing black screen state refers to a state in which the display screen of the mobile phone is not lit up or only a screen-off screen saver image is displayed.

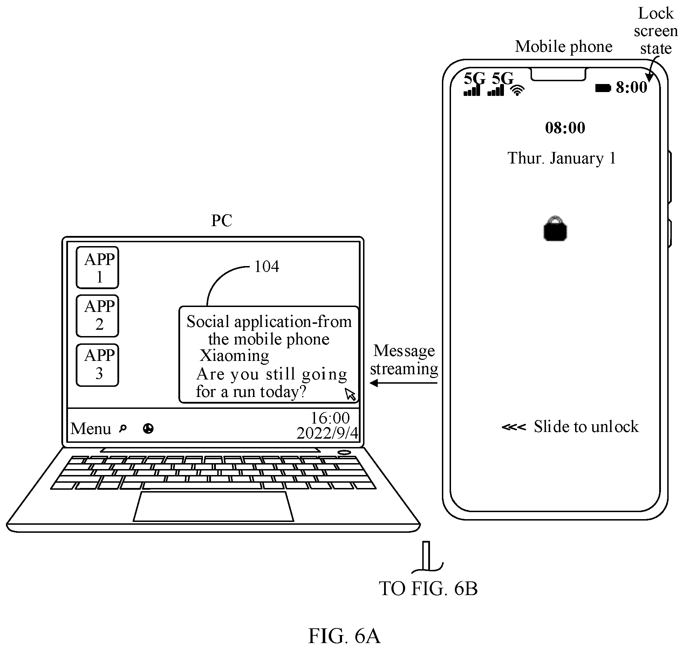

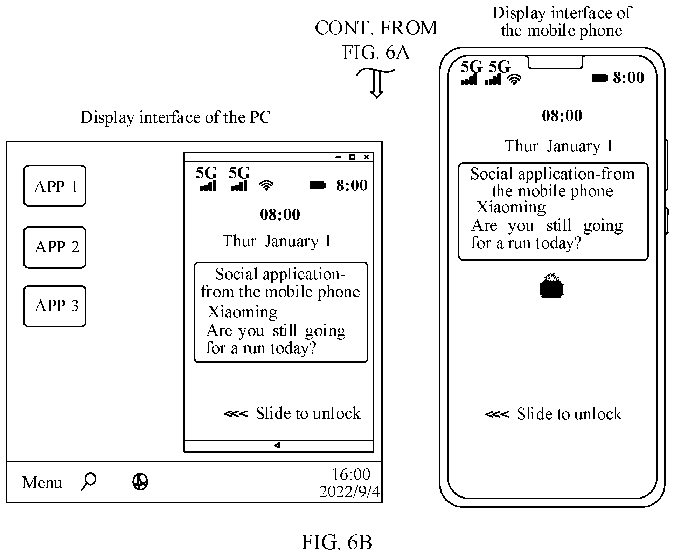

As shown in FIG. 6A and FIG. 6B, when a mobile phone in a lock screen state, a display screen of the mobile phone may display a lock screen interface or also be in a black screen state. In this case, if the mobile phone receives an application message from a social application, the mobile phone may display a notification bubble in mobile the lock screen interface.

In the scenarios shown in FIG. 5 and FIG. 6A and FIG. 6B, the mobile phone may likewise stream the application message to the PC. In this way, the PC can still display the message card 104 on the desktop 103.

Certainly, in the scenarios shown in FIG. 5 and FIG. 6A and FIG. 6B, during display of the message card 104 by the PC, the mobile phone continues to maintain the black screen state or display the lock screen interface even though the PC determines that the user indicates to select the message card 104. It can be understood that, during maintaining the black screen state or displaying the lock screen interface, the mobile phone cannot run the social application in the foreground, that is, cannot display the application interface of the social application either.

It should be noted that, the screen-off described herein refers specifically to a lock screen and screen-off condition, and in this case, the source-end device displays the black screen interface and the display screen is not lit up, as shown in FIG. 5; the lock screen described herein refers specifically to a lock screen but screen-on condition, and in this case, the source-end device displays the lock screen interface and the lock screen interface may include a lock head identifier, as shown in FIG. 6A and FIG. 6B.

Correspondingly, as shown in FIG. 5, even though the PC displays a screen projection window to which the mobile phone corresponds, the screen projection window also displays the black screen interface.

Correspondingly, as shown in FIG. 6A and FIG. 6B, even though the PC displays a screen projection window to which the mobile phone corresponds, the screen projection window also displays the lock screen interface.

It can be learned that in the scenarios shown in FIG. 5 and FIG. 6A and FIG. 6B, whether the screen projection window displays the black screen interface or the lock screen interface, the user cannot remotely control the mobile phone through the PC and process the foregoing application message. That is, the user can only choose to unlock the mobile phone and directly operate the mobile phone to complete processing of the application message.

Corresponding to FIG. 5, if the user expects to display the screen projection window of the application interface on the PC, the user may first light up a screen of the mobile phone, unlock the mobile phone, and then indicate to select the message card 104 on the PC to start the heterogeneous screen projection. It should be understood that, for a screen projection scenario after the mobile phone is unlocked, refer to that in FIG. 2A and FIG. 2B, and details are not described herein.

Corresponding to FIG. 6A and FIG. 6B, if the user expects to display the screen projection window of the application interface on the PC, the user may first unlock the mobile phone, keep the mobile phone in a screen-on state, and then indicate to select the message card 104 on the PC to start the heterogeneous screen projection. It should be understood that, for a screen projection scenario after the mobile phone is unlocked, refer to that in FIG. 4, and details are not described herein.

To be specific, when the mobile phone is in a screen-off or lock screen state, there is a scenario in which: when the user plays a game or is at work using a PC in a book room or a living room at home, the mobile phone is placed in another room; when a contact (Xiaoming) on the social application sends a message to the mobile phone of the user, the user may immediately learn on the PC that the mobile phone of the user receives a message notification. However, in this scenario, the user tends to focus on the game or work on the PC, and does not expect to get up to the room to take the mobile phone to view or reply to the message, but expects to start screen projection of an application window (that is, a screen projection window to which the mobile phone corresponds) showing the message on the PC and processes the message through the PC. However, since the mobile phone in the another room is in a lock screen and screen-off state at this time, the user cannot directly start, on the PC based on a current technology, the screen projection of the application window showing the message and should first go to the room to unlock the mobile phone and enable the mobile phone to be in a screen-on state, to start, on the PC, the screen projection window to which the mobile phone corresponds.

It can be learned that it is inconvenient and time consuming for the user to start the screen projection on the PC when the mobile phone is in the lock screen or screen-off state. Certainly, in a related technology, when the mobile phone is in both the screen-off and lock screen state, there are similar problems, and details are not described herein.

It can be learned that, usually, when the source-end device is in the lock screen or screen-off state, the user cannot directly start, on the target device, an application screen projection window showing the message, but the source-end device needs to be unlocked first and is enabled to be in the screen-on state, to start, on the target device, the application screen projection window showing the message; otherwise, only a black screen projection window or a lock screen interface window can be displayed on the target device. This increases an operation flow of the user, and further reduces screen projection efficiency when the source-end device is not with the user, resulting in cumbersome and inefficient experience for a screen projection operation of the user.

It should be noted that, the application screen projection window refers to a screen projection window displayed when an application on the source-end device is screen projected onto the target device.

To resolve the foregoing problem, and realize that the user can start the application screen projection window on the target device when the source-end device is in the lock screen or screen-off state, an embodiment of this application provides a screen projection method, an electronic device, and a system, to provide a user with convenient and efficient screen projection experience.

Specifically, in the foregoing scenario in which the source-end device is screen locked or screen off, according to a screen projection method provided in this embodiment, the user can directly perform an operation on the target device, to enable the application window to which the streamed message corresponds to be screen projected on the target device. A function for multi-screen collaborative interaction across devices is implemented by control and input collaboration based on the screen projection of the application window on the target device. In this way, the user can focus on operating the target device without operating the source-end device in the lock screen or screen-off state. This reduces operation flows of the user for starting the screen projection, improves efficiency of human-computer interaction for starting the screen projection, and enhances user experience.

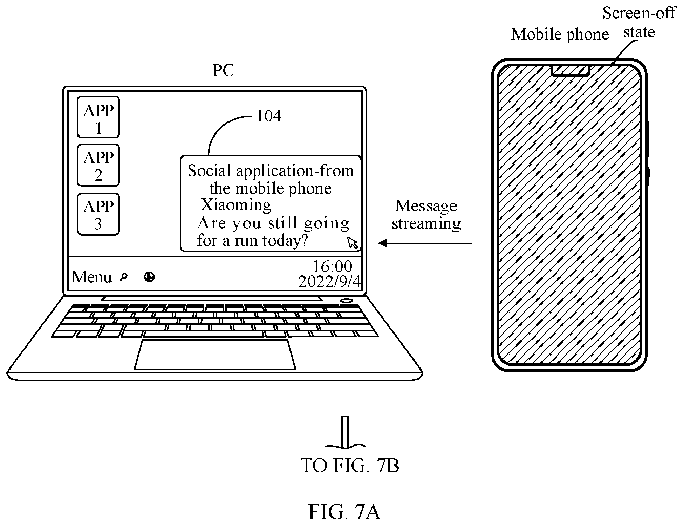

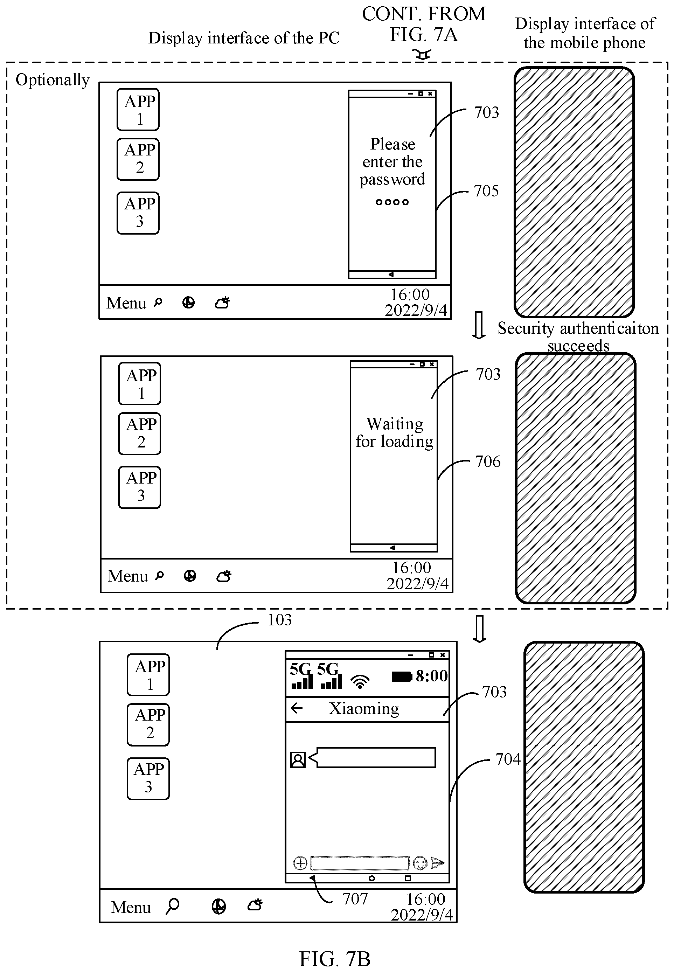

For example, FIG. 7A and FIG. 7B are schematic diagrams of a screen projection method according to an embodiment of this application. In this embodiment of this application, processes in which a mobile phone is screen projected to a PC, the mobile phone is screen projected to a tablet computer, and the tablet computer is screen projected to the PC, and the like can be implemented. A description is provided below by using an example in which the source-end device is a mobile phone and the target device is a PC.

After the mobile phone and the PC belong to a same local area network and complete trust and mutual recognition, the mobile phone and the PC belong to a same trust ring, that is, a communication channel for streaming a message may be established between the mobile phone and the PC.

For example, a social application may be installed in the mobile phone and the mobile phone may receive an application message pushed by the social application, for example, a message "Are you going for a run today?" sent by a contact Xiaoming in the social application.

After receiving the application message pushed by the application program, if being in the screen-off state, the mobile phone may be transiently screen on, and display a message notification bubble, or may not display the message notification bubble, and continue to maintain an unlit screen state. As shown in FIG. 7A and FIG. 7B, the mobile phone displays a black screen interface. If the mobile phone is in the lock screen state, the message notification bubble may be transiently displayed or the message notification bubble may not be displayed and the lock screen interface may continue to be maintained. It should be noted that, the following embodiment is described by using an example in which the mobile phone is in the screen-off state, reference will be made thereof when the mobile phone is in the lock screen state, and details are not described.

Then, the mobile phone may stream the foregoing application message (for example, "Are you going for a run today?" pushed by the social application) to the PC through a communication channel that is between the mobile phone and the PC and that is used to stream a message.

It can be understood that the application program (a computer version to which the application program corresponds, and a mobile phone version and the computer version to which the application program correspond are collectively referred to as the application program herein and are not distinguished by name) may or may not be installed on the PC. To be specific, whether a corresponding application program is installed on the PC does not affect streaming of a message and subsequent heterogeneous screen projection.

For example, a message card 702 displays summary information of an application message: "Are you still going for a run today?", device information "from the mobile phone", application information "social application", and contact information "Xiaoming", so that the user can easily and quickly learn of content of the application message through the message card, and the application message is a message sent from Xiaoming and received by the social application on the mobile phone, thereby helping the user decide whether to perform an operation, for example, starting screen projection to reply to the application message.

In some embodiments, after the PC displays the message card 702, the user may process the application message in a manner of operating the PC. Choosing to operate the PC to process the application message triggers screen projection between the mobile phone and the PC.

In some other embodiments, the target device may receive one or more application messages from any source-end device in a same trust ring. For example, the PC may display, in response to an operation of the user, a message list window, where the message list window may collectively display received message notifications, or collectively display received and unprocessed message notifications. In an implementation, the foregoing message notification may alternatively be displayed in the message list window in a form of a message card.

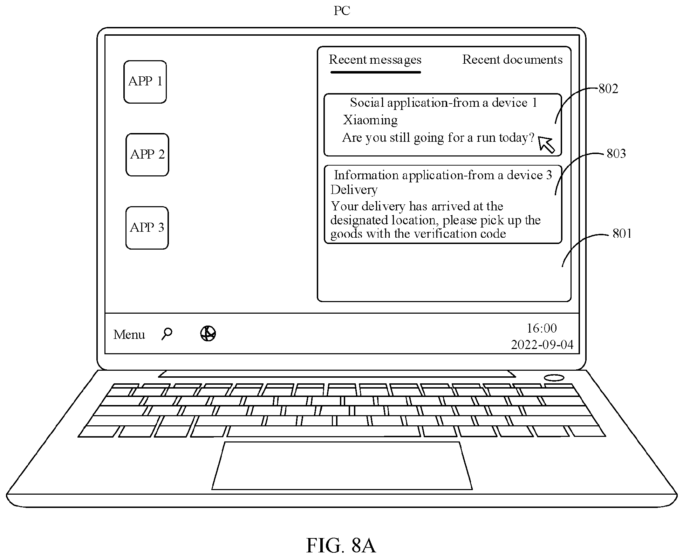

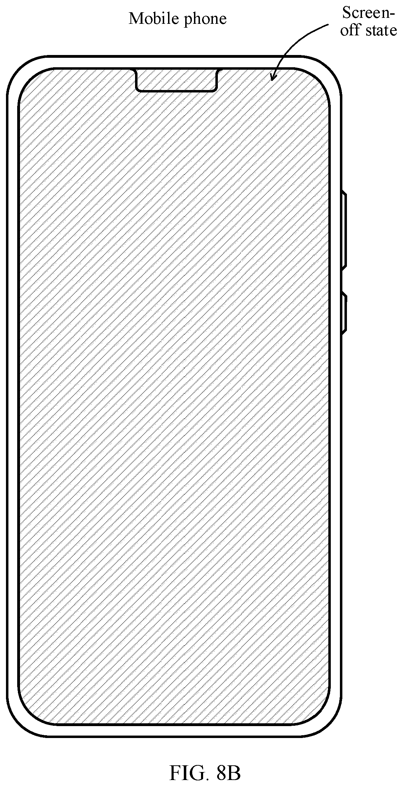

For example, the target device is a PC including a touch control screen, and the source-end devices are a mobile phone 1 and a mobile phone 2. For a specified operation detected by the PC, refer to FIG. 8A and FIG. 8B. FIG. 8A and FIG. 8B are schematic diagrams of operation of another type of screen projection starting according to an embodiment of this application. The PC may display a message list window 801 when detecting a slide down operation of a user on a touch control screen. The message list window 801 displays an application message (for example, a message card 802) from the mobile phone 1, an application message (for example, a message card 803) from the mobile phone 2, and the like. It can be understood that message notifications displayed in the message list window 801 are both information recently received by the PC from other devices in a trust ring. The message card 802 corresponds to a message pushed by a social application in the mobile phone 1. The message card 803 corresponds to a message (for example, an SMS message) pushed by an information application in the mobile phone 2.

Similar to the case of the message card 702 displayed on a desktop, when the PC detects that the user selects any one of the message cards in the message list window 801, a device to which the message card corresponds can be triggered to perform screen projection. For example, when detecting that the user selects the message card 802, the PC may trigger the mobile phone 1 to perform screen projection. In this way, the mobile phone 1 is a source-end device and the PC is a corresponding target device. For another example, when detecting that the user selects the message card 803, the PC may trigger the mobile phone 2 to perform screen projection. In this way, the mobile phone 2 is a source-end device and the PC is a corresponding target device.

For example, the user may select the message card 702 on the PC. After the PC can detect that the user selects the message card 702, even if the mobile phone is in a screen-off state, the PC may remotely control the mobile phone to run the social application in the background. The mobile phone still displays a black screen interface after the social application enters a background running state. In addition, the PC may further display the screen projection window 703 to which the social application corresponds on the desktop 701. The screen projection window 703 to which the social application corresponds is used to display an application interface 704 to which the application message corresponds. The application interface is an interface that shows the application message.

It can be understood that a screen projection window displaying the application interface may be referred to as an application screen projection window. Optionally, the application interface 704 includes content of the application message, an operation control, a reply box, and the like. For example, the application interface 704 is a chat box interface to which the application message corresponds, where the user may view and reply to the application message.

In an implementation, after the PC determines that the user selects the message card 702, the mobile phone may render a corresponding application interface in a virtual display area through data interaction between the PC and the mobile phone. The application interface rendered in the virtual display area is not displayed in the foreground of the mobile phone. That is, as shown in FIG. 7A and FIG. 7B, the display screen of the mobile phone still displays the black screen interface. The virtual display area is a PC-oriented service, and content in the virtual display area may be displayed in the screen projection window 703 on the PC when the virtual display area is called by the PC. In this way, it is achieved that when the mobile phone is in the screen-off state, the content displayed in the screen projection window on the PC is the application interface 704 in the virtual display area.

During display of the application screen projection window, the user can not only send control information to the mobile phone through the PC, but also view a response status of the mobile phone to the control information through the PC, thereby realizing real-time remote control, for example, remote controlling the mobile phone to enter reply content and send the reply content to a specified contact (Xiaoming); for another example, remote controlling the mobile phone to receive or send an audio video call, perform copying, perform cutting, perform deletion, and the like.

It should be additionally noted that in a scenario in which heterogeneous screen projection is adopted between the PC and the mobile phone, a display interface in the screen projection window 703 does not change synchronously with an interface shown on the display screen of the mobile phone. It can be understood that when the mobile phone is in the screen-off state, the display screen of the mobile phone always displays the black screen interface.

Optionally, the application interface 704 includes at least an interface element through which the user performs a reply operation, and the user may reply to the application message on the PC through the interface element after the application interface 704 is displayed in the screen projection window of the PC. The application interface 704 includes a return control 707, but does not include a home key. The PC displays a previous-level application interface of the application interface 704 in the screen projection window 703 in response to an operation of the user clicking on the return control 707. For example, in some embodiments, the previous-level application interface is a main interface of the application, where the main interface does not include a return control.

It can be learned from the foregoing that a screen projection granularity of the heterogeneous screen projection is an application. It can be understood that in the heterogeneous screen projection, the application screen projection window on the target device may display all application interfaces of the application, but does not display application interfaces of other applications, including a desktop of the mobile phone, and therefore a return control does not need to be provided in a main interface of the application.

Certainly, a close control may be configured in the screen projection window 703. The PC may cancel display of the screen projection window 703 in response to an operation of the user selecting the "close control". Optionally, the screen projection window 703 may further include a minimize control, a maximize control, or the like, and this is not limited herein.

Further, in some embodiments, in a scenario in which the heterogeneous screen projection is started when the mobile phone is in the screen-off state, the following may be further included: After the mobile phone is unlocked,
(1) display content of the screen projection window 703 on the PC is maintained when a change in a current display interface of the mobile phone is detected;
(2) after an operation of the user in the application interface 704 is detected, an instruction corresponding to the operation of the user is sent to the mobile phone, and a social application running in the background of the mobile phone is operated based on the instruction, but display content of the display screen of the mobile phone is not changed; and
(3) the PC closes the screen projection window 703 when opening of the social application by the user on the mobile phone is detected, where the display screen of the mobile phone displays content of the current social application.

In other words, in some embodiments, when the mobile phone opens an application of which heterogeneous screen projection is performed on the PC, the application is started in the foreground of the mobile phone and the heterogeneous screen projection is finished.

In some other embodiments, optionally, the source-end device may enable a security authentication function to secure privacy of the source-end device that is screen locked or screen-off. That is, when the source-end device (for example, the mobile phone) enables the security authentication function and is configured with an unlock password, if the target device (for example, the PC) determines that the source-end device is already conditional for screen projection, the target device may display the screen projection window, where the screen projection window in this case is used for displaying the security authentication interface. The unlock password may be an authentication password for unlocking a lock screen state of the mobile phone.

It may be understood that a security authentication mode may alternatively be fingerprint authentication performed by the user by inputting a fingerprint, voice authentication performed by the user by inputting a voice, or the like, and this is not limited.

It can be understood that the screen projection window displaying the security authentication interface may be referred to as a security authentication window.

Still refer to FIG. 7A and FIG. 7B. after the PC detects that the user selects the message card 702, if determining that the mobile phone is already conditional for screen projection, the PC may display the screen projection window 703. Optionally, the screen projection window 703 may first display a security authentication interface 705. In this way, after the PC receives a mobile phone unlock password entered by the user in the security authentication interface 705 and the unlock password is authenticated, optionally, the PC controls the screen projection window 703 to switch to display a transition loading interface 706 with "prompt information indicating to wait".

It can be understood that the screen projection window displaying the transition loading interface with the "prompt information indicating to wait" may be referred to as a transition loading window.

During display of the transition loading interface 706 with the "prompt information indicating to wait" by the screen projection window 703, the mobile phone starts the social application in response to an indication by the PC, and draws an application interface of the social application in the virtual display area, to obtain drawing parameters of display objects in the virtual display area. The virtual display area is a PC-oriented service, and is invisible on the display screen of the mobile phone. The drawing parameters are related parameters for rendering an interface, and may also be referred to as display data in some examples.

After finishing drawing the application interface, the mobile phone sends corresponding display data to the PC, indicating the PC to render the application interface in the screen projection window 703. In this way, the screen projection window 703 switches to display the application interface 704 of the social application, that is, the mobile phone screen projects content in the virtual display area into the screen projection window 703 of the PC. To be specific, after the PC receives the mobile phone unlock password entered by the user and the unlock password is authenticated, the mobile phone starts to perform heterogeneous screen projection on the PC.

It can be understood that terms "interface" and "application interface" in this specification, claims, and accompanying drawings of this application are medium interfaces that are used for interaction and information exchange between an application program or an operating system and a user, and implement conversion between an internal form of information and a form that can be accepted by the user. A commonly used form is a graphical user interface (graphic user interface, GUI), which refers to a user interface that is related to computer operations and that is displayed in a graphic manner. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, and a Widget.

It can be understood that, in the foregoing scenario in which the source-end device is screen locked or screen off, according to a screen projection method provided in this embodiment, the user can directly perform an operation on the target device, to enable the application window to which the streamed message corresponds to be screen projected on the target device. A function for multi-screen collaborative interaction across devices is implemented by control and input collaboration based on the screen projection of the application window on the target device. In this way, the user can focus on operating the target device without operating the source-end device in the lock screen or screen-off state. This reduces operations of the user for starting the screen projection, improves efficiency of human-computer interaction for starting the screen projection, and enhances user experience.

For example, when the mobile phone is in a screen-off or lock screen state, there is a scenario in which: when the user plays a game or is at work using a PC in a book room or a living room at home, the mobile phone is placed in another room; when a contact (Xiaoming) on the social application sends a message to the mobile phone of the user, the user may immediately learn on the PC that the mobile phone of the user receives a message notification. However, in this scenario, the user tends to focus on the game or work on the PC, and does not expect to get up to the room to take the mobile phone to view or reply to the message, but expects to start screen projection of an application window (that is, a screen projection window to which the mobile phone corresponds) showing the message on the PC and processes the message through the PC. However, since the mobile phone in the another room is in a lock screen and screen-off state at this time, the user cannot directly start, on the PC based on a current technology, the screen projection of the application window showing the message and should first go to the room to unlock the mobile phone and enable the mobile phone to be in a screen-on state, to start, on the PC, the screen projection window to which the mobile phone corresponds.

According to the screen projection method of this application, even in the foregoing scenario, the user does not need to go to another room to operate the mobile phone, but may continue to stay in the book room or the living room, and can start to show, by clicking on a message card to which the mobile phone corresponds on the PC, the screen projection window to which the mobile phone corresponds on the PC, to achieve display of a window of the heterogeneous screen projection, thereby helping the user process the message and improving user experience.

In some other embodiments, the target device may receive one or more application messages from any source-end device in a same trust ring. For example, the PC may display, in response to an operation of the user, a message list window, where the message list window may collectively display received message notifications, or collectively display received and unprocessed message notifications. In an implementation, the foregoing message notification may alternatively be displayed in the message list window in a form of a message card.

For example, the target device is a PC including a touch control screen, and the source-end devices are a mobile phone 1 and a mobile phone 2. For a specified operation detected by the PC, refer to FIG. 8A and FIG. 8B. FIG. 8A and FIG. 8B are schematic diagrams showing a message list window. The PC may display a message list window 801 when detecting a slide down operation of a user on a touch control screen. The message list window 801 displays an application message (for example, a message card 802) from the mobile phone 1, an application message (for example, a message card 803) from the mobile phone 2, and the like. It may be understood that message notifications displayed in the message list window 801 are both information recently received by the PC from other devices in a trust ring. The message card 802 corresponds to a message pushed by a social application in the mobile phone 1. The message card 803 corresponds to a message (for example, an SMS message) pushed by an information application in the mobile phone 2.

Similar to the case of the message card 702 displayed on a desktop, when the PC detects that the user selects any one of the message cards in the message list window 801, a device to which the message card corresponds can be triggered to perform screen projection. For example, when detecting that the user selects the message card 802, the PC may trigger the mobile phone 1 to perform screen projection. In this way, the mobile phone 1 is a source-end device and the PC is a corresponding target device. For another example, when detecting that the user selects the message card 803, the PC may trigger the mobile phone 2 to perform screen projection. In this way, the mobile phone 2 is a source-end device and the PC is a corresponding target device.

It can be understood that, this embodiment of this application provides a screen projection method, which may be applied to an electronic device, for example, a mobile phone, a tablet computer, a notebook computer, an ultra-mobile personal computer (ultra-mobile personal computer, UMPC), a netbook, and a personal digital assistant (personal digital assistant, PDA). A specific type of the electronic device is not limited in the embodiments of this application.

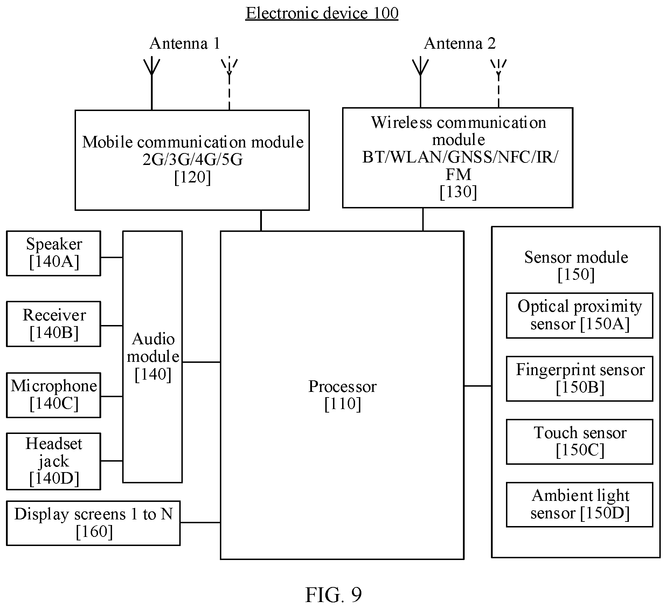

For example, FIG. 9 is a schematic diagram of a hardware structure of an electronic device 100 according to an embodiment of this application.

The electronic device 100 may include a processor 110, an antenna 1, an antenna 2, a mobile communication module 120, a wireless communication module 130, an audio module 140, a speaker 140A, a receiver 140B, a microphone 140C, a headset jack 140D, a sensor module 150, a display screen 160, and the like. The sensor module 150 may include an optical proximity sensor 150A, a fingerprint sensor 150B, a touch sensor 150C, an ambient light sensor 150D, and the like.

It can be understood that an example structure in this embodiment of the present invention does not constitute a specific limitation on the electronic device 100. In some other embodiments of this application, the electronic device 100 may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be separate devices, or may be integrated into one or more processors.

A wireless communication function of the electronic device 100 may be implemented by using the antenna 1, the antenna 2, the mobile communication module 120, the wireless communication module 130, the modem processor, the baseband processor, and the like.

The mobile communication module 120 may provide a wireless communication solution, including 2G/3G/4G/5G and the like, that is applied to the electronic device 100.

The wireless communication module 130 may provide a wireless communication solution, including a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), a near field communication (near field communication, NFC) technology, and an infrared (infrared, IR) technology, that is applied to the electronic device 100.

The electronic device 100 implements a display function through the GPU, the display screen 160, the application processor, and the like. The GPU is a microprocessor for image processing and connects the display screen 160 and the application processor. The GPU is configured to perform mathematical and geometric calculation for graphics rendering. The processor 110 may include one or more GPUs that execute program instructions to generate or change displayed information.

The electronic device 100 may implement an audio function, for example, a voice call, through the audio module 140, the application processor, and the like.

The speaker 140A, also referred to as a "horn", is configured to convert an audio electrical signal into a sound signal. The electronic device 100 may be configured to listen to music or answer a hands-free call by using the speaker 140A.

The receiver 140B, also referred to as an "earpiece", is configured to convert an audio electrical signal into a sound signal. When the electronic device 100 answers a call or voice information, the receiver 140B may be put close to a human ear to receive a voice.

The microphone 140C, also referred to as a "mic" or "mike", is configured to convert a sound signal into an electrical signal. When making a call or sending voice information, a user may make a sound near the microphone 140C through the mouth of the user, to input a sound signal into the microphone 140C.

The headset jack 140D is configured to connect to a wired headset.

The optical proximity sensor 150A may include, for example, a light-emitting diode (LED) and an optical detector such as a photodiode. The electronic device 100 may detect, by using the optical proximity sensor 150A, that the user holds the electronic device 100 close to an ear for a call, so that automatic screen-off is implemented to achieve power saving. The optical proximity sensor 150A may be further configured to automatically unlock and lock the screen in a leather case mode or a pocket mode.

The fingerprint sensor 150B is configured to collect a fingerprint. The electronic device 100 may implement fingerprint unlock, application lock accessing, fingerprint photographing, fingerprint-based call answering, and the like by using a feature of a collected fingerprint.

The touch sensor 150C is also referred to as a "touch device". The touch sensor 150C may be disposed on the display screen 160. The touch sensor 150C and the display screen 160 form a touchscreen, which is also referred to as a "touch control screen". The touch sensor 150D is configured to detect a touch operation performed on or near the touch sensor 150D. The touch sensor may transfer the detected touch operation to the application processor to determine a type of the touch event. A visual output related to the touch operation may be provided through the display screen 160. In some other embodiments, the touch sensor 150C may alternatively be disposed on a surface of the electronic device 100, and is located at a position different from that of the display screen 160.

The ambient light sensor 150D is configured to sense ambient light brightness. The electronic device 100 may adaptively adjust luminance of the display screen 160 based on the sensed ambient light brightness. The ambient light sensor 150D may be further configured to automatically adjust white balance during photographing. The ambient light sensor 150B may further cooperate with the optical proximity sensor 150A to detect whether the electronic device 100 is in a pocket, to prevent an accidental touch.

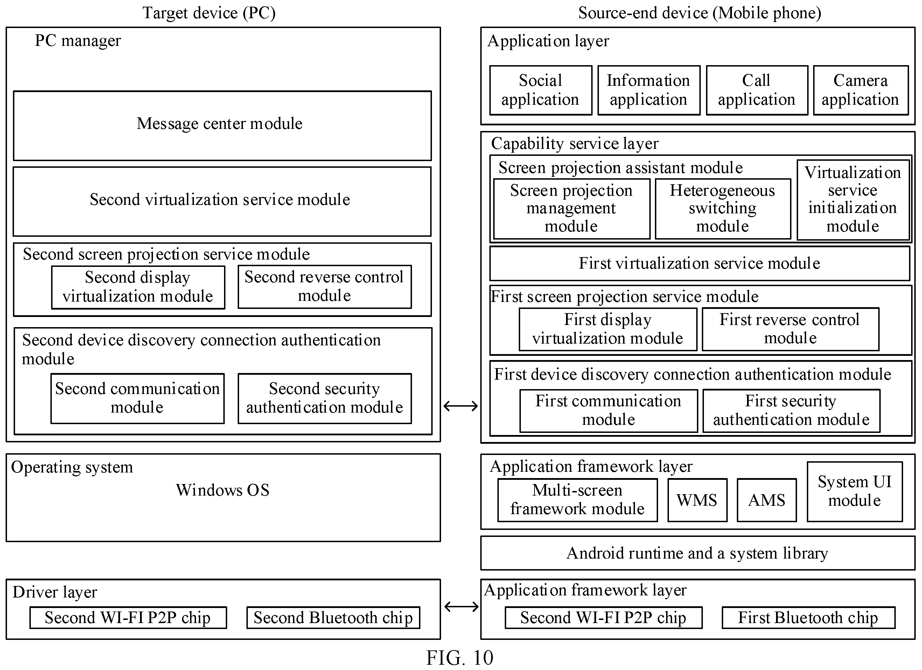

A system structure of an electronic device provided in an embodiment of this application is described below with reference to FIG. 10.

In a layered architecture, software is divided into several layers, and each layer has a clear role and task. The layers communicate with each other through a software interface. It should be noted that, a right half of FIG. 10 is a diagram of a software architecture of a source-end device, for example, a mobile phone, and a left half of FIG. 10 is a diagram of a software architecture of a target device, for example, a tablet computer (Pad) or a PC.

In some embodiments, as shown in the right half of FIG. 10, a software framework of the source-end device may include an application program layer, a capability service layer, an application framework (framework, FWK) layer, an Android runtime (Android runtime), a system library, and a driver layer.

### (1) Application program layer

The application program layer may include a series of application packages, for example, application programs (also referred to as applications) such as a social application program, an information application program, a call application program, and a camera application program. For example, the social application includes WeChat, QQ, and the like, and the information application includes an SMS message, and the like. For convenience of description, the application program is briefly referred to as an application below. The application on the source-end device may be a native application (for example, an application installed in the source-end device at the time of installation of an operating system prior to delivery of the source-end device) or a third party application (for example, an application downloaded and installed by the user through an application store). This is not limited in embodiments of this application.

### (2) Capability service layer

The capability service layer provides capability support implementing a corresponding service, and as shown in FIG. 10, may include a screen projection assistant module, a first virtualization service module, a first screen projection service module, a first device discovery authentication connection module, and the like.

The screen projection assistant module may be a module for interacting screen projection-related information with another electronic device (for example, a target device), implements end-to-end logical control, connection management, and the like of screen projection, and is configured to generate a session key (SessionKey) to ensure communication session security between the source-end device and the target device. The screen projection assistant module may include functional modules such as a screen projection management module, a heterogeneous switching module, and a virtualization service initialization module. The screen projection management module is responsible for managing screen projection-related transaction, for example, adding and removing related processing logic settings for VirtualDisplay. The VirtualDisplay may also be referred to as a virtual display area, a virtual screen, a virtual Display, or the like. The heterogeneous switching module is configured to control the source-end device to switch from a heterogeneous screen projection mode to a homogeneous screen projection mode. The virtualization service initialization module performs initialization setting on a virtualization service in which the heterogeneous screen projection is started.

The first virtualization service module is configured to implement end-to-end logical control of screen projection for audio and video streams, and is responsible for audio and video data streams, generated by a Speaker, a Mic, a Camera, and the like, transmitted between the source-end device and the target device.

The first screen projection service module may include a first display virtualization module and a first reverse control module, respectively providing a screen projection capability (that is, screen projection of content from the source-end device to the target device for display) and a reverse event (that is, an event triggered by the target device to control the source-end device) control basis capability. The first screen projection service module receives an instruction from the screen projection management module, and provides a corresponding screen projection service according to the instruction, to screen project a program running natively onto another electronic device (for example, the target device). The first screen projection service module injects inverse control and an input method into a display of the target device (referred to as an external screen below), and adds a virtual display flag (for example, Flagl) when creating the virtual display area, so that the external screen displays only its own content without mirroring content of a display (referred to as a home screen below) of the source-end device, thereby implementing heterogeneous screen projection.

The first device discovery connection authentication module is responsible for work such as discovery, connection, and authentication, and is configured to control a driver layer to implement functions of proximity discovery, authentication, connection, and the like between the source-end device and the target device, and may include a first communication module and a first security authentication module. The first communication module provides a signaling transmission path between the source-end device and the target device, and is configured to issue an instruction to establish a communication connection and a screen projection connection between the source-end device and the target device to the driver layer. Meanwhile, the first communication module is further configured to start the screen projection assistant module after the transmission path is established. The first security authentication module is configured to perform security authentication, and is responsible for owner identification, starting distributed unlock authentication, obtaining a trust ring, and ensuring privacy security of the user.

### (3) Application framework layer (FWK)

The application framework layer provides an application programming interface (Application Programming Interface, API) and a programming framework for application programs at the application program layer. The application framework layer includes some predefined functions. As shown in FIG. 10, the application framework layer may include an activity manager service (ActivityManagerService, AMS), a window manager service (WindowManagerService, WMS), a multi-screen framework module, a SystemUI module, and the like.

The AMS is responsible for managing an Activity and is responsible for work such as starting, switching, and scheduling of components in the system, and management and scheduling of application programs. For each Activity, there is an application record (ActivityRecord) corresponding to the Activity in the AMS. The ActivityRecord records a status of an Activity of the application. Each activity Activity creates a corresponding ActivityRecord object in the AMS, and the AMS may schedule an Activity process of the application by using the ActivityRecord as an identifier. These ActivityRecord objects are managed in respective task stacks, and a plurality of ActivityRecord objects may be added to each of the task stacks. All the task stacks are centrally managed by an Activity Stack, which is responsible for the order, pushing, and popping of the TaskStack. Specifically, data classes are defined in the AMS to respectively store a process (Process), an activity (Activity), and a task (Task). A data class to which the process (Process) corresponds may include process file information, memory state information of the process, and an Activity, a Service, and the like that are included in the process. The Activity information may be stored in the Activity Stack. The ActivityStack is configured to centrally schedule Activities of application programs. The ActivityStack may specifically store all running Activity (that is, final ArrayList mHistory) information, for example, interface configuration information. For example, a running Activity may be stored in a newArrayList. The ActivityStack may further store historically run Activity information, for example, interface configuration information. It should be noted that the Activity does not correspond to an application program and an ActivityThread corresponds to an application program. Therefore, Android allows a plurality of application programs to be simultaneously run, in effect allowing a plurality of ActivityThreads to be simultaneously run. In Android, a basic idea of Activity scheduling is as follows: Each application process reports to the AMS when a new Activity is to be started or a current Activity is stopped. The AMS internally records all application processes. When receiving a start or stop report, the AMS first updates an internal record, and then notifies to run a corresponding client process or stop a specified Activity. Since there is a record of all Activities inside the AMS, these Activities can be scheduled, and an Activity in the background is automatically turned off based on a state of the Activity and a system memory.

The WMS carries data and an attribute that are related to an "interface", and is configured to manage a state related to the "interface", that is, configured to manage a graphical user interface (graphical user interface, GUI) resource used on a screen of the mobile phone, for example, configured to manage a window program and dispatch an event. Managing a window program refers to orderly providing outputs to a physical screen or another display device with the assistance of an application service end and the WMS based on a display request of an application program. Dispatching an event refers to dispatching a user event from a keyboard, a physical button, a touchscreen, a mouse, a track ball (TraceBall), or the like to a corresponding control or window. Managing a window program may include obtaining a size of a display screen, determining whether there is a status bar, locking a screen, capturing a screen and the like, and being responsible for managing a display manner of an application window, including a window display coordinate size, a window display level, and the like, and specifically includes the following: creation and destruction of a window, display and hiding of a window, window layout, management of a focus, input method and wallpaper management, and the like. In some embodiments of this application, the WMS may ensure visibility of a screen projection window in a lock screen and screen-off state of a mobile phone.

It should be noted that, a task stack management function of the AMS is used to manage a life cycle of the Activity and scheduling of Activities. A life cycle management function of the WMS is used to manage a life cycle of the window. Interworking therebetween enables the window to be activated through an on resume (onResume) interface, and the activated window is displayed in the foreground. Alternatively, the window is paused through an on pause (onPause) interface to enable the window to switch from the foreground to the background for display. A top-most window (top Activity) in the task stack is used as an example. The top Activity calls onResume for activation. In this case, the top Activity is displayed in the foreground. When a new window is pushed into the task stack, and the new window is located above an original top Activity, the original top Activity calls onPause to pause the window to enable the original top Activity to switch from the foreground to the background for display. A similar principle may be used to manage the life cycle for the new window.

The multi-screen framework module is responsible for implementing heterogeneous screen projection logic, calling a PendingIntentRecord interface to start an Activity (sending of specified behavior) to which PendingIntent corresponds, and starting an application corresponding to the Activity into a virtual display area by adding a heterogeneous screen projection flag (for example, Flag2). PendingIntent is a capability provided by Android and used by an external program to call the program itself, where a life cycle is not related to a main program, and specified behavior is performed when specific conditions are met or specific events are triggered. The multi-screen framework module is further configured to listen to a sensing event and interact with the screen projection assistant module, for example, calling an ActivityRecord to listen whether an Activity is in the foreground and visible, and notifying the screen projection assistant module of a listening result; and calling a Task to listen to the virtual display area to determine whether a stack is empty and notifies the screen projection assistant module of a listening result. The multi-screen framework module may be configured to perform possessing such as translation, encapsulation, and the like on a raw input event, to obtain an input event including more information, and send the input event to the WMS, where a clickable area (for example, a control) of each application program, position information of a focus window, and the like are stored in the WMS. Therefore, the WMS may properly distribute input events to specified controls or focus windows. The multi-screen framework module may respond to a received input event, and forward the input event to the WMS, the WMS distributes the input event to a corresponding application, the application sends a registration request to the AMS, and the application starts.

In addition, the multi-screen framework module is further configured to switch an application that is screen projected to an external screen back to a home screen when the user clicks on a most recent task card or a desktop icon. In this case, if the application that is screen projected to the external screen uses a heterogeneous screen projection mode, the foregoing heterogeneous switching module is called when the application is switched back to the home screen, and the heterogeneous screen projection mode is switched to a homogeneous screen projection mode; otherwise, the application cannot be displayed on the home screen. The multi-screen framework module is further configured to remove a security map layer in a lock screen state of the source-end device. In some embodiments, the multi-screen framework module may be further configured to make a related modification to a power key of the mobile phone in a screen projection scenario.

The SystemUI module is a set of UI components that provide the user with system-level information display and interaction, and is mainly configured to implement status bar information display (for example, icon display of a battery, a wi-fi signal, 3G/4G, and the like), a notification panel (for example, a system message and a third party message notification), a recent task bar display panel (for example, displaying a recently used application), and the like. In this embodiment of this application, the SystemUI module is responsible for a notification service, and is configured to stream a message notification of the source-end device to the target device.

It can be understood that, the application framework layer may further include a content provider, a view system, a phone manager, a resource manager, a notification manager, and the like (not shown in FIG. 10). For specific meanings thereof, refer to related technical documents. Details are not described herein.

### (4) Android runtime and system library

The android runtime is responsible for scheduling and management of a system. The android runtime includes a kernel library and a virtual machine. The kernel library includes two parts: One part is a performance function that a programming language (for example, a Java language) needs to invoke, and the other part is a kernel library of the system. The application program layer and the application framework layer are run in a virtual machine. The virtual machine executes programming files (for example, Java files) at the application program layer and the application framework layer as binary files. The virtual machine is used to execute functions such as object life cycle management, stack management, thread management, security and exception management, and garbage collection.

The system library may include a plurality of functional modules, for example, a surface manager (Surface Manager), a media library (Media Libraries), a three-dimensional graphics processing library (for example, OpenGL ES), a two-dimensional graphics engine (for example, SGL), and the like. The surface manager is configured to manage a display subsystem, and provide fusion of two dimensional (2-Dimensional, 2D) and three-dimensional (3-Dimensional, 3D) layers to a plurality of application programs. The media library supports playing and recording in a plurality of common audio and video formats, a static image file, and the like. The media library may support a plurality of audio and video encoding formats, for example, MPEG4, H.264, MP3, AAC, AMR, JPG, and PNG. The three-dimensional graphics processing library is used to implement 3D graphics drawing, image rendering, composition, layer processing, and the like. The 2D graphics engine is a drawing engine for 2D drawing.

### (5) Driver layer

The driver layer is the foundation of an Android operating system, and final functions of the Android operating system are all performed through the driver layer. As shown in FIG. 10, the driver layer includes an underlying driver responsible for work such as discovery, authentication, and connection. For example, the driver layer receives a command issued by a communication module in the application framework layer to perform actions such as connection and disconnection. Specifically, the driver layer includes a WI-FI P2P chip, a Bluetooth chip, or the like, and a WI-FI P2P transmission channel, a Bluetooth transmission channel, or the like may be established. Certainly, the driver layer may further include a hardware driver, for example, a display driver, a camera driver, an audio driver, a sensor driver, a virtual card driver, or the like.

It should be noted that, the schematic diagram of the software structure of the electronic device shown in FIG. 10 provided in this application is only an example, and does not limit specific module division in different layers of the Android operating system. For details, refer to the description of the software structure of the Android operating system in conventional technologies. In addition, the screen projection method and apparatus provided in this application may alternatively be implemented based on another operating system. Examples are not provided one by one in this application.

In some embodiments, as shown in the left half of FIG. 10, a software framework of the target device may include a PC manager, an operating system, and a driver layer. For some of functional modules of the target device and functions of the functional modules, refer to the foregoing source-end device. Details are not described herein.

Specifically, the PC manager of the target device includes a message center module, a second virtualization service module, a second screen projection service module, and a second device discovery connection authentication module.

The message center module is configured to interact with a message and signaling that are of the source-end device to receive a message notification streaming from the source-end device and is responsible for initiating a session instruction (openSession) to the source-end device. Meanwhile, the message center module is further configured to: after establishing a session (session), issue an instruction to start a screen projection service.

For functions of the second virtualization service module, the second screen projection service module, the second device discovery authentication connection module, respectively refer to those of the first virtualization service module, the first screen projection service module, the first device discovery connection authentication module in the foregoing source-end device. A difference lies in that, the second screen projection service module is configured to receive and parse a video stream and related information that are sent by another device, to natively display an application running on the another device.

The operating system of the target device may be a Windows OS (for example, a personal computer) or an Android OS (for example, a tablet computer).

For a driver layer of the target device, refer to that of the foregoing source-end device.

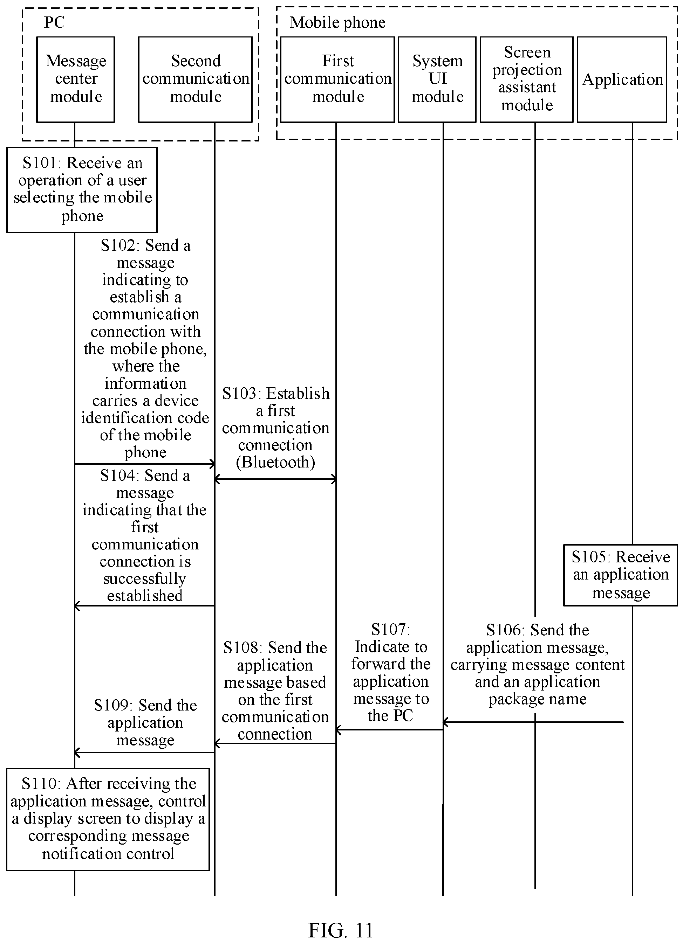

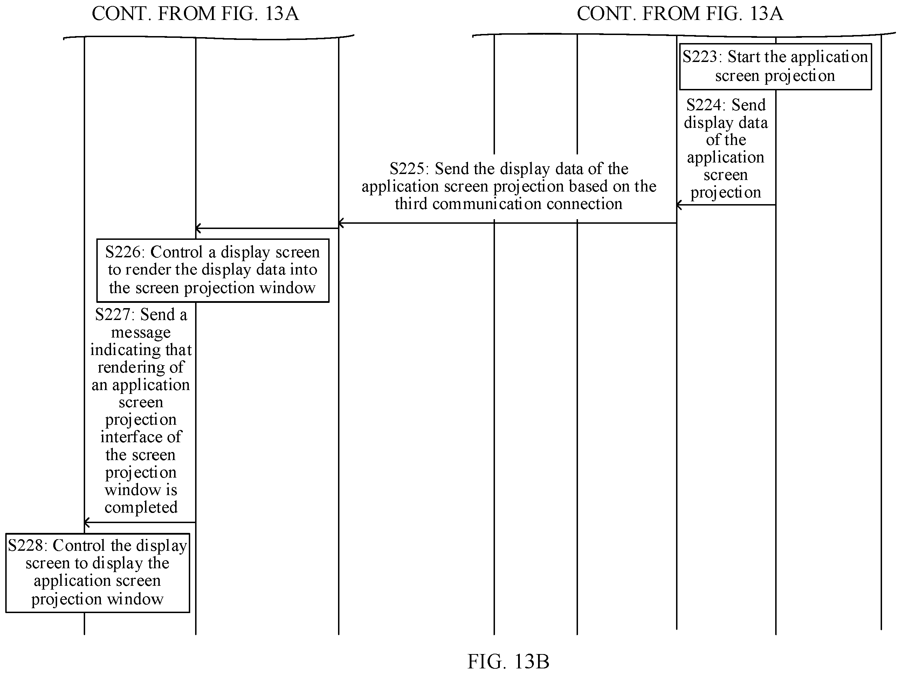

Based on the system structure of the electronic device shown in FIG. 10, specific implementations of the foregoing embodiments are described with reference to FIG. 11 to FIG. 13A and FIG. 13B by using an example in which a mobile phone is the source-end device and a PC is the target device.

FIG. 11 to FIG. 13A and FIG. 13B are sequence diagrams of a screen projection method and apparatus according to an embodiment of this application. It may be understood that FIG. 11 to FIG. 13A and FIG. 13B are a series of sequence diagrams illustrating an interaction flow between various functional modules shown in FIG. 11.

For example, a mobile phone end includes a SystemUI module, a first communication module, a screen projection assistant module, a first virtualization service module, a first screen projection service module, a first security authentication module, a FWK, and an application. A PC end includes a message center module, a second screen projection module, a second communication module, and a second security authentication module. It should be noted that, other functional modules shown in FIG. 10 are also involved in a specific implementation process of a screen projection method and apparatus according to an embodiment of this application, and are not shown in the sequence diagram.

It should be noted that, the mobile phone is in a lock screen or screen-off state unless otherwise stated in this embodiment of this application.
1. The source-end device establishes a first communication connection with the target device, an application message of the source-end device is streamed to the target device, and a message notification control is displayed on the target device (refer to FIG. 11)

S101: The message center module of the PC receives an operation of a user selecting the mobile phone.

It can be understood that S101 is merely an example in which the PC establishes a first communication connection with the mobile phone, the PC detects devices located in a same local area network as the PC, and displays all connectable devices for selection by the user, and the user selects, on the PC, the mobile phone, to start subsequent connection behavior. There may alternatively be another manner to enable the PC and the mobile phone to start to establish the first communication connection, for example, the mobile phone detects devices located in a same local area network as the mobile phone, and displays all connectable devices for selection by the user, and the user selects, on the mobile phone, the PC, to start subsequent connection behavior. In another example, the mobile phone and the PC may establish a near field connection through a "one-touch" function, an NFC function, or the like. This is not limited herein.

S102: The message center module sends a message indicating to establish a communication connection with the mobile phone to the second communication module, where the message carries a device identification code of the mobile phone.

The user selects the mobile phone as a collaborative notification device among nearby available collaborative notification devices found through searching by the PC. The message center module of the PC may send an inter-process communication (inter-process communication, IPC) message to the second communication module after receiving a selection operation entered by the user, where optionally, the IPC message may carry a device name, the device identification code, a MAC address, and the like of the mobile phone, for indicating the second communication module to establish a communication connection with the mobile phone.

S103: The second communication module establishes the first communication connection with the first communication module of the mobile phone.

For example, the first communication connection is a Bluetooth connection (BR connection) for implementing cooperative notification between the PC and the mobile phone, that is, a message on the mobile phone may be streamed onto the PC through a Bluetooth channel.

S104: The second communication module returns a message that the first communication connection is successfully established to the message center module.

S105: An application of the mobile phone receives an application message.

After the PC establishes the first communication connection with the mobile phone, the mobile phone receives an application message pushed by the application installed on the mobile phone. The application message may have different representation forms in the application on the mobile phone (for example, first data), in the SystemUI module, and in the message center module on the PC (for example, a first message), and the application message is a collective name herein.

S106: The application sends the application message to the SystemUI Module, where the application message carries message content and an application package name.

S107: The SystemUI module indicates the first communication module to forward the application message to the PC.

For example, in this embodiment of this application, after the PC establishes the first communication connection with the mobile phone, the SystemUI module streams all messages received by the mobile phone to the PC based on the first communication connection. Streaming may alternatively be selectively performed, for example, a message with a particular flag is streamed to the PC, a message from a particular application is streamed to the PC, or a message determined to be with higher importance is streamed to the PC, and so on. This is not limited herein.

S 108: The first communication module sends the application message to the second communication module based on the first communication connection, where the application message carries the message content and the application package name.

S109: The second communication module sends the application message to the message center module, where the application message carries the message content and the application package name.

S110: The message center module receives the application message, and controls a display screen to display a corresponding message notification control.

After the PC establishes the first communication connection with the mobile phone, the application message received on the mobile phone is streamed to the PC. It may be understood that neither the mobile phone is in an unlocked and screen-on state nor in a lock screen or screen-off state in this case affects streaming of a message notification between the PC and the mobile phone. The PC displays, after receiving the application message, a message notification control associated with the application message.

For example, refer back to FIG. 7A and FIG. 7B. The mobile phone is in a screen-off state, and when the mobile phone receives an application message, the PC displays a message notification control, for example, the message card 702, associated with the application message.

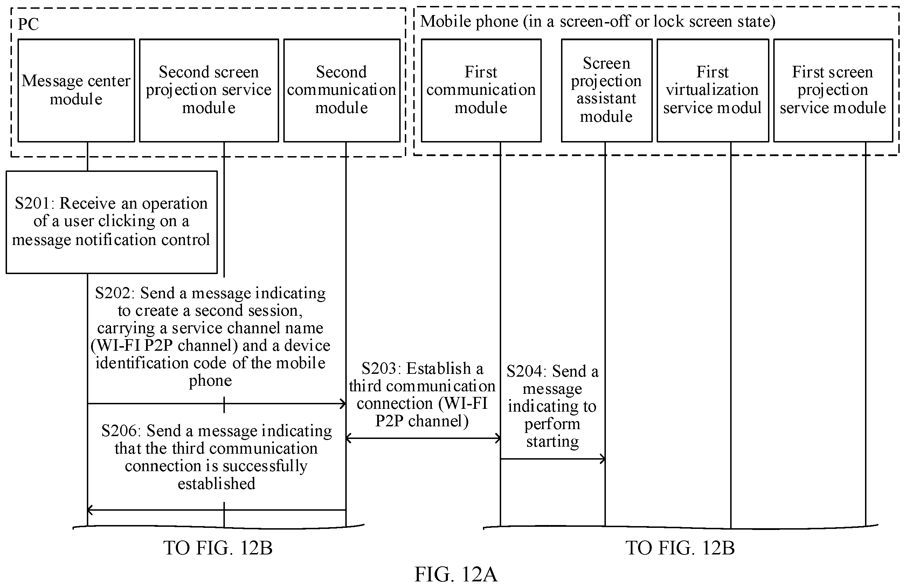

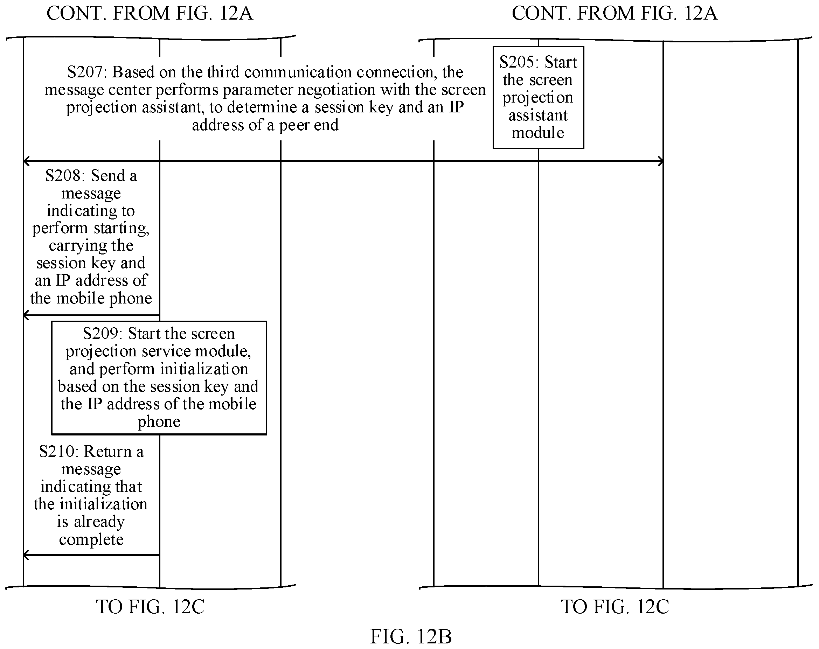

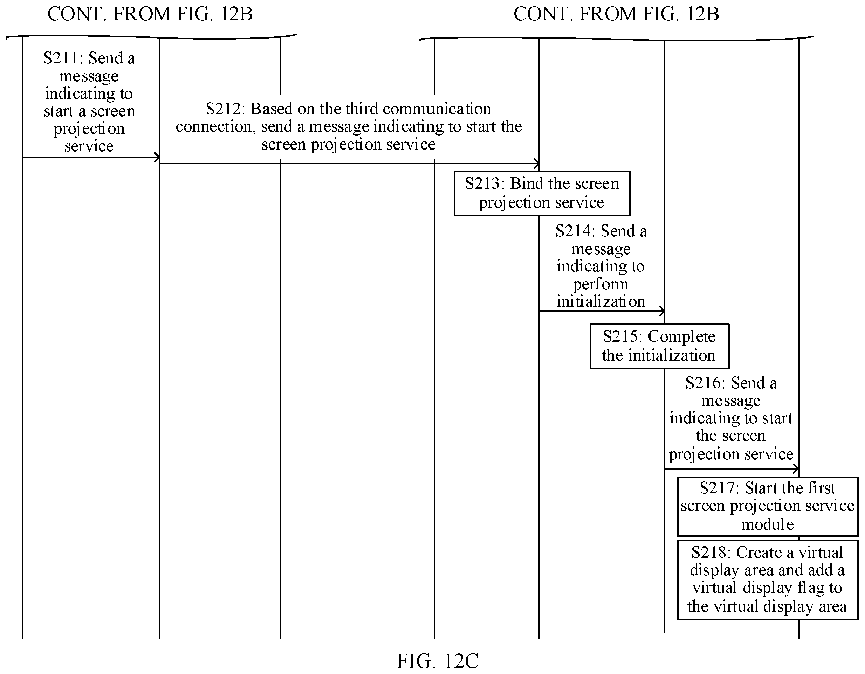

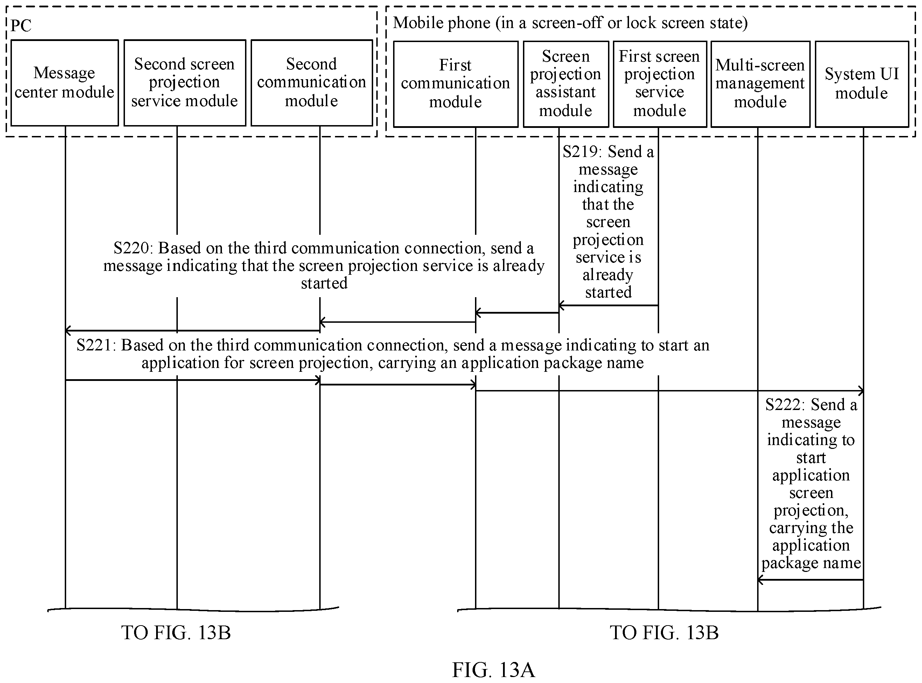

2. The target device receives a user operation of the message notification control when the source-end device is in the lock screen or screen-off state, the target device establishes a third communication connection with the source-end device, the target device sends a request for starting heterogeneous screen projection to the source-end device, and the source-end device displays an application screen projection window on the target device when being in the lock screen or screen-off state (refer to FIG. 12A, FIG. 12B, FIG. 12C, FIG. 13A, and FIG. 13B)

S201: The message center module receives, when the mobile phone is in the lock screen or screen-off state, a first operation of the user clicking on the message notification control.

S202: The message center module sends a message indicating to create a second session to the second communication module, where the message carries a service channel name (WI-FI P2P channel) and the device identification code of the mobile phone.

For example, the service channel name may be the WI-FI P2P channel, the device identification code may be an identification code of the mobile phone, and the instruction to create the second session may instruct the second communication module to establish the WI-FI P2P channel between the PC and the mobile phone to which the device identification code corresponds.

S203: The second communication module establishes the third communication connection with the first communication module.

For example, the third communication connection is a WI-FI P2P connection, providing a data transmission channel for a screen projection service.

It should be noted that, types of the first communication connection, the second communication connection, and the third communication connection that are established between the PC and the mobile phone are not limited to a Bluetooth connection and the Wi-Fi P2P connection, but may be another type of connection manner, provided that a requirement for transmitting data between the PC and the mobile phone is satisfied.

S204: The first communication module sends a message indicating to perform starting to the screen projection assistant module.

S205: The screen projection assistant module starts.

The first communication module is further responsible for interaction with the screen projection assistant, the screen projection assistant module is in an off state when the mobile phone has no screen projection need, and the first communication module triggers, when there is a screen projection need, the screen projection assistant module to be started.

S206: The second communication module returns a message that the third communication connection is successfully established to the message center module.

S207: Based on the third communication connection, the message center module performs parameter negotiation with the screen projection assistant, to determine a session key and an IP address of a peer end.

The parameter negotiation includes negotiating a SessionKey on a service side and obtaining the IP address of a peer-end device. The SessionKey, also referred to as a data encryption key or a working key, is a randomly generated encryption and decryption key that ensures a secure communication session between a user and another computer or two computers, and may be obtained through negotiation between communication users. The SessionKey is usually generated dynamically, only when encryption of session data is required.

S208: The message center module sends a message indicating to perform starting to the second screen projection service module, where the message carries the session key and an IP address of the mobile phone.

S209: The second screen projection service module starts, and performs initialization based on the session key and the IP address of the mobile phone.

S210: The second screen projection service module returns a message that the initialization is already complete to the message center module.

It can be learned from the foregoing that, the screen projection service module provides a screen projection capability and a reverse event control basis capability. A screen projection service on the PC end provides, after being successfully initialized, capability support for receiving and parsing related information sent by the mobile phone end, to enable an application running on the mobile phone end to be displayed on the PC end. In addition, the reverse event control basis capability provides support for implementing heterogeneous screen projection. Therefore, the screen projection service module needs to be initialized before performing a heterogeneous screen projection service, to ensure that the screen projection capability and the reverse event control basis capability are normally provided.

S211: The message center module sends a message indicating to start the screen projection service to the second screen projection service module.

S212: Based on the third communication connection, the second screen projection service module sends a message indicating to start the screen projection service to the screen projection assistant module.

It should be noted that, as shown in the figure, step S207 includes the following: The second screen projection service module sending a message to the second communication module, the second communication module transmits the message to the first communication module through the third communication connection, and the first communication module sends the message to the screen projection assistant module. For convenience of description, the following "based on the third communication connection" each includes a data transmission process between the first communication module and the second communication module, and details are not described below.

S213: The screen projection assistant module binds the screen projection service.

It can be understood that a screen projection management module in the screen projection assistant module binds a related screen projection service to manage screen projection transaction.

S214: The screen projection assistant module sends a message indicating to perform initialization to the first virtualization service module.

It can be understood that a virtualization service initialization module in the screen projection assistant module is configured to indicate the virtualization service module to perform initialization.

S215: The first virtualization service module completes the initialization.

The first virtualization service module is responsible for audio/video virtualization in the screen projection service, and the first virtualization service module on the mobile phone end interacts with the second virtualization service module (not shown in FIG. 13A and FIG. 13B) on the PC end, so that in a screen projection process, a mobile phone application that is screen projected onto the PC can use a Speaker, a Mic, a Camera of the PC, and a generated audio and video data stream is transmitted between the mobile phone and the PC, thereby implementing functions such as answering or making an audio/video call during screen projection.

S216: The first virtualization service module sends a message indicating to start the screen projection service to the first screen projection service module.

S217: The first screen projection service module starts.

S218: The first screen projection service module creates a virtual display and adds a virtual display flag to the virtual display.

It should be noted that, the screen projection service module is an important functional module for implementing a heterogeneous screen projection mode. A specific implementation is that the first screen projection service module on the mobile phone end adds Flag1 when creating the virtual display area: VIRTUAL_DISPLAY_FLAG_OWN_CONTENT_ONLY (virtual display flag), used to enable a screen projection window on the PC to display only its own content but not mirror content displayed by a display screen of the mobile phone, to ensure that the content displayed by the mobile phone does not affect the content displayed in the screen projection window of the PC.

In this way, two objectives can be achieved. First, the mobile phone displays a black screen or lock screen interface when the mobile phone is in a lock screen or screen-off state, but the screen projection window of the PC does not display a black screen or lock screen interface. Second, in a using process of the mobile phone, the mobile phone displays another application interface or desktop without affecting display of the screen projection window of the PC, and the screen projection window of the PC can maintain its own content without synchronizing the content with the content displayed by the mobile phone. Meanwhile, the reverse event control basis capability provided by the screen projection service module can achieve, on a computer end, reverse control of the mobile phone end. Certainly, the implementation of the heterogeneous screen projection mode further requires that the second screen projection service module on the PC end interact with the first screen projection service module on the mobile phone end. This is not shown in FIG. 12A, FIG. 12B, and FIG. 12C.

It should be noted that, if the mobile phone is in the lock screen or screen-off state, the Android system overlays a lock screen layer on the display screen of the mobile phone over VirtualDispaly by default even if an application layer to which a currently executed Activity corresponds is already rendered to the screen projection window. A representation is that the screen projection window on the display screen of the PC is also overlaid by the lock screen layer, that is, the screen projection window on the PC also displays the lock screen layer, and the screen projection is abnormal. However, the virtual reality area to which the Flagl is added does not mirror the content displayed on the display screen of the mobile phone to the screen projection window of the PC, implementing heterogeneous screen projection. This resolves the problem of the screen projection window displaying the black screen or lock screen interface shown in FIG. 5 and FIG. 6A and FIG. 6B.

S219: The first screen projection service module sends a message that the screen projection service is already started to the screen projection assistant module.

S220: Based on the third communication connection, the first screen projection assistant sends the message that the screen projection service is already started to the message center module.

S221: Based on the third communication connection, the message center module sends a message indicating to start an application for screen projection to SystemUI, carrying an application package name.

S222: The SystemUI sends a message indicating to start application screen projection to the FWK, where the message carries the application package name.

S223: The FWK starts the application screen projection.

It should be noted that, when the mobile phone is in the lock screen or screen-off state, to ensure that an application interface can be normally displayed in a heterogeneous screen projection window of the PC, the FWK is required to control visibility of a heterogeneous screen projection window of an application. It can be understood that a specific implementation process of the FWK involves functional interaction between embedded classes of the FWK. For an interaction procedure, refer to the following. Details are not described herein.

S224: The FWK sends display data of the application screen projection to the first screen projection service module.

S225: The first screen projection service module sends the display data of the application screen projection to the second screen projection service module based on the third communication connection.

S226: The second screen projection service module controls the display screen to render the display data into the screen projection window.

S227: The second screen projection service module sends a message that rendering of an application screen projection interface of the screen projection window is completed to the message center.

S228: The message center module controls the display screen to display an application screen projection window.

To this end, the PC displays an application screen projection window to which an application message corresponds, and the screen projection is successful when the mobile phone is in the lock screen and screen-off state.

For example, refer back to FIG. 7A and FIG. 7B. When the mobile phone is in the screen-off state, when the PC receives an operation of the user clicking on the message card 702, the PC displays the screen projection window 703 to which the foregoing social application corresponds, used to display the application interface 704 to which the application message corresponds. The foregoing application screen projection window may be the screen projection window 703 used to display the application interface 704.

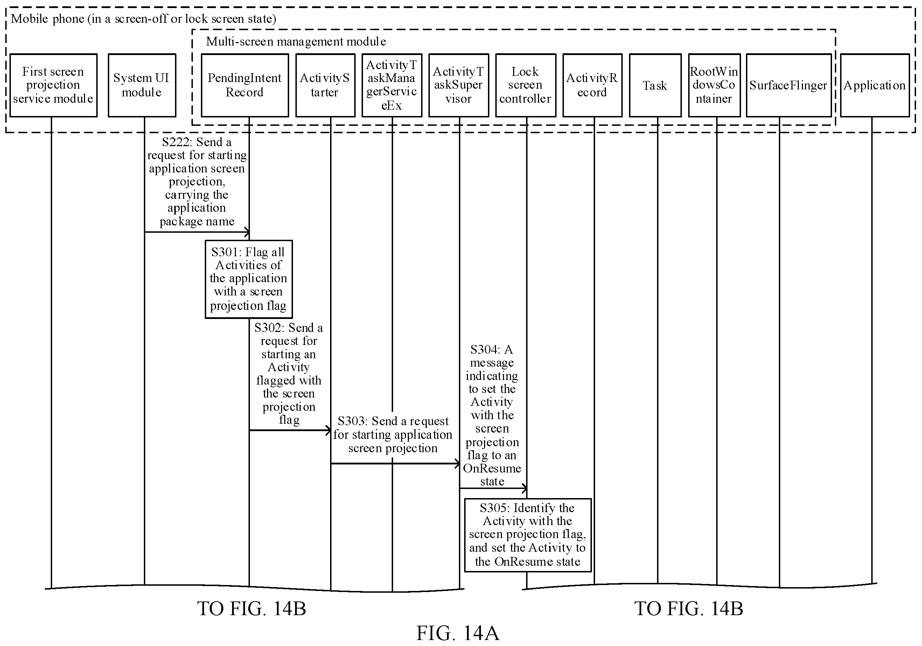

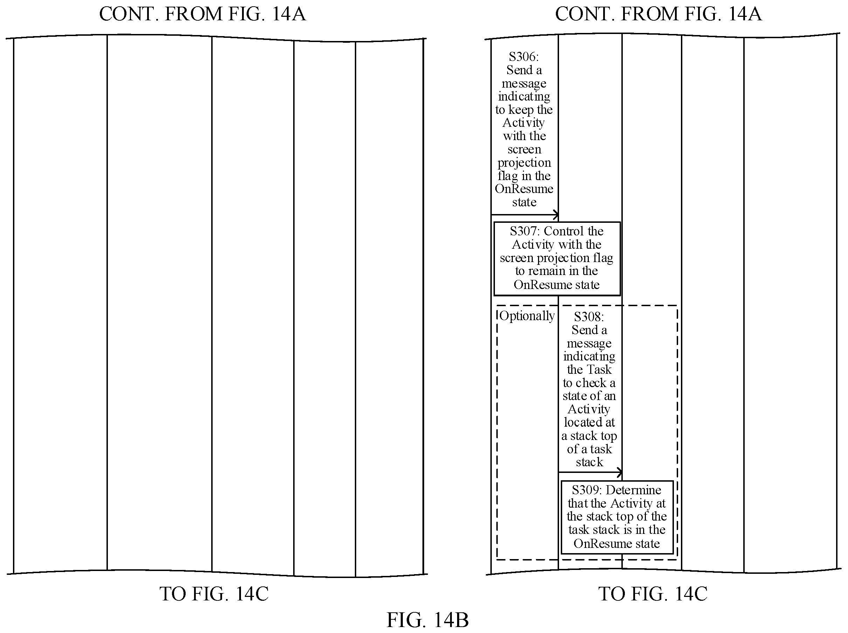

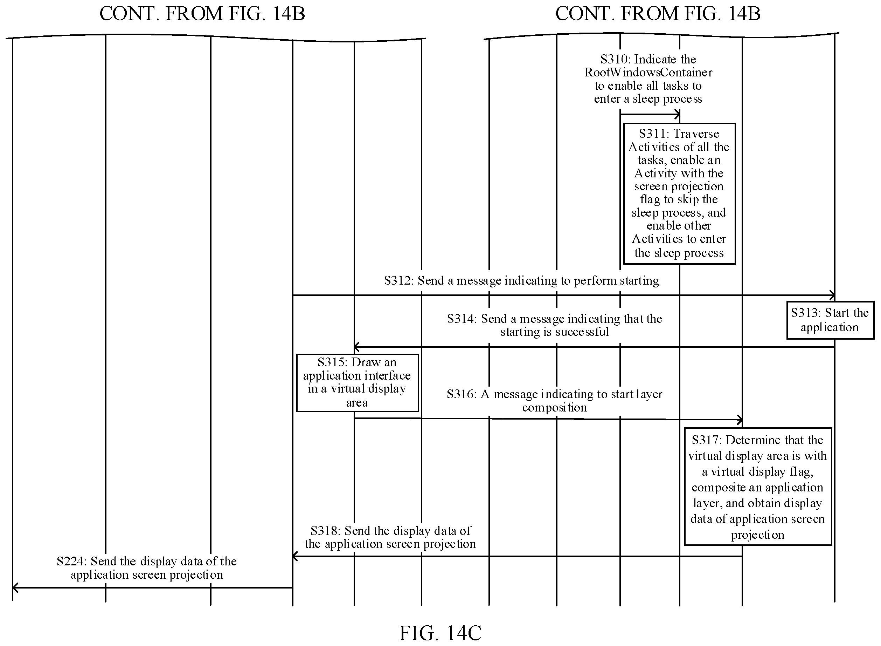

A specific implementation process in which the FWK starts the application screen projection in the foregoing embodiment is described below with reference to FIG. 14A, FIG. 14B, and FIG. 14C.

Since the Activity to which the application message corresponds enters a sleep state when the mobile phone is in the lock screen or screen-off state, and a life cycle thereof goes from an OnResume state (visible to the user and may interact with the user) to an OnPause state (inactive state), the application interface cannot be normally displayed when a screen is projected onto the PC. To realize application screen projection, it needs to be ensured that an Activity of an application skips the sleep state, and a currently executed Activity remains in the OnResume state, to ensure visibility of a screen projection window to which the application corresponds.

FIG. 14A, FIG. 14B, and FIG. 14C illustrate a specific implementation process of step S223 in FIG. 13B. As shown in FIG. 14A, FIG. 14B, and FIG. 14C, an inside of the FWK also includes embedded classes such as PendingIntentRecord (asynchronous processor), Activity Starter (activity starter), ActivityTaskManagerServiceEx (activity stack management server), ActivityTaskSupervisor (activity stack manager), KeyguardController (lock screen controller), ActivityRecord (activity recorder), Task (task stack), RootWindowsContainer (root window container), and SurfaceFlinger (layer compositor).

It can be understood that step S301 to step S318 shown in FIG. 14A, FIG. 14B, and FIG. 14C are interposed between step S222 and step S224 shown in FIG. 13A and FIG. 13B.

S222: The SystemUI module sends a request for starting application screen projection to the PendingIntentRecord, where the request carries the application package name (the SystemUI sends a message indicating to start the application screen projection to the FWK, where the message carries the application package name).

S301: The PendingIntentRecord flags all Activities of the application with a screen projection flag.

It should be noted that, only an Activity added with a screen projection flag is started for screen projection, and step S301 is equivalent to an Activity filter, to obtain, through filtering, all Activities of the application, so that all the Activities of the application for which screen projection needs to be started are flagged with a special flag.

For example, an application message 1 corresponds to Activityl, and the PendingIntentRecord flags the Activityl with a heterogeneous screen projection flag Flag2: Intent.java ---> FLAG_HW_ACTIVITY_PC_CAST_NOTIFICATION = 0x04000000. The application may further include Activity2 and Activity3, which are also flagged with the heterogeneous screen projection flag Flag2. Since the user can control, in an application screen projection window after the application is screen projected, another Activity for executing the application, all Activities of the application need to be obtained through filtering, to perform the following related steps.

S302: The PendingIntentRecord sends a request for starting an Activity flagged with the screen projection flag to the Activity Starter, where the request carries the application package name.

S303: The ActivityStarter sends a request for starting application screen projection to the ActivityTaskSupervisor.

S304: The ActivityTaskSupervisor sends a message indicating to set the Activity with the screen projection flag to the OnResume state to the KeyguardController.

It should be noted that, the ActivityTaskSupervisor listens if the Activity is in the OnResume state by invoking the KeyguardController, and if the Activity is in the OnResume state, it indicates that the application screen projection window to which the Activity corresponds is visible to the user and may interact (OnResume state) with the user after being screen projected to the PC; if the Activity is in an paused state (OnPause state), it indicates that the application screen projection window to which the Activity corresponds is in the background after being screen projected to the PC and the user cannot perform an operation. The OnResume state and the OnPause state are two states in the life cycle of the Activity. When the activity is in the OnResume state, the activity is in an activated state in which the activity is visible and can interact with the user, and the user may obtain a focus of the activity; when the Activity is in the OnPause state, the Activity is covered by another Activity that is transparent or in a Dialog style, the Activity remains being connected to a Window Manager in this case, a system continues to maintain an internal state thereof, and the Activity is still visible, but the Activity already loses the focus and therefore cannot interact with the user. When the mobile phone is in the lock screen or screen-off state, in a procedure of starting the Activity, the AMS component switches the life cycle of the Activity to the onPause state, causing the Activity to fail to interact with the user, and consequently, the screen projection is abnormal.

S305: The KeyguardController identifies the Activity with the screen projection flag, and sets the Activity to the OnResume state.

The KeyguardController is a lock screen controller that identifies the Activity with the screen projection flag and returns "true", to indicate to set the Activity to the OnResume state. This ensures that the application screen projection window to which the Activity with the screen projection flag corresponds is visible on the target device when the source-end device is in the lock screen state.

S306: The KeyguardController sends a message indicating to keep the Activity with the screen projection flag in the OnResume state to the ActivityRecord.

S307: The ActivityRecord controls the Activity with the screen projection flag to remain in the OnResume state.

S308: The ActivityRecord sends a message indicating to perform checking to the Task, to indicate the Task to check a state of an Activity located at a stack top of a task stack.

S309: The Task determines that the Activity at the stack top of the task stack is in the OnResume state.

It should be noted that, one application may correspond to one or more Activities, and the one or more Activities may be stored in one or more task stacks. The task stack follows a last-in-first-out rule, and the Activity at the task top of the task stack is executed first. To ensure that the application screen projection window to which the Activity to be executed corresponds is visible in the foreground, it needs to be ensured that the Activity at the stack top is in the OnResume state.

It can be understood that step S308 and step S309 are equivalent to a fault tolerance mechanism that checks whether the Activity at the stack top of the task stack is in the OnResume state, and that these two steps are optional, that is, in some other embodiments, S308 and S309 may alternatively be excluded.

S310: The Task indicates the RootWindowsContainer to control all tasks to enter the sleep state.

S311: The RootWindowsContainer traverses Activities of all the tasks, skips an Activity with the screen projection flag, and controls other Activities to enter the sleep state.

It should be noted that, except for the activity with the screen projection flag skipping a sleep process, the other activities are placed in the sleep state. Therefore, the RootWindowsContainer needs to traverse the Activities to which all the tasks correspond, obtains, through filtering, the Activity with the screen projection flag, and returns "false", to indicate the Activity not to go to sleep; and returns "true" for the other Activities, to enable the Activities to enter the sleep process.

For example, a heterogeneous screen projection flag is added to both of Activityl and Activity2 in a same task stack, and the RootWindowsContainer enables the Activityl and the Activity2 to skip the sleep process; and Activity3 and Activity4 to which the heterogeneous screen projection flag is not added are placed in the sleep state.

When the Activityl is at the stack top of the task stack, the Task checks a state of the Activityl, to ensure that the Activityl is in the OnResume state, so that the Activityl is visible to the user on the PC and can be operated by the user in the foreground after heterogeneous screen projection is performed on the Activityl.

After the Activityl is executed, the Activity2 that does not have a sleep advances to the stack top of the task stack, and the Task checks a state of the Activity2, to ensure that the Activity2 is in the OnResume state, so that the Activity2 is visible to the user on the PC and can be operated by the user in the foreground after heterogeneous screen projection is performed on the Activity2. An execution procedure of another Activity to which the heterogeneous screen projection flag is added is implemented by analogy, and details are not described herein. However, an Activity to which the heterogeneous screen projection flag is not added is placed in a sleep state by the RootWindowsContainer and is not started to an outer screen for display.

S312: The ActivityStarter sends a message indicating to perform starting to the application.

It can be understood that the ActivityStarter also sends a request for starting the application when sending a request for starting application screen projection in step S304, that is because implementation of heterogeneous screen projection of the application is based on a premise that the application is started on the mobile phone side. Therefore, step S223 includes interaction of the FWK with the application layer, that is, the Activity Starter in the FWK calls up an application at the application program layer.

S313: The application starts.

S314: The application sends a message that the starting is successful to the Activity TaskManagerServiceEx.

S316: The ActivityTaskManagerServiceEx sends a message indicating to start layer composition to the SurfaceFlinger.

S317: The SurfaceFlinger determines that the virtual display area is with a virtual display flag, composites an application layer in the virtual display area, and obtains corresponding display data.

A role of the SurfaceFlinger is to receive graphical display data from a plurality of sources, composite the data, and then send the data to a display device. For example, an application is opened. Commonly, there are three layers of display: a statusbar at the top, a navigation bar at the bottom or a side, and an interface of the application, where each layer is individually updated and rendered. These interfaces are composited by the SurfaceFlinger as one piece of application layer display data refreshed to hardware for display.

In this embodiment of this application, the SurfaceFlinger determines that the virtual display area is with the virtual display flag, obtains only a layer in the virtual display area in this case when the application layer is being composited, and obtains no layer in another display area for composition with the layer. In this way, the foregoing heterogeneous screen projection mode can be achieved, that is, the composited application layer is related to only the layer in the virtual display area. Refer back to FIG. 4. The SurfaceFlinger does not obtain a layer in a visible display area. Therefore, an interface displayed in the screen projection window of the PC is not affected even if the visible display area includes a lock screen interface or another application interface. That is because the SurfaceFlinger obtains only the layer in the virtual display area and transfers, in a particular manner, the layer to the screen projection window of the PC for display.

S318: The SurfaceFlinger sends the display data to the first screen projection service module.

It can be understood that the application layer may include an application interface to which the currently executed Activity corresponds. The foregoing display data may include information such as different display objects at the application layer, and display positions, sizes, and the like of the display objects in the virtual display screen.

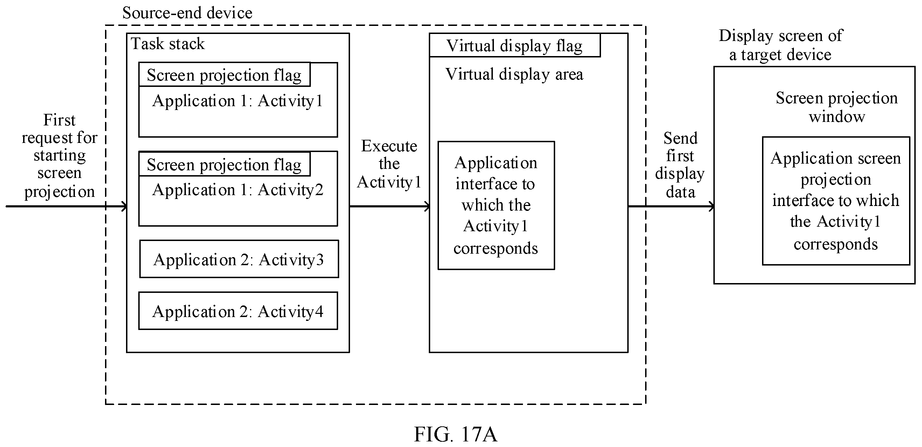

It should be noted that, the virtual display area is the virtual display area that is flagged with the flag Flagl and that is created in step S218. Content in the virtual display area is invisible to the user, and the mobile phone may use the virtual display area as a canvas that occupies specific storage space. For example, FIG. 17A is a diagram of a process of starting a screen projection window of a first application. When an application package name carried by a first request for starting screen projection corresponds to an application 1, the PendingIntentRecord flags all Activities of the application 1 with a screen projection flag, as shown in a task stack (created by Task) in FIG. 17A. When the Activityl (where the Activityl corresponds to a first message) of the application 1 is executed, as shown in FIG. 17A, the mobile phone draws a first application interface to which the Activity 1 corresponds in the virtual display area, and the SurfaceFlinger determines that the virtual display area is with the virtual display flag, obtains only a first application interface layer in the virtual display area in this case, and generates corresponding first display data to be sent to the target device.

After receiving the first display data, the target device draws and renders an application screen projection interface corresponding to the first message of the first application based on the first display data for display on a screen projection window of the target device. For details, refer to step S225 to S228 shown in FIG. 13B and refer to FIG. 7A and FIG. 7B. In this case, the screen projection window of the target device displays the application screen projection interface corresponding to the first display data.

When the Activity2 of the application 1 is executed (where the Activity2 is pushed to the stack top of the task stack), the mobile phone draws a second application interface to which the Activity2 corresponds in the virtual display area, and the SurfaceFlinger determines that the virtual display area is with the virtual display flag, obtains only a second application interface layer in the virtual display area in this case, and generates corresponding second display data to be sent to the target device. Subsequently, the screen projection window of the target device displays an application screen projection interface corresponding to the second display data, that is, is switched from an application screen projection interface corresponding to the first display data to the application screen projection interface corresponding to the second display data, to complete switching between different application interfaces of the application 1 in the screen projection window.

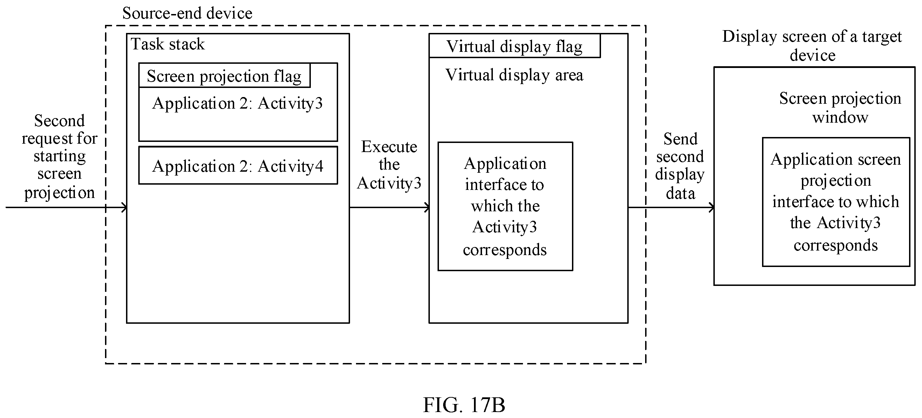

For example, in some embodiments of this application, FIG. 17B is a diagram of a process of starting a screen projection window of a second application. In a screen projection method provided in this embodiment of this application, the source-end device further receives a second message (also referred to as second data) from the second application when the screen projection window of the target device displays the application screen projection interface to which the first application corresponds (for example, the screen projection window of the target device displays the application screen projection interface corresponding to the second display data). After the second message is streamed to the target device, the target device displays a message notification control to which the second message corresponds. After receiving an operation of the source-end device clicking on the message notification control, the target device sends a second request for starting screen projection to the source-end device. In the lock screen or screen-off state of the source-end device, the first screen projection service module receives the second request, creates a second virtual display area (VirtualDispaly2) and adds the virtual display flag. When Activity3 of the application 2 is executed (where the Activity3 corresponds to the second message), as shown in FIG. 17B, the mobile phone draws a third application interface to which the Activity3 corresponds in the virtual display area, and the SurfaceFlinger determines that the virtual display area is with the virtual display flag, obtains only a third application interface layer in the virtual display area in this case, and generates corresponding third display data to be sent to the target device.

After receiving the third display data, the target device draws and renders an application screen projection interface corresponding to the second message of the second application based on the third display data for display on the screen projection window of the target device. For details, refer to step S225 to S228 shown in FIG. 13B and refer to FIG. 7A and FIG. 7B. For example, the application screen projection interface, corresponding to the second display data, displayed in the screen projection window of the target device, is switched to the application screen projection interface corresponding to the third display data, to complete switching between application interfaces of different applications (for example, the first application and the second application) in the screen projection window.

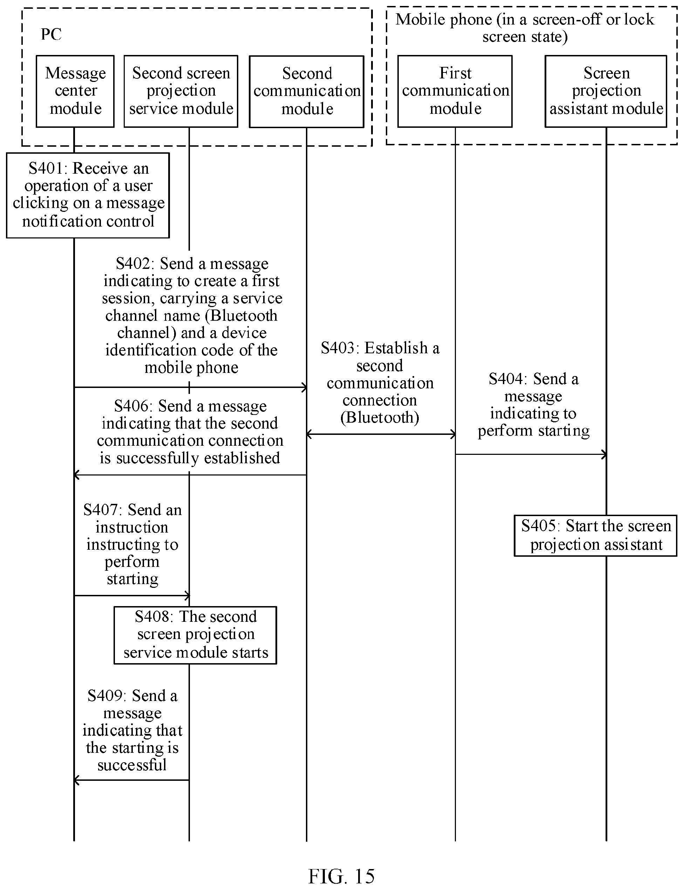

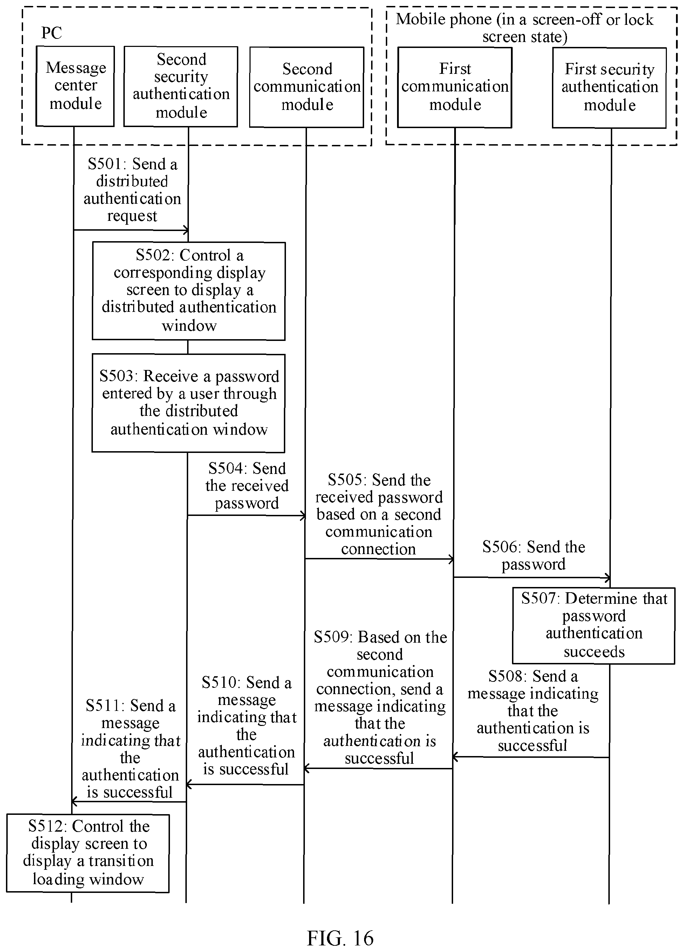

Specific implementations of the foregoing embodiments are described below with reference to FIG. 15 and FIG. 16, if the source-end device enables a security authentication function, in some other embodiments.

Refer back to FIG. 7A and FIG. 7B. In some other embodiments, optionally, the source-end device may enable a security authentication function to secure privacy of the source-end device that is screen locked or screen-off. Before displaying the application interface 704, the screen projection window 703 may further display the security authentication interface 705, and may further display the transition loading interface 706. In this case, the message center module first triggers a security authentication mechanism after receiving the first operation of the user clicking on the message notification control in step S201. For a specific implementation process, refer to FIG. 14A, FIG. 14B, and FIG. 14C and the following description.
1. The target device receives a user operation of the message notification control when the source-end device is in the lock screen or screen-off state, and the source-end device establishes a second communication connection with the target device (refer to FIG. 15)

S401: A message center module receives, when a mobile phone is in a lock screen or screen-off state, a second operation of a user clicking on a message notification control.

It should be noted that, the second operation herein and the first operation in step S201 in FIG. 12A, FIG. 12B, and FIG. 12C are each an operation of the user clicking on the message notification control, and in this embodiment, due to addition of the security authentication mechanism, the steps shown in FIG. 15 and FIG. 16 are added before the establishment of the third communication connection in FIG. 12A, FIG. 12B, and FIG. 12C is triggered.

It can be understood that security authentication is not performed by the user when the mobile phone is screen locked or screen-off, and in this case, privacy security of the user is not guaranteed if the PC is allowed to directly start screen projection without the security authentication. Therefore, in some embodiments, the security authentication mechanism may be triggered before the PC end starts screen projection, to ensure privacy security of the user.

Since the screen projection is directly started on the PC end in this embodiment of this application, the security authentication mechanism is triggered on the PC end. However, password authentication is distributed on the mobile phone end. Therefore, the second security authentication module of the PC end needs to send authentication information (password) received on the PC end to the first security authentication module of the mobile phone end for password authentication, and the mobile phone end returns an authentication result to the PC end. Therefore, a transmission channel needs to be established first for signaling transmission for security authentication between the mobile phone and the PC.

S402: The message center module sends a message indicating to create a first session to the second communication module, where the message carries a service channel name (Bluetooth channel) and a device identification code of the mobile phone.

For example, the service channel name may be the Bluetooth channel, the device identification code may be an identification code of the mobile phone, and the instruction to create the first session may instruct the second communication module to establish the Bluetooth channel between the PC and the mobile phone to which the device identification code corresponds.

S403: The second communication module establishes the second communication connection (Bluetooth connection) with the first communication module.

For example, the second communication connection may be the Bluetooth connection (BR connection), to provide a signaling transmission channel for security authentication.

S404: The first communication module sends a message indicating to perform starting to the screen projection assistant.

S405: The screen projection assistant starts.

S406: The second communication module returns a message that the second communication connection is successfully established to the message center module.

S407: The message center module sends a message indicating to perform starting to the second screen projection service module.

S408: The second screen projection service module starts.

S409: The second screen projection service module returns a message that the starting is successful to the message center module.

It should be noted that, in this case, the screen projection assistant on the mobile phone end and the second screen projection service module on the PC end already start, to provide a necessary function for a subsequent screen projection service.

2. The target device sends a security authentication request to the source-end device, and the source-end device returns an authentication success result (refer to FIG. 16)

S501: A message center module sends a security authentication request to a second security authentication module of a PC.

S502: The second security authentication module controls a display screen of the PC to display a security authentication window.

For example, refer back to the security authentication window shown in FIG. 7A and FIG. 7B. That is, the security authentication interface 705 is displayed in the screen projection window 703, and the user may enter a password in the security authentication window.

It can be understood that a security authentication manner is not limited to entering a password for security authentication, for example, a fingerprint is collected for verification in a fingerprint unlock scenario; and voice is collected for verification in a voice unlock scenario. This is not limited herein, and password unlocking is merely used as an example.

S503: The second security authentication module receives the password entered by the user through the security authentication window.

S504: The second security authentication module sends the password to the second communication module.

S505: The second communication module sends the password to the first communication module based on the second communication connection.

S506: The first communication module sends the password to the first security authentication module of the mobile phone.

It can be understood that a security authentication mode may alternatively be fingerprint authentication performed by the user by inputting a fingerprint, voice authentication performed by the user by inputting a voice, or the like, and this is not limited. The first security authentication module receives the password collected on the PC end, compares the password with an unlock password set by the user on the mobile phone end, and if the password collected on the PC end matches with the unlock password set on the mobile phone end, the authentication succeeds; otherwise, the authentication fails.

S507: The first security authentication module successfully performs password authentication.

A password authentication success result is returned to the PC end when the password authentication succeeds on the mobile phone end. A password authentication failure result is returned to the PC end when the password authentication fails on the mobile phone end. Optionally, the PC end receives the password authentication failure result, provides, to the user, a prompt indicating that a password error occurs in the security authentication window, and then initiates the security authentication request again to the mobile phone end for password verification after the user re-enters a password. Certainly, it may be set that authentication is suspended if a quantity of authentication failures exceeds a password error quantity threshold, where the password error quantity threshold may be set by the user or may be a default value.

S508: The first security authentication module sends a message indicating that the authentication is successful to the first communication module.

S509: The first communication module sends, based on the second communication connection, the message indicating that the authentication is successful to the second communication module.

S510: The second communication module sends a message indicating that the authentication is successful to the second security authentication module.

S511: The second security authentication module sends a message indicating that the authentication is successful to the message center module.

S512: The message center module controls the display screen to display the transition loading window.

For example, refer back to the transition loading window shown in FIG. 7A and FIG. 7B. That is, the transition loading interface 706 is displayed in the screen projection window 703. It can be understood that application screen projection steps of FIG. 12A, FIG. 12B, and FIG. 12C to FIG. 15 are enabled when the authentication is successful, successful application screen projection requires specific time, and therefore there is a specific time span between display of the security authentication window and display of the application screen projection window. Optionally, to improve impression and experience of the user, the transition loading window may be started for display on the target device after the security authentication is successful, to provide, to the user, a prompt indicating that the security authentication already succeeds and that the application screen projection is being started. When the application screen projection is successfully started through the application screen projection steps of FIG. 12A, FIG. 12B, and FIG. 12C to FIG. 15, the transition loading interface displayed in the screen projection window 703 is switched to the application interface.

In some other embodiments, the target device first determines, after receiving a user indication indicating a corresponding source-end device to start application screen projection, whether security authentication is required, for example, whether the source-end device performs screen projection on the target device for the first time; for another example, whether an unlock password is set for the source-end device.

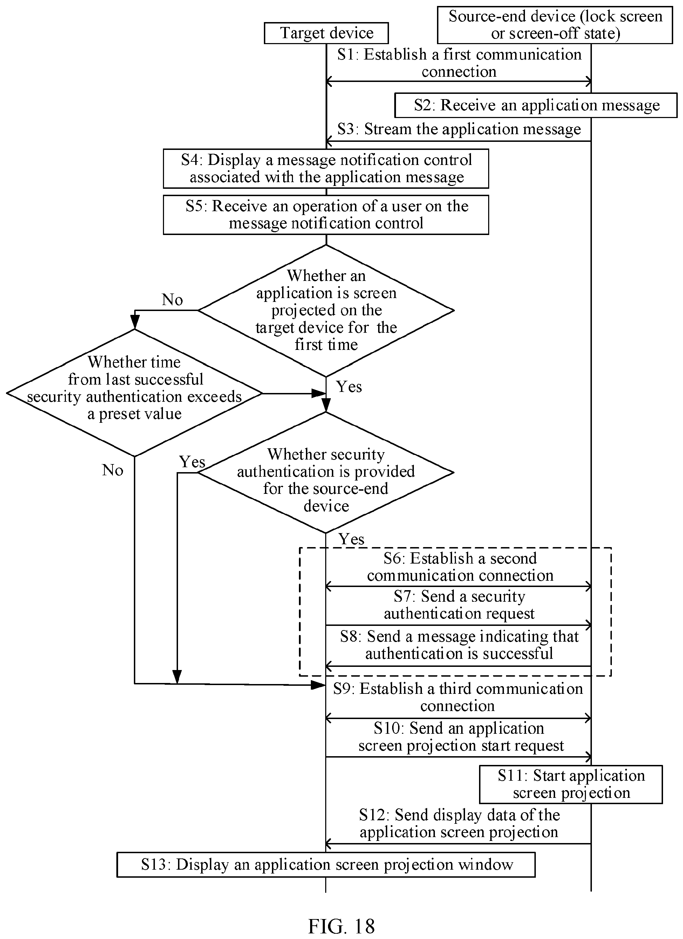

The following describes a screen projection method provided in an embodiment of this application. In the method, a determining mechanism is added when a target device receives an operation of a user on a message notification control. FIG. 18 is a diagram of an example of a procedure in which security authentication determining is added. The method may include but is not limited to the following steps.

S1: A source-end device establishes a first communication connection with a target device.

S2: The source-end device receives an application message.

S3: The application message of the source-end device is streamed to the target device.

S4: The target device displays a message notification control associated with the application message.

S5: The target device receives an operation of a user on the message notification control when the source-end device is in a lock screen or screen-off state.

S6: The source-end device establishes a second communication connection with the target device.

S7: The target device sends a security authentication request to the source-end device.

S8: The source-end device sends a message indicating that authentication is successful to the target device.

S9: The target device establishes a third communication connection with the source-end device.

S10: The target device sends a request for starting application screen projection to the source-end device.

S11: The source-end device starts application screen projection.

S12: The source-end device sends display data of the application screen projection to the target device.

S13: The target device displays an application screen projection window.

In an implementation form, a determining mechanism about whether security authentication needs to be performed is added between step S5 and step S6. In a scenario in which the source-end device performs screen projection on the target device for the first time, if an unlock password is not set for the source-end device, the target device does not need to display an unlock verification interface in the screen projection window, but indicates the source-end device to directly perform heterogeneous screen projection. In this scenario, the target device may directly display "prompt information indicating to wait". After the source-end device renders an application interface to be screen projected, the target device controls the screen projection window to display the application interface to be screen projected.

In a scenario in which the source-end device performs screen projection on the target device for the first time, if an unlock password is set for the source-end device, that is, password authentication also needs to be performed before the user directly uses the source-end device. In this case, security authentication may be triggered after the target device determines that the source-end device is conditional for screen projection. For description of the security authentication, refer to the foregoing, and details are not described herein.

In addition, it should be noted that, if the source-end device performs heterogeneous screen projection on the target device for the first time, and the unlock password is set, a security authentication mechanism is triggered when the target device indicates the source-end device to perform heterogeneous screen projection, regardless of whether the source-end device is in a lock screen and screen-off state or an unlocked state.

It should be noted that, that the source-end device starts screen projection on the target device for the first time may refer to that the source-end device starts heterogeneous screen projection on the same target device for the first time, or may refer to that heterogeneous screen projection is started for the first time during a use period from time at which the target device is powered on to next shutdown. For the second explanation, specifically, if the target device is powered on for the first time, and the target device is powered off for the first time after a period of use, the first power on to the first power off is a first period of use. If the target device is powered on for the second time, and the target device is powered off for the second time after a period of use, the second power on to the second power off is a second period of use. During the first period of use, that the source-end device starts heterogeneous screen projection on the target device for the first time belongs to starting "for the first time" in the second explanation. During the second period of use, that the source-end device starts heterogeneous screen projection on the target device for the first time also belongs to starting "for the first time" in the second explanation.

In an implementation, in a scenario in which the source-end device does not perform screen projection on the target device for the first time, that is, in a scenario in which the source-end device once started heterogeneous screen projection on the same target device, or the source-end device once started heterogeneous screen projection on the target device during a use period from time at which the target device is powered on to next shutdown.

For the second explanation, specifically, during a first period of use, the source-end device starts heterogeneous screen projection on the target device for the first time, and when the source-end device starts heterogeneous screen projection on the target device for the second time, the target device determines that the source-end device once started heterogeneous screen projection on the target device. The same is true for the third time, the fourth time, and the like thereafter. During a second period of use, the source-end device starts heterogeneous screen projection on the target device for the first time, and it can be learned from the foregoing that, in this case, the target device determines that the source-end device starts heterogeneous screen projection on the target device for the first time. When the source-end device starts heterogeneous screen projection on the target device for the second time, the target device determines that the source-end device once started heterogeneous screen projection on the target device. The same is true for the third time, the fourth time, and the like thereafter. If the source-end device once started heterogeneous screen projection on the target device, to reduce a quantity of times the user enters a password while privacy security of the user is ensured, optionally, the target device may first determine whether time from last successful security authentication exceeds a preset duration threshold.

For example, security authentication may not be re-performed when the time from the last successful security authentication does not exceed the preset duration threshold. It should be noted that, the preset duration threshold may be a default value or a value set by the user, and indicates that a screen projection connection between the source-end device and the target device still satisfies the need to protect privacy security of the user during the time range. Therefore, when determining that the time from the last successful security authentication does not exceed the preset duration threshold, the target device directly starts screen projection without displaying an unlock verification interface. This can avoid a tedious operation caused by repeatedly requiring the user to enter the password, and can improve convenience of using heterogeneous screen projection by the user while ensuring the privacy security of the user.

For another example, security authentication needs to be re-performed when the time from the last successful security authentication exceeds the preset duration threshold. It can be understood that, when determining that the time from the last successful security authentication exceeds the preset duration threshold, the target device considers that the screen projection connection between the source-end device and the target device in this case does not satisfy the need to protect the privacy security of the user. A security authentication procedure in this case is the same as the foregoing security authentication procedure in which "the source-end device starts heterogeneous screen projection on the target device for the first time", and details are not described herein.

For example, it is assumed that the source-end device is in a lock screen and screen-off state and an unlock password is set, and that heterogeneous screen projection is not previously started on the target device. When determining that the user indicates the source-end device to perform screen projection and determining that the source-end device is conditional for screen projection, the target device may trigger a security authentication mechanism, and first heterogeneous screen projection is successfully started after security authentication succeeds. The first heterogeneous screen projection ends at time T1. It is assumed that the preset duration threshold set by the user is one hour, and at time T2, the target device detects again that the user indicates the same source-end device to perform heterogeneous screen projection. The target device determines that the source-end device once started heterogeneous screen projection on the target device, and further determines whether time between T2 and T1 is greater than one hour. The target device determines that a value of (T2-T1) is less than one hour and directly starts second heterogeneous screen projection.

In some other embodiments, a screen projection failure may occur after the target device receives a user indication indicating a corresponding source-end device to perform heterogeneous screen projection (that is, after step S5). For example, the screen projection failure occurs when an application to which the message notification control corresponds is protected by an application lock. For another example, the screen projection failure occurs when a channel used for screen projection is occupied by another device. For another example, the screen projection failure occurs when a network is instable, and so on.

Firstly, the application lock means that the user of the source-end device sets protection for a specific application to protect security or privacy of the application, and the application can be opened only when a pre-set password, fingerprint, or the like is entered. Therefore, in a scenario in which the source-end device is in the lock screen and screen-off state, for consideration of security and privacy of the source-end device, in some possible embodiments, it may be determined whether the source-end device optionally adds a layer of protection in an application a (for example, the application to which the message card selected by the user on the PC corresponds) before actual screen projection is performed. If the application lock is set for the application a in the source-end device, it indicates that an owner of the source-end device expects to unlock the application a by entering a password, a fingerprint, or the like every time the application is accessed. In this case, for this type of application with strong privacy-protection, starting screen projection directly on the target device side is not suitable when the source-end device is in the lock screen and screen-off state, and violates an original intention of setting the application lock by the user.

Therefore, an embodiment of this application provides three possible screen projection starting failure scenarios. After detecting that the user selects the message card 702, the PC sends inquiry information 1 to a corresponding device (namely, the mobile phone), where the inquiry information 1 is used to inquire whether an application lock is configured for an information application in the mobile phone. If the application lock is configured for the information application in the mobile phone, the mobile phone sends feedback information 1 to the PC, where the feedback information 1 indicates that the information application is currently protected by the application lock. In this way, the PC may display reminder information 1 after receiving the feedback information 1. The reminder information 1 is used to provide a prompt to the user that an application to which the selected message card corresponds is protected by the application lock. For example, the reminder information may be text "The information application is protected by the application lock, please go to the mobile phone to unlock the application lock". In addition, the reminder information may be displayed on the PC in a form of a floating window or a card, and a display form of the reminder information is not limited in this embodiment of this application.

Secondly, the source-end device may establish a screen connection with the target device in a WLAN manner, a WI-FI P2P manner, or the like. For establishment of the screen projection connection, specifically refer to the foregoing manner in which the source-end device establishes the communication connection with the target device, and details are not described herein. For ease of description, the screen projection connection is established in the WI-FI P2P manner in the following embodiments.

In some embodiments of this application, after detecting that the user selects the message card 702, the PC determines whether a screen projection communication channel (a Wi-Fi P2P channel) between the source-end device (to be specific, the mobile phone) and the target device (to be specific, the PC) to which the message card 702 corresponds is already occupied by another service. The source-end device establishes the screen projection connection with the target device through the Wi-Fi P2P channel for data transmission of a screen projection service, to realize mirroring of content between two or more electronic devices. When another WI-FI P2P-based service, for example, PC collaboration or device sharing, is already established between the source-end device and the target device, a channel (to be specific, the screen projection channel) through which the source-end device and a peer device conduct a screen projection service is occupied, resulting in the source-end device being unable to perform screen projection on the target device based on WI-FI P2P.

For example, the PC determines that the screen projection channel (Wi-Fi P2P) between the PC and the mobile phone is occupied and that screen projection starting fails, and displays reminder information 2, where the reminder information 2 illustratively provides a prompt to the user that "Screen projection connections conflict, please disconnect a connection with another device and try again", to provide a prompt indicating the user to go to the source-end device (the mobile phone) or the target device (the PC) to disconnect a screen projection connection with another device. The reminder information may be displayed on the PC in a form of a floating window or a card, and a display form of the reminder information is not limited in this embodiment of this application.

Thirdly, in some embodiments of this application, after detecting that the user selects the message card 702, the PC determines whether a network status of the source-end device (to be specific, the mobile phone) to which the message card corresponds meets a screen projection requirement. The network status includes a flow entry matching status, a data packet execution port load status, a total quantity of lost/forwarded/received data packets, a data packet TTR failure, or a similar status, any network status that may occur in a network is included, and this is not limited herein. It may be understood that the network status may affect quality of service of screen projection, and a minimum network status threshold that meets a screen projection condition may optionally exist on the PC. If determining that a current network status is lower than the minimum network status threshold, the PC considers that the current network status cannot meet the screen projection requirement and causes a screen projection failure.

The PC determines that the current network status does not meet the screen projection requirement and that screen projection starting fails, and displays the reminder information 3. The reminder information 3 may remind, after a network is stabilized, the user to try to trigger the source-end device to perform screen projection. An example prompt "The network is instable, please retry" is provided to the user, to provide a prompt indicating the user to adjust and optimize a network status.

It can be understood that, the foregoing three scenarios are merely an example, and do not constitute a limitation on this embodiment of this application. That the PC determines whether a corresponding application is protected by an application lock, whether a screen projection channel is occupied, whether a network status meets a screen projection requirement are not necessary operations in this embodiment of this application, and a determining sequence is not limited.

In some embodiments, referring back to FIG. 18, determining whether there is a situation that a screen projection failure may exist may be added after step S5 of FIG. 18, and the foregoing three situations may be included but are not limited thereto. In response to an operation of the user clicking on the message card 702, the PC sequentially determines at each determining node whether the application lock is set, whether the screen projection channel is occupied, and whether the network status meets the screen projection requirement. For example, this round of determining is terminated, provided that there is a determining result that triggers the foregoing screen projection starting failure scenario. After performing adjustment based on the prompt, the user may click on the message notification control again, to trigger a new round of determining. Certainly, in some embodiments, a determining sequence in a determining mechanism may be adjusted, a determining procedure may stay at a specific determining node after the determining node triggers a screen projection starting failure, and whether a condition for entering a next determining node is satisfied is continuously detected. The user performs adjustment based on the prompt, and when the condition for entering the next determining node is satisfied, the determining procedure automatically enters the next determining node.

It can be understood that, the PC may first check whether a corresponding application is protected by an application lock (which may be referred to as application lock detection), then check whether a communication channel used for screen projection is occupied (which may be referred to as channel detection), and finally check whether a network condition meets a requirement (briefly referred to as network detection). Actually, in this embodiment of this application, a sequence of the foregoing plurality of detections is not limited. That is, in some embodiments, the PC may alternatively first check whether a communication channel used for screen projection is occupied, then check whether a corresponding application is protected by an application lock, and finally check a network condition.

In another possible embodiment, the PC may alternatively synchronously perform application lock detection, channel detection, and network detection, and display corresponding reminder information when an obtained detection result indicates that at least one of detected items triggers a screen projection failure. For example, if the obtained detection result indicates that the application is protected by the application lock and that the communication channel is occupied, the PC synchronously displays the reminder information 1 and the reminder information 2.

In addition, when the desktop 701 of the PC displays the message card 702, if the PC determines that the user selects the message card 702, the PC also needs to perform application lock detection, channel detection, and network detection for the mobile phone. When a detection result indicates that none of the foregoing detection items triggers a screen projection failure, the PC determines that the mobile phone is conditional for screen projection. In this way, the PC can display the application interface 704 in the screen projection window 703. The PC may display corresponding reminder information when the screen projection fails.

The foregoing describes in detail the screen projection method and the electronic device provided in embodiments of this application. It may be understood that, to implement the foregoing functions, the electronic device includes corresponding hardware and/or software modules for performing the functions. A person skilled in the art should be easily aware that, in combination with the units and algorithm steps of the examples described in the embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions with reference to embodiments for each particular application, but it should not be considered that the implementation goes beyond the scope of this application.

In the embodiments of this application, functional modules of the electronic device may be divided according to the foregoing method example. For example, each functional module may be divided according to each function, such as a detection unit, a processing unit, and a display unit, or two or more functions may be integrated into one module. The integrated module may be implemented in a form of hardware, or may be implemented in a form of a software functional module. It should be noted that, in the embodiments of this application, the module division is an example, and is merely logical function division, and there may be another division manner during actual implementation.

It should be noted that, all related content of the steps in the foregoing method embodiments may be referenced to function descriptions of corresponding functional modules. Details are not described herein.

The electronic device provided in the embodiments is configured to perform the foregoing screen projection method, and therefore can achieve the same effect as that of the foregoing implementation method.

During use of an integrated unit, the electronic device may further include a processing module, a storage module, and a communication module. The processing module may be configured to control and manage an action of the electronic device. The storage module may be configured to support the electronic device in executing stored program code, data, and the like. The communication module may be configured to support communication between the electronic device and another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of digital signal processing (digital signal processing, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device having the structure shown in FIG. 9.

An embodiment of this application further provides a computer-readable storage medium. The computer-readable storage medium stores a computer program, and the computer program, when executed by a processor, enables the processor to perform the screen projection method in any one of the foregoing embodiments.

An embodiment of this application further provides a computer program product. When the computer program product runs on a computer, the computer is enabled to perform the foregoing related steps, to implement the screen projection method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the caller identification method in the foregoing method embodiments. The electronic device, the computer-readable storage medium, the computer program product, or the chip provided in the embodiments may be configured to perform the corresponding method provided above. Therefore, for beneficial effects that can be achieved, refer to the beneficial effects of the corresponding method provided above. Details are not described herein.

According to the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or unit division is merely logical function division and may be another division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in a form of hardware, or may be implemented in a form of a software functional unit.

If the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of the present invention. The foregoing storage medium includes: any medium that can store program code, such as a USB flash drive, a removable hard disk, a read only memory (read only memory, ROM), a random access memory (random access memory, RAM), a magnetic disk, or a compact disc. The scope of protection is defined by the appended claims

## Claims

1. A screen projection system, wherein the system comprises a first electronic device and a second electronic device, and the first electronic device comprises a first application;
the first electronic device is configured to receive first data of the first application;
the first electronic device is configured to send a first message that comprises the first data to the second electronic device, wherein the first message is an application message, and the application message is configured to carry a message content and a first application package name;
the second electronic device is configured to display a first control in response to reception of the first message;
the second electronic device is configured to receive a first operation of a user on the first control at a first time;
the second electronic device is configured to send a screen projection request to the first electronic device in response to the first operation;
the first electronic device is configured to send image information of the first application to the second electronic device in response to reception of the screen projection request, wherein the image information of the first application comprises the first data, and wherein the image information of the first application is a display data of a first application screen projection; and
the second electronic device is configured to display a window based on received image information of the first application, wherein a first interface of the first application is displayed within the window at a second time, and the first interface comprises the image information of the first application, wherein
the second time is later than the first time, and the first electronic device is in a lock screen or screen-off state in a time interval between the first time and the second time;
wherein the first electronic device is configured to send the first message to the second electronic device through a first communication connection;
the second electronic device is configured to send the screen projection request to the first electronic device through a second communication connection, wherein the second electronic device includes a message center module and a second communication module, wherein the second communication connection is established by the second communication module after the second communication module receiving, from the message center module, a second message instructing the second communication module to establish a WI-FI P2P channel between the second electronic device and the first electronic device, wherein the second electronic device is configured to receive the first operation of the user on the first control at the first time comprises: the message center module is configured to receive the first operation of a user on the first control at the first time, and wherein the message center module is configured to send the second message, to the second communication module, after the message center module receiving the first operation of the user on the first control at the first time; and
the first electronic device is configured to send the image information of the first application to the second electronic device through the second communication connection, wherein
the first communication connection is a Bluetooth connection, and the second communication connection is a WI-FI P2P connection.

2. The system according to claim 1, wherein
the first electronic device is further configured to display a main interface in a first time interval;
the first electronic device is further configured to receive a second operation of the user, wherein
the first electronic device is in the lock screen or screen-off state in a second time interval in response to reception of the second operation, and start time of the second time interval is end time of the first time interval;
the first electronic device is further configured to receive a third operation of the user, wherein
the first electronic device displays the main interface in a third time interval in response to reception of the third operation, wherein start time of the third time interval is end time of the second time interval; and
the second electronic device is further configured to display the first interface of the first application in the window in the third time interval.

3. The system according to claim 1 or 2, wherein the second electronic device does not comprise the first application.

4. The system according to any one of claims 1 to 3, wherein the first electronic device further comprises a second application, and the first application and the second application are different;
the first electronic device is further configured to receive an operation of the user opening the second application;
the first electronic device is further configured to display a second interface of the second application in a fourth time interval in response to the operation of the user opening the second application, wherein start time of the fourth time interval is end time of the third time interval; and
the second electronic device is further configured to display the first interface in the window in the fourth time interval.

5. The system according to any one of claims 1 to 4, wherein the second electronic device is further configured to display a third interface of the first application in the window in response to reception of an operation of the user in the first interface, wherein the third interface is different from the first interface.

6. The system according to any one of claims 1 to 3, wherein the first electronic device further comprises a third application, and the third application is different from the first application;
the first electronic device is further configured to receive second data of the third application;
the first electronic device is further configured to send a second message that comprises the second data to the second electronic device;
the second electronic device is further configured to display a second control in response to reception of the second message;
the second electronic device is further configured to receive a fourth operation of the user on the second control at third time; and
the second electronic device is further configured to send a screen projection request to the first electronic device in response to the fourth operation, wherein
the first electronic device sends image information of the third application to the second electronic device in response to reception of the screen projection request, wherein the image information of the third application comprises the second data;
the second electronic device displays a fourth interface of the third application in the window at fourth time in response to reception of the image information of the third application, wherein the fourth interface comprises the image information of the third application; and
the fourth time is later than the third time, and the first electronic device is in a lock screen or screen-off state in a time interval between the third time and the fourth time.

7. The system according to any one of claims 1 to 6, wherein the second electronic device is further configured to display a security authentication interface in the window in response to reception of the first operation;
the second electronic device is further configured to send authentication information to the first electronic device upon reception of an operation of the user entering the authentication information in the security authentication interface; and
the first electronic device is further configured to determine, upon reception of the authentication information, that the authentication information satisfies a preset value, and send a message indicating that authentication is successful to the second electronic device, wherein
the second electronic device sends a screen projection request to the first electronic device in response to reception of the message indicating that authentication is successful.

8. The system according to claim 7, wherein the second device is further configured to send the authentication information to the first electronic device through a third communication connection; and
the first electronic device is further configured to send the message indicating that authentication is successful to the second electronic device through the third communication connection, wherein
the third communication connection is different from the first communication connection and different from the second communication connection.

9. A screen projection method, wherein the method is applied to a screen projection system, and wherein the system comprises a first electronic device and a second electronic device, and the first electronic device comprises a first application;
receiving, by the first electronic device, first data of the first application;
sending, by the first electronic device, a first message that comprises the first data to a second electronic device through a first communication connection, wherein the first message is an application message, and the application message is configured to carry a message content and a first application package name;
displaying, by the second electronic device, a first control in response to reception of the first message;
receiving, by the second electronic device, a first operation of a user on the first control at a first time;
sending, by the second electronic device, a screen projection request to the first electronic device through a second communication connection in response to the first operation;
sending, by the first electronic device, image information of the first application to the second electronic device through the second communication connection in response to reception of the screen projection request, wherein the image information of the first application is a display data of a first application screen projection, wherein the second electronic device includes a message center module and a second communication module, wherein the second communication connection is established by the second communication module after the second communication module receiving, from the message center module, a second message instructing the second communication module to establish a WI-FI P2P channel between the second electronic device and the first electronic device, wherein the second electronic device is configured to receive the first operation of the user on the first control at the first time comprises: the message center module is configured to receive the first operation of a user on the first control at the first time, and wherein the message center module is configured to send the second message, to the second communication module, after the message center module receiving the first operation of the user on the first control at the first time;
displaying, by the second electronic device, a window based on the image information of the first application, wherein a first interface of the first application is displayed within the window at a second time, and the first interface comprises the image information of the first application;
wherein
the image information of the first application comprises the first data, and the first interface comprises the image information of the first application; and
the second time is later than the first time, and the first electronic device is in a lock screen or screen-off state in a time interval between the first time and the second time;
and wherein the first communication connection is a Bluetooth connection, and the second communication connection is a WI-FI P2P connection.

10. The method according to claim 9, wherein after the first electronic device receives the screen projection request, the method comprises:
setting, by the first electronic device, one or more activities of the first application to an OnResume state; and
controlling, by the first electronic device, the one or more activities of the first application not to enter a sleep process.

11. The method according to claim 10, wherein the first electronic device comprises an asynchronous processor, an activity recorder, and a root window container, and after the first electronic device receives the screen projection request in a first time interval, the method further comprises:
flagging, by the asynchronous processor, the one or more activities of the first application with a first flag;
sending, by the asynchronous processor, an instruction to start an activity with the first flag;
determining, by the activity recorder upon reception of the instruction to start the activity with the first flag, that the one or more activities of the first application are with the first flag, and setting the one or more activities of the first application to an OnResume state; and
determining, by the root window container, that the one or more activities of the first application are with the first flag, and controlling the one or more activities of the first application not to enter a sleep process.

12. The method according to any one of claims 9 to 11, wherein the first electronic device comprises a virtual display area and a visible display area, and before the first electronic device sends the first interface to the second electronic device, the method further comprises:
flagging, by the first electronic device, the virtual display area with a second flag;
drawing, by the first electronic device, a first image in the virtual display area, wherein the first image is an interface of the first application to which the first message corresponds;
drawing, by the first electronic device, a second image in the visible display area, wherein the second image is a corresponding interface when the first electronic device is in a lock screen or screen-off state; and
determining, by the first electronic device, that the virtual display area is with the second flag, and obtaining the first image to obtain the first interface, wherein the first interface does not comprise the second image.

## Patentansprüche

1. Bildschirmprojektionssystem, wobei das System eine erste elektronische Vorrichtung und eine zweite elektronische Vorrichtung umfasst und die erste elektronische Vorrichtung eine erste Anwendung umfasst;
die erste elektronische Vorrichtung dazu konfiguriert ist, erste Daten der ersten Anwendung zu empfangen;
die erste elektronische Vorrichtung dazu konfiguriert ist, eine erste Nachricht, die die ersten Daten umfasst, an die zweite elektronische Vorrichtung zu senden, wobei die erste Nachricht eine Anwendungsnachricht ist und die Anwendungsnachricht dazu konfiguriert ist, einen Nachrichteninhalt und einen ersten Anwendungspaketnamen zu übertragen;
die zweite elektronische Vorrichtung dazu konfiguriert ist, als Reaktion auf den Empfang der ersten Nachricht ein erstes Steuerelement anzuzeigen;
die zweite elektronische Vorrichtung dazu konfiguriert ist, eine erste Bedienung eines Benutzers auf dem ersten Steuerelement zu einem ersten Zeitpunkt zu empfangen;
die zweite elektronische Vorrichtung dazu konfiguriert ist, als Reaktion auf die erste Bedienung eine Bildschirmprojektionsanforderung an die erste elektronische Vorrichtung zu senden;
die erste elektronische Vorrichtung dazu konfiguriert ist, als Reaktion auf den Empfang der Bildschirmprojektionsanforderung Bildinformationen der ersten Anwendung an die zweite elektronische Vorrichtung zu senden, wobei die Bildinformationen der ersten Anwendung die ersten Daten umfassen und wobei die Bildinformationen der ersten Anwendung Anzeigedaten einer ersten Anwendungsbildschirmprojektion sind; und
die zweite elektronische Vorrichtung dazu konfiguriert ist, basierend auf empfangenen Bildinformationen der ersten Anwendung ein Fenster anzuzeigen, wobei eine erste Schnittstelle der ersten Anwendung zu einem zweiten Zeitpunkt innerhalb des Fensters angezeigt wird und die erste Schnittstelle die Bildinformationen der ersten Anwendung umfasst, wobei
der zweite Zeitpunkt später als der erste Zeitpunkt ist und sich die erste elektronische Vorrichtung in einem Zeitintervall zwischen dem ersten Zeitpunkt und dem zweiten Zeitpunkt in einem Sperrbildschirmzustand oder Bildschirm-aus-Zustand befindet;
wobei die erste elektronische Vorrichtung dazu konfiguriert ist, die erste Nachricht über eine erste Kommunikationsverbindung an die zweite elektronische Vorrichtung zu senden;
die zweite elektronische Vorrichtung dazu konfiguriert ist, die Bildschirmprojektionsanforderung über eine zweite Kommunikationsverbindung an die erste elektronische Vorrichtung zu senden, wobei die zweite elektronische Vorrichtung ein Nachrichtenzentrum-Modul und ein zweites Kommunikationsmodul umfasst, wobei die zweite Kommunikationsverbindung durch das zweite Kommunikationsmodul hergestellt wird, nachdem das zweite Kommunikationsmodul vom Nachrichtenzentrum-Modul eine zweite Nachricht empfangen hat, die das zweite Kommunikationsmodul anweist, einen WI-FI P2P-Kanal zwischen der zweiten elektronischen Vorrichtung und der ersten elektronischen Vorrichtung herzustellen, wobei das Empfangen der ersten Bedienung des Benutzers auf dem ersten Steuerelement zum ersten Zeitpunkt durch die zweite elektronische Vorrichtung umfasst: das Nachrichtenzentrum-Modul ist dazu konfiguriert, die erste Bedienung eines Benutzers auf dem ersten Steuerelement zum ersten Zeitpunkt zu empfangen, und wobei das Nachrichtenzentrum-Modul dazu konfiguriert ist, die zweite Nachricht an das zweite Kommunikationsmodul zu senden, nachdem das Nachrichtenzentrum-Modul die erste Bedienung des Benutzers auf dem ersten Steuerelement zum ersten Zeitpunkt empfangen hat; und
die erste elektronische Vorrichtung dazu konfiguriert ist, die Bildinformationen der ersten Anwendung über die zweite Kommunikationsverbindung an die zweite elektronische Vorrichtung zu senden, wobei
die erste Kommunikationsverbindung eine Bluetooth-Verbindung ist und die zweite Kommunikationsverbindung eine WI-FI P2P-Verbindung ist.

2. System nach Anspruch 1, wobei
die erste elektronische Vorrichtung ferner dazu konfiguriert ist, eine Hauptoberfläche in einem ersten Zeitintervall anzuzeigen;
die erste elektronische Vorrichtung ferner dazu konfiguriert ist, eine zweite Bedienung des Benutzers zu empfangen, wobei
sich die erste elektronische Vorrichtung als Reaktion auf den Empfang der zweiten Bedienung in einem zweiten Zeitintervall im Sperrbildschirmzustand oder Bildschirm-aus-Zustand befindet und die Startzeit des zweiten Zeitintervalls die Endzeit des ersten Zeitintervalls ist;
die erste elektronische Vorrichtung ferner dazu konfiguriert ist, eine dritte Bedienung des Benutzers zu empfangen, wobei
die erste elektronische Vorrichtung die Hauptoberfläche als Reaktion auf den Empfang der dritten Bedienung in einem dritten Zeitintervall anzeigt, wobei die Startzeit des dritten Zeitintervalls die Endzeit des zweiten Zeitintervalls ist; und
die zweite elektronische Vorrichtung ferner dazu konfiguriert ist, die erste Oberfläche der ersten Anwendung im Fenster im dritten Zeitintervall anzuzeigen.

3. System nach Anspruch 1 oder 2, wobei die zweite elektronische Vorrichtung die erste Anwendung nicht umfasst.

4. System nach einem der Ansprüche 1 bis 3, wobei die erste elektronische Vorrichtung ferner eine zweite Anwendung umfasst und die erste Anwendung und die zweite Anwendung unterschiedlich sind;
die erste elektronische Vorrichtung ferner dazu konfiguriert ist, eine Bedienung des Benutzers zum Öffnen der zweiten Anwendung zu empfangen;
die erste elektronische Vorrichtung ferner dazu konfiguriert ist, in Reaktion auf die Bedienung des Benutzers zum Öffnen der zweiten Anwendung eine zweite Schnittstelle der zweiten Anwendung in einem vierten Zeitintervall anzuzeigen, wobei die Startzeit des vierten Zeitintervalls die Endzeit des dritten Zeitintervalls ist; und
die zweite elektronische Vorrichtung ferner dazu konfiguriert ist, die erste Schnittstelle in dem Fenster im vierten Zeitintervall anzuzeigen.

5. System nach einem der Ansprüche 1 bis 4, wobei die zweite elektronische Vorrichtung ferner dazu konfiguriert ist, in Reaktion auf den Empfang einer Bedienung des Benutzers in der ersten Schnittstelle eine dritte Schnittstelle der ersten Anwendung in dem Fenster anzuzeigen, wobei die dritte Schnittstelle von der ersten Schnittstelle verschieden ist.

6. System nach einem der Ansprüche 1 bis 3, wobei die erste elektronische Vorrichtung ferner eine dritte Anwendung umfasst und die dritte Anwendung von der ersten Anwendung verschieden ist;
die erste elektronische Vorrichtung ferner dazu konfiguriert ist, zweite Daten der dritten Anwendung zu empfangen;
die erste elektronische Vorrichtung ferner dazu konfiguriert ist, eine zweite Nachricht, welche die zweiten Daten umfasst, an die zweite elektronische Vorrichtung zu senden;
die zweite elektronische Vorrichtung ferner dazu konfiguriert ist, in Reaktion auf den Empfang der zweiten Nachricht ein zweites Steuerelement anzuzeigen;
die zweite elektronische Vorrichtung ferner dazu konfiguriert ist, eine vierte Bedienung des Benutzers auf dem zweiten Steuerelement zu einem dritten Zeitpunkt zu empfangen; und
die zweite elektronische Vorrichtung ferner dazu konfiguriert ist, in Reaktion auf die vierte Bedienung eine Bildschirmprojektionsanforderung an die erste elektronische Vorrichtung zu senden, wobei
die erste elektronische Vorrichtung in Reaktion auf den Empfang der Bildschirmprojektionsanforderung Bildinformationen der dritten Anwendung an die zweite elektronische Vorrichtung sendet, wobei die Bildinformationen der dritten Anwendung die zweiten Daten umfassen;
die zweite elektronische Vorrichtung in Reaktion auf den Empfang der Bildinformationen der dritten Anwendung zu einem vierten Zeitpunkt eine vierte Schnittstelle der dritten Anwendung in dem Fenster anzeigt, wobei die vierte Schnittstelle die Bildinformationen der dritten Anwendung umfasst; und
der vierte Zeitpunkt später als der dritte Zeitpunkt ist und sich die erste elektronische Vorrichtung in einem Zeitintervall zwischen dem dritten Zeitpunkt und dem vierten Zeitpunkt in einem Sperrbildschirmzustand oder Bildschirm-aus-Zustand befindet.

7. System nach einem der Ansprüche 1 bis 6, wobei die zweite elektronische Vorrichtung ferner dazu konfiguriert ist, als Reaktion auf den Empfang der ersten Bedienung eine Sicherheitsauthentifizierungsschnittstelle im Fenster anzuzeigen;
die zweite elektronische Vorrichtung ferner dazu konfiguriert ist, Authentifizierungsinformationen an die erste elektronische Vorrichtung zu senden, sobald ein Empfang einer Bedienung des Benutzers vorliegt, der die Authentifizierungsinformationen in die Sicherheitsauthentifizierungsschnittstelle eingibt; und
die erste elektronische Vorrichtung ferner dazu konfiguriert ist, bei Empfang der Authentifizierungsinformationen zu bestimmen, dass die Authentifizierungsinformationen einem voreingestellten Wert entsprechen, und eine Nachricht, die anzeigt, dass die Authentifizierung erfolgreich ist, an die zweite elektronische Vorrichtung zu senden, wobei
die zweite elektronische Vorrichtung als Reaktion auf den Empfang der Nachricht, die anzeigt, dass die Authentifizierung erfolgreich ist, eine Bildschirmprojektionsanforderung an die erste elektronische Vorrichtung sendet.

8. System nach Anspruch 7, wobei die zweite Vorrichtung ferner dazu konfiguriert ist, die Authentifizierungsinformationen über eine dritte Kommunikationsverbindung an die erste elektronische Vorrichtung zu senden; und
die erste elektronische Vorrichtung ferner dazu konfiguriert ist, die Nachricht, die anzeigt, dass die Authentifizierung erfolgreich ist, über die dritte Kommunikationsverbindung an die zweite elektronische Vorrichtung zu senden, wobei
die dritte Kommunikationsverbindung sich von der ersten Kommunikationsverbindung unterscheidet und sich von der zweiten Kommunikationsverbindung unterscheidet.

9. Bildschirmprojektionsverfahren, wobei das Verfahren auf ein Bildschirmprojektionssystem angewendet wird und wobei das System eine erste elektronische Vorrichtung und eine zweite elektronische Vorrichtung umfasst und die erste elektronische Vorrichtung eine erste Anwendung umfasst;
Empfangen erster Daten der ersten Anwendung durch die erste elektronische Vorrichtung;
Senden einer ersten Nachricht, die die ersten Daten umfasst, durch die erste elektronische Vorrichtung über eine erste Kommunikationsverbindung an eine zweite elektronische Vorrichtung, wobei die erste Nachricht eine Anwendungsnachricht ist und die Anwendungsnachricht dazu konfiguriert ist, einen Nachrichteninhalt und einen ersten Anwendungspaketnamen zu übertragen;
Anzeigen eines ersten Steuerelements durch die zweite elektronische Vorrichtung als Reaktion auf den Empfang der ersten Nachricht;
Empfangen einer ersten Bedienung eines Benutzers auf dem ersten Steuerelement zu einem ersten Zeitpunkt durch die zweite elektronische Vorrichtung;
Senden einer Bildschirmprojektionsanforderung durch die zweite elektronische Vorrichtung als Reaktion auf die erste Bedienung über eine zweite Kommunikationsverbindung an die erste elektronische Vorrichtung;
Senden von Bildinformationen der ersten Anwendung durch die erste elektronische Vorrichtung an die zweite elektronische Vorrichtung über die zweite Kommunikationsverbindung als Reaktion auf den Empfang der Bildschirmprojektionsanforderung, wobei die Bildinformationen der ersten Anwendung Anzeigedaten einer ersten Anwendungs-Bildschirmprojektion sind, wobei die zweite elektronische Vorrichtung ein Nachrichtenzentrum-Modul und ein zweites Kommunikationsmodul umfasst, wobei die zweite Kommunikationsverbindung durch das zweite Kommunikationsmodul hergestellt wird, nachdem das zweite Kommunikationsmodul vom Nachrichtenzentrum-Modul eine zweite Nachricht empfangen hat, die das zweite Kommunikationsmodul anweist, einen WI-FI P2P-Kanal zwischen der zweiten elektronischen Vorrichtung und der ersten elektronischen Vorrichtung herzustellen, wobei das Empfangen der ersten Bedienung des Benutzers an dem ersten Steuerelement zum ersten Zeitpunkt durch die zweite elektronische Vorrichtung umfasst: das Nachrichtenzentrum-Modul ist dazu konfiguriert, die erste Bedienung eines Benutzers an dem ersten Steuerelement zum ersten Zeitpunkt zu empfangen, und wobei das Nachrichtenzentrum-Modul dazu konfiguriert ist, die zweite Nachricht an das zweite Kommunikationsmodul zu senden, nachdem das Nachrichtenzentrum-Modul die erste Bedienung des Benutzers an dem ersten Steuerelement zum ersten Zeitpunkt empfangen hat;
Anzeigen eines Fensters durch die zweite elektronische Vorrichtung basierend auf den Bildinformationen der ersten Anwendung, wobei eine erste Schnittstelle der ersten Anwendung innerhalb des Fensters zu einem zweiten Zeitpunkt angezeigt wird und die erste Schnittstelle die Bildinformationen der ersten Anwendung umfasst;
wobei
die Bildinformationen der ersten Anwendung die ersten Daten umfassen und die erste Schnittstelle die Bildinformationen der ersten Anwendung umfasst; und
der zweite Zeitpunkt später als der erste Zeitpunkt liegt und sich die erste elektronische Vorrichtung in einem Zeitintervall zwischen dem ersten Zeitpunkt und dem zweiten Zeitpunkt in einem Sperrbildschirmzustand oder Bildschirm-aus-Zustand befindet;
und wobei die erste Kommunikationsverbindung eine Bluetooth-Verbindung ist und die zweite Kommunikationsverbindung eine WI-FI P2P-Verbindung ist.

10. Das Verfahren nach Anspruch 9, wobei das Verfahren nach dem Empfang der Bildschirmprojektionsanforderung durch die erste elektronische Vorrichtung umfasst:
Versetzen einer oder mehrerer Aktivitäten der ersten Anwendung durch die erste elektronische Vorrichtung in einen OnResume-Zustand; und
Steuern der einen oder mehreren Aktivitäten der ersten Anwendung durch die erste elektronische Vorrichtung, sodass diese nicht in einen Schlafprozess eintreten.

11. Das Verfahren nach Anspruch 10, wobei die erste elektronische Vorrichtung einen asynchronen Prozessor, einen Aktivitätsrekorder und einen Stammfenster-Container umfasst und das Verfahren nach dem Empfang der Bildschirmprojektionsanforderung durch die erste elektronische Vorrichtung in einem ersten Zeitintervall ferner umfasst:
Markierung, durch den asynchronen Prozessor, der einen oder mehreren Aktivitäten der ersten Anwendung mit einer ersten Kennung;
Senden, durch den asynchronen Prozessor, einer Anweisung zum Starten einer Aktivität mit der ersten Kennung;
Bestimmen, durch den Aktivitätsrekorder nach Empfang der Anweisung zum Starten der Aktivität mit der ersten Kennung, dass die einen oder mehreren Aktivitäten der ersten Anwendung mit der ersten Kennung versehen sind, und Setzen der einen oder mehreren Aktivitäten der ersten Anwendung in einen OnResume-Zustand; und
Bestimmen, durch den Stammfenster-Container, dass die einen oder mehreren Aktivitäten der ersten Anwendung mit der ersten Kennung versehen sind, und Steuern der einen oder mehreren Aktivitäten der ersten Anwendung, sodass sie keinen Schlafprozess einleiten.

12. Das Verfahren nach einem der Ansprüche 9 bis 11, wobei die erste elektronische Vorrichtung einen virtuellen Anzeigebereich und einen sichtbaren Anzeigebereich umfasst, und wobei das Verfahren, bevor die erste elektronische Vorrichtung die erste Schnittstelle an die zweite elektronische Vorrichtung sendet, ferner umfasst:
Markierung, durch die erste elektronische Vorrichtung, des virtuellen Anzeigebereichs mit einer zweiten Kennung;
Zeichnen, durch die erste elektronische Vorrichtung, eines ersten Bildes im virtuellen Anzeigebereich, wobei das erste Bild eine Schnittstelle der ersten Anwendung ist, der die erste Nachricht entspricht;
Zeichnen, durch die erste elektronische Vorrichtung, eines zweiten Bildes im sichtbaren Anzeigebereich, wobei das zweite Bild eine entsprechende Schnittstelle ist, wenn sich die erste elektronische Vorrichtung in einem Sperrbildschirmzustand oder Bildschirm-aus-Zustand befindet; und
Bestimmen, durch die erste elektronische Vorrichtung, dass der virtuelle Anzeigebereich mit der zweiten Kennung versehen ist, und Erhalten des ersten Bildes, um die erste Schnittstelle zu erhalten, wobei die erste Schnittstelle das zweite Bild nicht umfasst.

## Revendications

1. Système de projection d'écran, dans lequel le système comprend un premier dispositif électronique et un second dispositif électronique, et le premier dispositif électronique comprend une première application ;
le premier dispositif électronique est configuré pour recevoir des premières données de la première application ;
le premier dispositif électronique est configuré pour envoyer un premier message qui comprend les premières données au second dispositif électronique, dans lequel le premier message est un message d'application, et le message d'application est configuré pour transporter un contenu de message et un premier nom de paquet d'application ;
le second dispositif électronique est configuré pour afficher une première commande en réponse à la réception du premier message ;
le second dispositif électronique est configuré pour recevoir une première opération d'un utilisateur sur la première commande à un premier instant ;
le second dispositif électronique est configuré pour envoyer une demande de projection d'écran au premier dispositif électronique en réponse à la première opération ;
le premier dispositif électronique est configuré pour envoyer des informations d'image de la première application au second dispositif électronique en réponse à la réception de la demande de projection d'écran, dans lequel les informations d'image de la première application comprennent les premières données, et dans lequel les informations d'image de la première application sont des données d'affichage d'une projection d'écran de la première application ; et
le second dispositif électronique est configuré pour afficher une fenêtre basée sur les informations d'image reçues de la première application, dans lequel une première interface de la première application est affichée à l'intérieur de la fenêtre à un second instant, et la première interface comprend les informations d'image de la première application, dans lequel
le second instant est postérieur au premier instant, et le premier dispositif électronique est dans un état d'écran verrouillé ou d'écran éteint dans un intervalle de temps entre le premier instant et le second instant ;
dans lequel le premier dispositif électronique est configuré pour envoyer le premier message au second dispositif électronique par l'intermédiaire d'une première connexion de communication ;
le second dispositif électronique est configuré pour envoyer la demande de projection d'écran au premier dispositif électronique via une seconde connexion de communication, dans lequel le second dispositif électronique comprend un module de centre de messages et un second module de communication, dans lequel la seconde connexion de communication est établie par le second module de communication après que le second module de communication a reçu, en provenance du module de centre de messages, un second message ordonnant au second module de communication d'établir un canal WI-FI P2P entre le second dispositif électronique et le premier dispositif électronique, dans lequel la réception de la première opération de l'utilisateur sur la première commande au premier instant par le second dispositif électronique comprend : le module de centre de messages est configuré pour recevoir la première opération d'un utilisateur sur la première commande au premier instant, et dans lequel le module de centre de messages est configuré pour envoyer le second message au second module de communication, après que le module de centre de messages a reçu la première opération de l'utilisateur sur la première commande au premier instant ; et
le premier dispositif électronique est configuré pour envoyer les informations d'image de la première application au second dispositif électronique via la seconde connexion de communication, dans lequel
la première connexion de communication est une connexion Bluetooth, et la seconde connexion de communication est une connexion WI-FI P2P.

2. Système selon la revendication 1, dans lequel
le premier dispositif électronique est en outre configuré pour afficher une interface principale dans un premier intervalle de temps ;
le premier dispositif électronique est en outre configuré pour recevoir une seconde opération de l'utilisateur, dans lequel
le premier dispositif électronique est dans l'état d'écran verrouillé ou d'écran éteint dans un second intervalle de temps en réponse à la réception de la seconde opération, et l'heure de début du second intervalle de temps est l'heure de fin du premier intervalle de temps ;
le premier dispositif électronique est en outre configuré pour recevoir une troisième opération de l'utilisateur, dans lequel
le premier dispositif électronique affiche l'interface principale dans un troisième intervalle de temps en réponse à la réception de la troisième opération, dans lequel l'heure de début du troisième intervalle de temps est l'heure de fin du second intervalle de temps ; et
le second dispositif électronique est en outre configuré pour afficher la première interface de la première application dans la fenêtre durant le troisième intervalle de temps.

3. Système selon la revendication 1 ou 2, dans lequel le second dispositif électronique ne comprend pas la première application.

4. Système selon l'une quelconque des revendications 1 à 3, dans lequel le premier dispositif électronique comprend en outre une seconde application, et la première application et la seconde application sont différentes ;
le premier dispositif électronique est en outre configuré pour recevoir une opération de l'utilisateur ouvrant la deuxième application ;
le premier dispositif électronique est en outre configuré pour afficher une deuxième interface de la deuxième application dans un quatrième intervalle de temps en réponse à l'opération de l'utilisateur ouvrant la deuxième application, dans lequel l'heure de début du quatrième intervalle de temps est l'heure de fin du troisième intervalle de temps ; et
le second dispositif électronique est en outre configuré pour afficher la première interface dans la fenêtre durant le quatrième intervalle de temps.

5. Système selon l'une quelconque des revendications 1 à 4, dans lequel le second dispositif électronique est en outre configuré pour afficher une troisième interface de la première application dans la fenêtre en réponse à la réception d'une opération de l'utilisateur dans la première interface, dans lequel la troisième interface est différente de la première interface.

6. Système selon l'une quelconque des revendications 1 à 3, dans lequel le premier dispositif électronique comprend en outre une troisième application, et la troisième application est différente de la première application ;
le premier dispositif électronique est en outre configuré pour recevoir des deuxièmes données de la troisième application ;
le premier dispositif électronique est en outre configuré pour envoyer un second message comprenant les deuxièmes données au second dispositif électronique ;
le second dispositif électronique est en outre configuré pour afficher une seconde commande en réponse à la réception du second message ;
le second dispositif électronique est en outre configuré pour recevoir une quatrième opération de l'utilisateur sur la seconde commande à un troisième temps ; et
le second dispositif électronique est en outre configuré pour envoyer une demande de projection d'écran au premier dispositif électronique en réponse à la quatrième opération, dans lequel
le premier dispositif électronique envoie des informations d'image de la troisième application au second dispositif électronique en réponse à la réception de la demande de projection d'écran, dans lequel les informations d'image de la troisième application comprennent les deuxièmes données ;
le second dispositif électronique affiche une quatrième interface de la troisième application dans la fenêtre à un quatrième temps en réponse à la réception des informations d'image de la troisième application, dans lequel la quatrième interface comprend les informations d'image de la troisième application ; et
le quatrième temps est postérieur au troisième temps, et le premier dispositif électronique est dans un état d'écran verrouillé ou d'écran éteint dans un intervalle de temps compris entre le troisième temps et le quatrième temps.

7. Système selon l'une quelconque des revendications 1 à 6, dans lequel le second dispositif électronique est en outre configuré pour afficher une interface d'authentification de sécurité dans la fenêtre en réponse à la réception de la première opération ;
le second dispositif électronique est en outre configuré pour envoyer des informations d'authentification au premier dispositif électronique lors de la réception d'une opération de l'utilisateur saisissant les informations d'authentification dans l'interface d'authentification de sécurité ; et
le premier dispositif électronique est en outre configuré pour déterminer, lors de la réception des informations d'authentification, que les informations d'authentification satisfont une valeur prédéfinie, et envoyer un message indiquant que l'authentification est réussie au second dispositif électronique, dans lequel
le second dispositif électronique envoie une demande de projection d'écran au premier dispositif électronique en réponse à la réception du message indiquant que l'authentification est réussie.

8. Système selon la revendication 7, dans lequel le second dispositif est en outre configuré pour envoyer les informations d'authentification au premier dispositif électronique via une troisième connexion de communication ; et
le premier dispositif électronique est en outre configuré pour envoyer le message indiquant que l'authentification est réussie au second dispositif électronique via la troisième connexion de communication, dans lequel
la troisième connexion de communication est différente de la première connexion de communication et différente de la seconde connexion de communication.

9. Procédé de projection d'écran, dans lequel le procédé est appliqué à un système de projection d'écran, et dans lequel le système comprend un premier dispositif électronique et un second dispositif électronique, et le premier dispositif électronique comprend une première application ;
la réception, par le premier dispositif électronique, de premières données de la première application ;
l'envoi, par le premier dispositif électronique, d'un premier message qui comprend les premières données à un second dispositif électronique via une première connexion de communication, dans lequel le premier message est un message d'application, et le message d'application est configuré pour transporter un contenu de message et un nom de package de la première application ;
l'affichage, par le second dispositif électronique, d'une première commande en réponse à la réception du premier message ;
la réception, par le second dispositif électronique, d'une première opération d'un utilisateur sur la première commande à un premier moment ;
l'envoi, par le second dispositif électronique, d'une demande de projection d'écran au premier dispositif électronique via une seconde connexion de communication en réponse à la première opération ;
l'envoi, par le premier dispositif électronique, d'informations d'image de la première application vers le second dispositif électronique par le biais de la seconde connexion de communication en réponse à la réception de la demande de projection d'écran, dans lequel les informations d'image de la première application sont des données d'affichage d'une projection d'écran de première application, dans lequel le second dispositif électronique comprend un module de centre de messages et un second module de communication, dans lequel la seconde connexion de communication est établie par le second module de communication après que le second module de communication a reçu, en provenance du module de centre de messages, un second message ordonnant au second module de communication d'établir un canal WI-FI P2P entre le second dispositif électronique et le premier dispositif électronique, dans lequel la réception de la première opération de l'utilisateur sur la première commande au premier instant par le second dispositif électronique comprend : le module de centre de messages est configuré pour recevoir la première opération d'un utilisateur sur la première commande au premier instant, et dans lequel le module de centre de messages est configuré pour envoyer le second message au second module de communication, après que le module de centre de messages a reçu la première opération de l'utilisateur sur la première commande au premier instant ;
l'affichage, par le second dispositif électronique, d'une fenêtre basée sur les informations d'image de la première application, dans lequel une première interface de la première application est affichée au sein de la fenêtre à un second instant, et la première interface comprend les informations d'image de la première application ;
dans lequel
les informations d'image de la première application comprennent les premières données, et la première interface comprend les informations d'image de la première application ; et
le second instant est postérieur au premier instant, et le premier dispositif électronique est dans un état d'écran verrouillé ou d'écran éteint dans un intervalle de temps entre le premier instant et le second instant ;
et dans lequel la première connexion de communication est une connexion Bluetooth, et la seconde connexion de communication est une connexion WI-FI P2P.

10. Procédé selon la revendication 9, dans lequel, après que le premier dispositif électronique a reçu la demande de projection d'écran, le procédé comprend :
le réglage, par le premier dispositif électronique, d'une ou plusieurs activités de la première application sur un état OnResume ; et
le contrôle, par le premier dispositif électronique, de la ou des activités de la première application afin de ne pas entrer dans un processus de veille.

11. Procédé selon la revendication 10, dans lequel le premier dispositif électronique comprend un processeur asynchrone, un enregistreur d'activités, et un conteneur de fenêtre racine, et après que le premier dispositif électronique a reçu la demande de projection d'écran dans un premier intervalle de temps, le procédé comprend en outre :
le marquage, par le processeur asynchrone, d'une ou plusieurs activités de la première application avec un premier indicateur ;
l'envoi, par le processeur asynchrone, d'une instruction pour démarrer une activité avec le premier indicateur ;
la détermination, par l'enregistreur d'activité lors de la réception de l'instruction de démarrer l'activité avec le premier indicateur, que la ou les activités de la première application sont avec le premier indicateur, et le passage de la ou des activités de la première application à un état OnResume ; et
la détermination, par le conteneur de fenêtre racine, que la ou les activités de la première application sont avec le premier indicateur, et le contrôle de la ou des activités de la première application afin de ne pas entrer dans un processus de veille.

12. Le procédé selon l'une quelconque des revendications 9 à 11, dans lequel le premier dispositif électronique comprend une zone d'affichage virtuelle et une zone d'affichage visible, et avant que le premier dispositif électronique n'envoie la première interface au second dispositif électronique, le procédé comprend en outre :
le marquage, par le premier dispositif électronique, de la zone d'affichage virtuelle avec un second indicateur ;
le dessin, par le premier dispositif électronique, d'une première image dans la zone d'affichage virtuelle, dans lequel la première image est une interface de la première application à laquelle correspond le premier message ;
le dessin, par le premier dispositif électronique, d'une seconde image dans la zone d'affichage visible, dans lequel la seconde image est une interface correspondante lorsque le premier dispositif électronique est dans un état d'écran verrouillé ou d'écran éteint ; et
la détermination, par le premier dispositif électronique, que la zone d'affichage virtuelle est avec le second indicateur, et l'obtention de la première image pour obtenir la première interface, dans lequel la première interface ne comprend pas la seconde image.
